(19) Europäisches Patentamt
European Patent Office
Office européen des brevets

(11) Veröffentlichungsnummer: **0 074 928**
**A2**

(12) # EUROPÄISCHE PATENTANMELDUNG

(21) Anmeldenummer: 82810379.6

(22) Anmeldetag: 10.09.82

(51) Int. Cl.[3]: C 09 B 62/04
C 09 B 62/503, D 06 P 3/10
D 06 P 3/66

(30) Priorität: 16.09.81 CH 5976/81

(43) Veröffentlichungstag der Anmeldung:
23.03.83 Patentblatt 83/12

(84) Benannte Vertragsstaaten:
CH DE FR GB IT LI

(71) Anmelder: CIBA-GEIGY AG
Patentabteilung Postfach
CH-4002 Basel(CH)

(72) Erfinder: Scheibli, Peter, Dr.
Nussbaumweg 2
CH-4103 Bottmingen(CH)

(72) Erfinder: Seiler, Herbert, Dr.
Leimgrubenweg 60
CH-4125 Riehen(CH)

(54) **Reaktivfarbstoffe, deren Herstellung und Verwendung.**

(57) Reaktivfarbstoffe der Formel

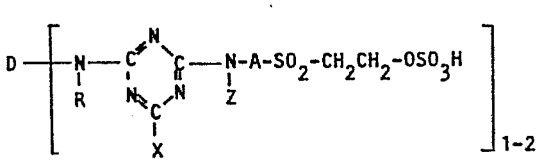
(1),

worin D der Rest eines organischen Farbstoffes der Mono- oder Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Reihe, R Wasserstoff oder gegebenenfalls substituiertes $C_{1-4}$-Alkyl, A $C_{2-6}$-Alkylen, Z Wasserstoff, gegebenenfalls substituiertes Alkyl oder Aryl oder ein Rest der Formel

$$A - SO_2 - CH_2CH_2 - OSO_3H \qquad (2),$$

und X Halogen, $SO_3H$, OH, $OR_1$, SH oder $SR_1$ ist, wobei $R_1$ ein gegebenenfalls substituierter aliphatischer Rest ist, eignen sich zum Färben und Bedrucken cellulosehaltiger und stickstoffhaltiger Materialien.

EP 0 074 928 A2

0074928



1-13555/=

Reaktivfarbstoffe, deren Herstellung und Verwendung

Reaktivfarbstoffe werden in grossem Umfang für das Färben und Bedrucken von textilen Fasermaterialien eingesetzt. Obwohl heute eine grosse Anzahl von brauchbaren Reaktivfarbstoffen mit unterschiedlichen Eigenschaften und für verschiedene Anwendungsbereiche zur Verfügung steht, kann der erreichte technische Stand, angesichts der hohen Anforderungen in Bezug auf Eignung für bestimmte Färbeverfahren und Echtheitsniveau der Färbungen, vielfach nicht voll befriedigen.

Dies gilt auch für Reaktivfarbstoffe im Ausziehfärbeverfahren, besonders bei niedrigen Färbetemperaturen. Die Bereitstellung von verbesserten Reaktivfarbstoffen ist daher dringend erwünscht. Der vorliegenden Erfindung lag die Aufgabe zugrunde, neue Reaktivfarbstoffe zu finden, die eine besondere Eignung für das Ausziehfärbeverfahren besitzen. Es hat sich gezeigt, dass die weiter unten definierten neuen Reaktivfarbstoffe den gestellten Anforderungen weitgehend entsprechen.

Gegenstand der Erfindung sind Reaktivfarbstoffe der Formel

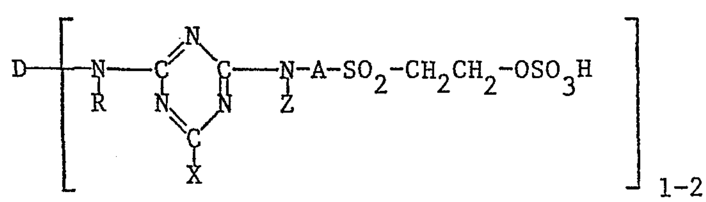

(1),

worin D der Rest eines organischen Farbstoffes der Mono- oder Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Reihe, R Wasserstoff oder gegebenenfalls substituiertes

$C_{1-4}$-Alkyl, A $C_{2-6}$-Alkylen, Z Wasserstoff, gegebenenfalls substituiertes Alkyl oder Aryl oder ein Rest der Formel

$$A - SO_2 - CH_2CH_2 - OSO_3H \qquad (2),$$

und X Halogen, $SO_3H$, OH, $OR_1$, SH oder $SR_1$ ist, wobei $R_1$ ein gegebenenfalls substituierter aliphatischer Rest ist.

Bevorzugte Untergruppen sind:

a) Reaktivfarbstoffe der Formel (1), worin D, R, A und Z die unter Formel (1) angegebenen Bedeutungen haben, und X Chlor oder Fluor ist.

b) Reaktivfarbstoffe der Formel (1), worin D, R, A und Z die unter Formel (1) angegebenen Bedeutungen haben, und X OH oder $C_{1-4}$-Alkoxy ist.

c) Reaktivfarbstoffe der Formel (1), worin D, R und X die unter Formel (1) angegebenen Bedeutungen haben, A Aethylen und Z Wasserstoff ist.

d) Reaktivfarbstoffe der Formel (1), worin D der Rest eines Mono- oder Disazofarbstoffes ist.

e) Reaktivfarbstoffe der Formel (1), worin D der Rest eines Metallkomplexazo- oder Formazanfarbstoffes ist.

f) Reaktivfarbstoffe der Formel (1)., worin D der Rest eines Anthrachinonfarbstoffes ist.

g) Reaktivfarbstoffe gemäss e), worin D der Rest eines Metallkomplexazofarbstoffes der Benzol- oder Naphthalinreihe ist.

h) Reaktivfarbstoffe gemäss g), worin D der Rest eines 1:1-Kupferkomplexazofarbstoffes der Benzol- oder Naphthalinreihe ist, und das Kupferatom an jeweils eine metallisierbare Gruppe in ortho-Position zur Azobindung gebunden ist.

i) Reaktivfarbstoffe gemäss d) der Formel

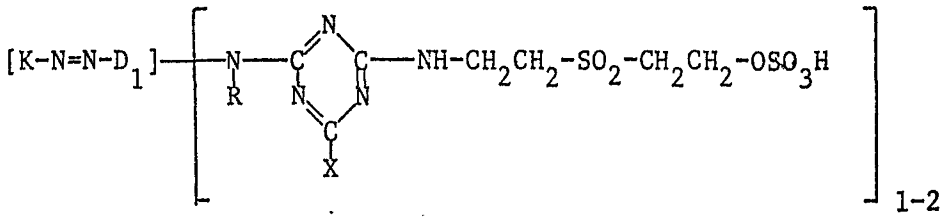

(3),

worin $D_1$ der Rest einer Diazokomponente der Benzol- oder Naphthalinreihe, K der Rest einer Kupplungskomponente der Benzol- oder Naphthalinreihe oder der heterocyclischen Reihe, R Wasserstoff oder gegebenenfalls substituiertes $C_{1-4}$-Alkyl, und X Chlor, Fluor, OH oder $C_{1-4}$-Alkoxy ist, und der Reaktivrest an die Diazokomponente oder an die Kupplungskomponente gebunden ist, oder je ein Reaktivrest sowohl an die Diazokomponente als auch an die Kupplungskomponente gebunden ist.

j) Reaktivfarbstoffe gemäss i) worin R Wasserstoff oder Methyl und X Chlor oder Fluor ist.

Der Rest D in Formel (1) kann in der üblichen Art substituiert sein, insbesondere erhält der Rest D eine oder mehrere Sulfonsäuregruppen.

Als Beispiele für weitere Substituenten am Rest D seien genannt Alkylgruppen mit 1 bis 4 Kohlenstoffatomen, wie Methyl, Aethyl, Propyl, Isopropyl und Butyl, Alkoxygruppen mit 1 bis 4 Kohlenstoffatomen, wie Methoxy, Aethoxy, Propoxy, Isopropoxy und Butoxy, Acylaminogruppen mit 1 bis 6 Kohlenstoffatomen, wie Acetylamino und Propionylamino, Benzoylamino, Amino, Alkylamino mit 1 bis 4 Kohlenstoffatomen, Phenylamino, Alkoxycarbonyl mit 1 bis 4 Kohlenstoffatomen im Alkoxyrest, Nitro, Cyano, Trifluormethyl, Halogen, wie Fluor, Chlor und Brom, Sulfamoyl, Carbamoyl, Ureido, Hydroxy, Carboxy, Sulfomethyl und Sulfo.

Diejenigen Reaktivfarbstoffe, worin D der Rest eines Azofarbstoffes ist, enthalten als Substituenten insbesondere Methyl, Aethyl, Methoxy,

Benzoylamino, Amino, Acetylamino, Ureido, Sulfomethyl, Hydroxy, Carboxy, Halogen und Sulfo.

Als Alkylrest kommt für R in Formel (1) ein geradkettiger oder verzweigter Alkylrest in Betracht, der auch substituiert sein kann, z.B. durch Halogen, Hydroxy, Cyan oder Sulfo. Als Beispiele für R seien genannt: Methyl, Aethyl, Propyl, Isopropyl, Butyl, Isobutyl, sek.-Butyl, tert.-Butyl, β-Chloräthyl, β-Hydroxyäthyl, β-Hydroxybutyl, β-Cyanäthyl und Sulfomethyl.

Als $C_{2-6}$-Alkylenreste kommt für A in Formel (1) ein geradkettiger oder verzweigter Alkylenrest in Betracht, z.B. Aethylen, n-Propylen, Isopropylen, n-Butylen, n-Pentylen und n-Hexylen. Bevorzugt ist der Aethylenrest.

Der Rest eines gegebenenfalls substituierten Alkyls oder Aryls Z ist z.B. ein Alkylrest, der geradkettig oder verzweigt ist, der vorzugsweise 1 bis 6 Kohlenstoffatome aufweist, und der weitersubstituiert sein kann, z.B. durch Halogen, Hydroxy, Cyan, Alkoxy, Carboxy oder Sulfo, oder ein unsubstituierter Alkylrest mit 7 bis 20 Kohlenstoffatomen, ein Cyclohexylrest, oder ein Phenylrest, der z.B. durch Methyl, Aethyl, Methoxy, Aethoxy, Chlor, Brom, Carboxy, Sulfo oder Sulfomethyl substituiert sein kann.

Als Beispiele für Z seien die folgenden Substituenten genannt:

Methyl, Aethyl, Propyl, Isopropyl, Butyl, Isobutyl, sek.-Butyl, tert.-Butyl, Pentyl, Hexyl, Nonyl, Dodecyl, Hexadecyl, Pentadecyl, Carboxymethyl, β-Carboxyäthyl, β-Carboxypropyl, Methoxycarbonylmethyl, Aethoxycarbonylmethyl, β-Methoxyäthyl, β-Aethoxyäthyl, β-Methoxypropyl, β-Chloräthyl, γ-Chlorpropyl, γ-Brompropyl, Sulfomethyl, β-Sulfoäthyl, Aminosulfonylmethyl, β-Sulfatoäthyl, Cyclohexyl, Phenyl, o-, m- oder p-Chlorphenyl, o-, m- oder p-Methylphenyl, p-Aethylphenyl, p-Methoxyphenyl, o-, m- oder p-Sulfophenyl, p-Carboxyphenyl und p-

Sulfomethylphenyl. Bevorzugt sind unsubstituierte Alkylreste mit 1 bis 4 Kohlenstoffatomen.

Insbesondere ist Z Wasserstoff oder ein Rest der Formel

$$A - SO_2 - CH_2CH_2 - OSO_3H \qquad (2),$$

worin A die unter Formel (1) angegebene Bedeutung hat.

Falls Z ein Rest der Formel (2) ist, können die Reste der Formel (2), welche an das Stickstoffatom des externen Restes in Formel (1) gebunden sind gleich oder verschieden sein. Vorzugsweise sind beide Reste der Formel (2) gleich.

Sofern X ein Substituent $OR_1$ oder $SR_1$ ist, wobei $R_1$ ein gegebenenfalls substituierter aliphatischer Rest ist, kommen für $R_1$ beispielsweise die gleichen Reste in Betracht, die oben bei der Erläuterung des Restes Z genannt sind, wobei Arylreste und ein Rest der Formel (2) ausgenommen sind.

Die Farbstoffe der Formel (1) sind faserreaktiv, da sie am Triazinrest mindestens eine Abgangsgruppe enthalten.

Unter faserreaktiven Verbindungen sind solche zu verstehen, die mit den Hydroxygruppen der Cellulose oder mit den Aminogruppen von natürlichen oder synthetischen Polyamiden unter Bildung kovalenter chemischer Bindungen zu reagieren vermögen.

Die Herstellung der Reaktivfarbstoffe der Formel (1) ist dadurch gekennzeichnet, dass man einen organischen Farbstoff der Formel

$$D - \underset{\substack{|\\R}}{N} - H \qquad (4)$$

oder ein Farbstoffvorprodukt, mindestens ein Aequivalent einer

Verbindung der Formel

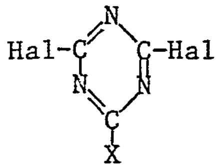 (5),

worin Hal Halogen bedeutet, und X Halogen, $SO_3H$, OH, $OR_1$, SH oder $SR_1$ ist, und mindestens ein Aequivalent eines Amins der Formel

$$\underset{\substack{| \\ Z'}}{HN} - A - SO_2 - CH_2CH_2\ O - Y \qquad (6),$$

worin Y Wasserstoff oder $SO_3H$ ist, und Z' Wasserstoff, gegebenenfalls substituiertes Alkyl oder Aryl oder ein Rest der Formel

$$A\text{-}SO_2\text{-}CH_2CH_2\text{-}O\text{-}Y \qquad (2a),$$

ist, worin Y die oben angegebene Bedeutung hat, kondensiert, und, falls X Halogen ist, gegebenenfalls dieses nachträglich gegen $SO_3H$, OH oder SH austauscht, und, falls Y Wasserstoff ist, mit Schwefelsäure umsetzt, wobei D, R und A in den oben genannten Formeln und Resten die unter Formel (1) angegebenen Bedeutungen haben, und dass man im Falle der Verwendung von Farbstoffvorprodukten, diese in die gewünschten Endfarbstoffe umwandelt.

Bei dem im vorangehenden beschriebenen Verfahren können die einzelnen Verfahrensschritte in unterschiedlicher Reihenfolge, gegebenenfalls teilweise auch gleichzeitig ausgeführt werden. Dabei sind verschiedene Verfahrensvarianten möglich. Im allgemeinen führt man die Umsetzung schrittweise nacheinander aus.

Dabei hängt es allerdings von der Struktur der Ausgangsstoffe, z.B. der Art des Halogens Hal in Formel (5), und von den speziellen Reaktionsbedingungen, z.B. der Kondensationstemperatur, ab, welche der möglichen Verfahrensvarianten am vorteilhaftesten sind.

Geht man, wie weiter unten beschrieben, nicht von einem organischen Farbstoff der Formel (4) sondern von dessen Komponenten, z.B. von der Diazo- und Kupplungskomponente aus, so wird die Zahl der möglichen

Ausführungsvarianten (Reaktionsfolgen) noch grösser. Diese lassen sich aber aufgrund der gegebenen Beschreibung ohne weiteres angeben.

So können Reaktivfarbstoffe der Formel (1), worin X Chlor ist, glatt und mit guter Ausbeute hergestellt werden, indem man einen organischen Farbstoff der Formel (4) mit Cyanurchlorid kondensiert, den erhaltenen Dichlortriazinfarbstoff mit einem Amin der Formel (6), worin Y Wasserstoff ist, d.h. dem betreffenden Hydroxyamin, kondensiert, und den entstandenen Monochlortriazinfarbstoff der Formel

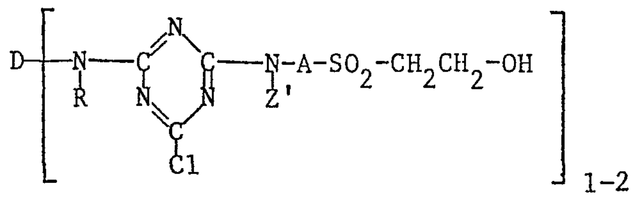

zuletzt mit Schwefelsäure umsetzt.

Man kann den Dichlortriazinfarbstoff aber auch direkt mit dem bereits sulfatierten Amin der Formel (6), worin $Y = SO_3H$ ist, kondensieren. Dabei kann durch Abspaltung von Schwefelsäure teilweise die entsprechende Vinylverbindung gebildet werden. Durch spezielle Wahl der Reaktionsbedingungen ist daher dafür zu sorgen, dass einerseits die Kondensation des Dichlortriazinfarbstoffes mit dem Amin der Formel (6) möglichst vollständig, und andererseits die Ausbeuteverminderung durch Bildung der Vinylverbindung möglichst gering ist.

Verfährt man wie oben beschrieben, verwendet aber statt des Cyanurchlorids das Cyanurfluorid, so erhält man durch Umsetzung des Difluortriazinfarbstoffes mit dem Hydroxyamin die entsprechende Monofluortriazinverbindung. Bei der nachfolgenden Sulfatierung wird die endständige freie Hydroxygruppe glatt verestert, d.h. in die Gruppe $-OSO_3H$ übergeführt, zugleich wird das noch am Triazinring verbleibene Fluoratom durch eine Hydroxygruppe ersetzt, so dass man einen Farbstoff der Formel (1) erhält, worin X = OH ist.

Setzt man hingegen den Difluortriazinfarbstoff mit einem bereits sulfatierten Amin der Formel (6) um, so erhält man in guter Ausbeute den Monofluortriazinfarbstoff, d.h. einen Farbstoff der Formel (1), worin X = Fluor ist.

Statt ein Halogentriazin der Formel (5) zuerst mit einem Aminofarbstoff der Formel (4) zu kondensieren, das Kondensationsprodukt anschliessend mit einem Amin der Formel (6) zu kondensieren und die erhaltene Verbindung gegebenenfalls zu sulfatieren, kann man auch zuerst ein Halogentriazin der Formel (5) mit einem Amin der Formel (6) kondensieren, das primäre Kondensationsprodukt anschliessend mit einem Aminofarbstoff der Formel (4) kondensieren, und gegebenenfalls zuletzt sulfatieren.

Die oben gegebenen Erläuterungen zu den verschiedenen Verfahrensvarianten gelten auch für den Fall, dass man von Aminen der Formel (6) ausgeht, worin Z'ein Rest der Formel (2a) ist, wobei Y Wasserstoff oder $SO_3H$ sein kann. Dabei ist zu berücksichtigen, dass, falls Y = H ist, der Verbrauch an Schwefelsäure bei der Sulfatierung doppelt so hoch ist.

Ferner kann, falls man von einem Trihalogentriazin der Formel (5) ausgeht, nachträglich ein Halogenatom am Triazinring durch einen Rest OH, SH oder $SO_3H$ ersetzt werden, indem man den Dihalogentriazinfarbstoff oder den nach vollzogener Kondensation mit einem Amin der Formel (6), worin Y Wasserstoff ist, vorliegenden Monohalogentriazinfarbstoff oder die durch Kondensation eines Trihalogentriazins mit einem Amin der Formel (6), worin Y Wasserstoff oder $SO_3H$ ist, erhaltene Dihalogentriazinverbindung mit Wasser oder einem hydrolysierenden Mittel, Schwefelwasserstoff oder schwefliger Säure bzw. deren Salzen umsetzt, und gegebenenfalls sulfatiert.

Diejenigen Reaktivfarbstoffe der Formel (1), worin D der Rest eines aus zwei oder mehr als zwei Komponenten zusammengesetzten organischen Farbstoffes ist, können auch nach einer Verfahrensvariante hergestellt werden, bei welcher man von Farbstoffvorprodukten ausgeht. Das geschieht in der Weise, dass man eine Komponente des Farbstoffs der Formel (4), die eine Gruppe -N(R)H enthält, und eine Verbindung der Formel (5) kondensiert, und in einer geeigneten Stufe des Verfahrens, gegebenenfalls auch vorher, mit einem Amin der Formel (6) und mit der anderen (bzw. den übrigen) Komponente(n) des Farbstoffs der Formel (4) umsetzt, und gegebenenfalls mit Wasser, Schwefelwasserstoff oder schwefliger Säure bzw. deren Salzen umsetzt und gegebenenfalls zuletzt sulfatiert.

Beispiele für derartige, aus zwei oder mehr als zwei Komponenten zusammengesetzte organische Farbstoffe sind: Monoazo-, Disazo-, Trisazo-, Tetrazo-, Metallkomplexazo-, Formazan- und Azomethinfarbstoffe.

Die oben beschriebenen Verfahrensvariante ist vor allem wichtig für die Herstellung von Reaktivfarbstoffen der Formel (1), worin D der Rest eines sulfogruppenhaltigen Azofarbstoffes ist. In diesen kann derjenige Teil des Azofarbstoffrestes, an den der Reaktivrest unmittelbar gebunden ist, entweder der Rest der Diazokomponente oder der Rest der Kupplungskomponente sein. Dadurch ergeben sich zwei wichtige Ausführungsformen der oben beschriebenen Verfahrensvariante.

Die eine der beiden Varianten ist dadurch gekennzeichnet, dass man eine Diazokomponente des Farbstoffes, die eine Gruppe -N(R)H enthält, mit einer Verbindung der Formel (5) kondensiert, das erhaltene Kondensationsprodukt diazotiert und auf eine Kupplungskomponente kuppelt, und nach der Kondensation oder nach der Kupplung mit einem Amin der Formel (6) kondensiert und gegebenenfalls mit Wasser, Schwefelwasserstoff oder schwefliger Säure bzw. deren Salzen umsetzt und gegebenenfalls zuletzt sulfatiert.

..

Die zweite Variante ist dadurch gekennzeichnet, dass man eine Kupplungskomponente des Farbstoffs, die eine Gruppe -N(R)H enthält, mit einer Verbindung der Formel (5) kondensiert, und auf das so erhaltene Kondensationsprodukt eine diazotierte Diazokomponente kuppelt, und nach der Kondensation oder nach der Kupplung mit einem Amin der Formel (6) kondensiert und gegebenenfalls mit Wasser, Schwefelwasserstoff oder schwefliger Säure bzw. deren Salzen umsetzt und gegebenenfalls zuletzt sulfatiert.

Nach diesen Verfahrensvarianten können Reaktivfarbstoffe der Formel (1), die zwei Reaktivreste enthalten, hergestellt werden, indem man eine Diazokomponente, die eine Gruppe -N(R)H enthält, mit einer Verbindung der Formel (5) kondensiert, dass man ferner eine Kupplungskomponente, die eine Gruppe -N(R)H enthält, mit einer Verbindung der Formel (5) kondensiert und dass man das Kondensationsprodukt der Diazokomponente diazotiert und auf das Kondensationsprodukt der Kupplungskomponente kuppelt, wobei das R im Kondensationsprodukt der Diazokomponente unabhängig ist von dem R im Kondensationsprodukt der Kupplungskomponente, und dass man vor oder nach der Kupplung beide Triazinreste mit einem Amin der Formel (6) kondensiert und gegebenenfalls mit Wasser, Schwefelwasserstoff oder schwefliger Säure bzw. deren Salzen umsetzt und gegebenenfalls in letzter Stufe sulfatiert.

Farbstoffe der Formel (1), die zwei Reaktivreste enthalten, sind auch in der Weise herstellbar, dass man Farbstoffe der Formel (4) verwendet, die in D eine weitere Gruppe -N(R)H enthalten, diese mit einer entsprechenden Menge einer Verbindung der Formel (5) kondensiert, so dass zwei Halogentriazinreste in das Farbstoffmolekül eingeführt werden, dann mit einer entsprechenden Menge eines Amins der Formel (6) kondensiert, und gegebenenfalls sulfatiert etc.

Vorzugsweise verwendet man als Ausgangsstoffe organische Farbstoffe der Formel (4), worin D der Rest eines Mono- oder Disazofarbstoffes ist.

Vorzugsweise verwendet man ferner Amine der Formel (6), worin A Aethylen ist.

Eine bevorzugte Ausführungsform ist dadurch gekennzeichnet, dass man organische Farbstoffe der Formel

$$\left[ K\text{-}N{=}N\text{-}D_1 \text{—}\right]\text{—}\left[\text{—}NHR \right]_{1-2} \qquad (9),$$

worin $D_1$ der Rest einer Diazokomponente der Benzol- oder Naphthalinreihe und K der Rest einer Kupplungskomponente der Benzol- oder Naphthalinreihe oder der heterocyclischen Reihe ist, als Ausgangsstoffe verwendet.

Nach einer weiteren bevorzugten Herstellungsweise verwendet man Verbindungen der Formel (4), worin D der Rest eines Metallkomplexazo- oder Formazanfarbstoffes ist.

Nach einer weiteren bevorzugten Herstellungsweise verwendet man Verbindungen der Formel (4), worin D der Rest eines Anthrachinonfarbstoffes ist.

Die als Ausgangsstoffe verwendeten Farbstoffe der Formel (4) können im Rest D wie weiter vorn beschrieben substituiert sein. Vorzugsweise geht man von organischen Farbstoffen der Formel (4) aus, worin D der Rest eines Azofarbstoffes ist, der als Substituenten Methyl, Aethyl, Methoxy, Benzoylamino, Amino, Acetylamino, Ureido, Sulfomethyl, Hydroxy, Carboxy, Halogen und Sulfo enthalten kann.

Bei dem im vorangehenden beschriebenen Verfahren können die einzelnen Verfahrensschritte in unterschiedlicher Reihenfolge, gegebenenfalls teilweise auch gleichzeitig ausgeführt werden. Dabei sind verschiedene Verfahrensvarianten möglich. Im allgemeinen führt man die Umsetzungen schrittweise nacheinander aus.

Geht man, wie weiter vorn beschrieben, nicht von einem organischen Farbstoff der Formel (4) sondern von dessen Komponenten, z.B. von der Diazo- und Kupplungskomponente aus, so wird die Zahl der möglichen Ausführungsvarianten (Reaktionsfolgen) noch grösser. Diese lassen sich aber aufgrund der gegebenen Beschreibung ohne weiteres angeben.

Eine bevorzugte Verfahrensweise ist dadurch gekennzeichnet, dass man einen organischen Farbstoff der Formel (4) mit 2,4,6-Trichlor-1,3,5-triazin kondensiert, das Kondensationsprodukt mit einem Amin der Formel (6) , worin Y Wasserstoff ist, kondensiert, und das sekundäre Kondensationsprodukt mit Schwefelsäure umsetzt.

Eine weitere bevorzugte Verfahrensweise ist dadurch gekennzeichnet, dass man 2,4,6-Trichlor-1,3,5-triazin mit einem Amin der Formel (6), worin Y Wasserstoff ist, kondensiert, das Kondensationsprodukt mit einem organischen Farbstoff der Formel (4) kondensiert, und das sekundäre Kondensationsprodukt mit Schwefelsäure behandelt.

Ein weiteres bevorzugtes Verfahren ist dadurch gekennzeichnet, dass man einen organischen Farbstoff der Formel (4) mit 2,4,6-Trifluor-1,3,5-triazin kondensiert, das Kondensationsprodukt mit einem Amin der Formel (6), worin Y Wasserstoff ist, kondensiert, und das sekundäre Kondensationsprodukt mit Schwefelsäure umsetzt.

Ein weiteres bevorzugtes Verfahren ist dadurch gekennzeichnet, dass man 2,4,6-Trifluor-1,3,5-triazin mit einem Amin der Formel (6), worin Y Wasserstoff ist, kondensiert, das Kondensationsprodukt mit einem organischen Farbstoff der Formel (4) kondensiert, und das sekundäre Kondensationsprodukt mit Schwefelsäure umsetzt.

Ein weiteres bevorzugtes Verfahren ist dadurch gekennzeichnet, dass man einen organischen Farbstoff der Formel (4) mit 2,4,6-Trifluor-1,3,5-triazin kondensiert, und das Kondensationsprodukt mit einem Amin der Formel (6), worin Y $SO_3H$ ist, kondensiert.

Ein weiteres bevorzugtes Verfahren ist dadurch gekennzeichnet, dass man 2,4,6-Trifluor-1,3,5-triazin mit einem Amin der Formel (6), worin Y $SO_3H$ ist, kondensiert, und das Kondensationsprodukt mit einem organischen Farbstoff der Formel (4) kondensiert.

Als Amin der Formel (6) verwendet man vorzugsweise die Verbindung der Formel

$$H_2N - CH_2CH_2 - SO_2 - CH_2CH_2 - OH \qquad (7)$$

oder die Verbindung der Formel

$$H_2N - CH_2CH_2 - SO_2 - CH_2CH_2 - OSO_3H \qquad (8).$$

Die Kondensationen der Verbindung der Formel (5) mit den organischen Farbstoffen der Formel (4) bzw. den eine Gruppe -N(R)H enthaltenden diazotierbaren und/oder kupplungsfähigen Komponenten erfolgen vorzugsweise in wässriger Lösung oder Suspensionen, bei schwach saurem, neutralem bis schwach alkalischem pH-Wert, und zwischen 0 bis 5°C, wenn X ein Halogenatom ist, und zwischen 5 und 40°C, wenn X kein Halogenatom ist. Vorteilhaft wird der bei der Kondensation freiwerdende Fluor-, Chlor- oder Bromwasserstoff laufend durch Zugabe wässriger Alkalihydroxyde, -carbonate oder -bicarbonate neutralisiert.

Für die weitere Umsetzung der so erhaltenen Halogentriazinfarbstoffe bzw. für die Umsetzung der Verbindungen der Formel (5) mit den Aminen der Formel (6), setzt man die Amine zweckmässigerweise in Form eines Salzes, bevorzugt in Form des Hydrochlorides, ein. Die Umsetzung der Verbindungen der Formel (5) mit den Aminen der Formel (6) wird bei Temperaturen etwa zwischen 0 und 5°C, wenn X ein Halogenatom ist, und bei etwa 40°C, wenn X kein Halogenatom ist, durchgeführt. Die Umsetzung der genannten Halogentriazinfarbstoffe, worin X ein Halogenatom ist erfolgt etwa zwischen 5 und 40°C, bevorzugt zwischen 5 und 25°C. Die erwähnten Umsetzungen werden unter Zusatz säurebindender Mittel, bevorzugt Natriumcarbonat, und in einem pH-Bereich von 2 bis

6,5, bevorzugt 5 bis 6,5, falls Y $SO_3H$ ist, oder in einem pH-Bereich von 6 bis 8, falls Y Wasserstoff ist, ausgeführt.

Die Sulfatierung der Hydroxygruppe in einem Amin der Formel (6), worin Y = H ist, bzw. in einem der Reste eines solchen Amins enthaltenden Kondensationsproduktes, z.B. mit einem Dihalogentriazinfarbstoff erfolgt vorzugsweise durch Umsetzung mit konzentrierter Schwefelsäure bei 0° bis mässig erhöhter Temperatur. Diese Sulfatierung kann auch durch Reaktion der Hydroxyverbindung mit 2 Aequivalent Chlorsulfonsäure pro Hydroxygruppe in einem polaren organischen Lösungsmittel wie beispielsweise N-Methylpyrrolidon bei 10 bis 80°C erfolgen. Vorzugsweise erfolgt die Sulfatierung durch Eintragen der betreffenden Verbindung in Schwefelsäuremonohydrat bei Temperaturen zwischen 5 und 15°C.

Die Einführung eines Restes OH, $OR_1$, SH oder $SR_1$ für X in eine Verbindung der Formel (5) anstelle eines Halogenatoms, erfolgt durch Kondensation eines Halogentriazins mit einer Hydroxy- oder Mercaptoverbindung. Dies kann vor oder, falls X OH oder SH sein soll, nach der Kondensation des Halogentriazins mit einem Farbstoff der Formel (4) und/oder einem Amin der Formel (6) geschehen. Die Kondensation des Halogentriazins mit einer Hydroxy- oder Mercaptoverbindung erfolgt vorzugsweise in wässriger Lösung oder Suspension, bei niedriger Temperatur und bei schwach saurem, neutralem bis schwach alkalischem pH-Wert, oder, wenn X OH oder SH ist, und nur noch ein austauschbares Halogenatom am Triazinring übrig ist, wobei dann Y Wasserstoff sein muss, oder wenn noch 2 austauschbare Halogenatome am Triazinring übrig sind, bei erhöhter Temperatur, z.B. zwischen 50 und 100°C. Auch hier wird der bei der Kondensation freiwerdende Fluor-, Chlor- oder Bromwasserstoff vorteilhafterweise durch laufende Zugabe von wässrigen Alkalihydroxiden, -carbonaten oder -bicarbonaten neutralisiert.

Die Einführung einer Sulfogruppe $SO_3H$ für X in eine Verbindung der Formel (5) anstelle eines Halogenatoms, erfolgt durch Umsetzung eines

Halogentriazins mit einem Alkalisulfit in wässriger Lösung bei niedriger Temperatur und bei schwach saurem, neutralem bis schwach alkalischem pH-Wert. Vorzugsweise setzt man ein Trihalogentriazin, z.B. Cyanurchlorid, mit Natrium- oder Kaliumsulfit um, vor oder nach einer zusätzlichen Kondensation des Triazins mit einem Farbstoff der Formel (4) oder einem Amin der Formel (6), worin Y Wasserstoff ist.

Im folgenden sollen mögliche Ausgangsstoffe, die zur Herstellung der Reaktivfarbstoffe der Formel (1) verwendet werden können einzeln genannt werden.

Als Farbstoffe der Formel (4) kommen besonders Farbstoffe der folgenden Strukturtypen in Betracht:

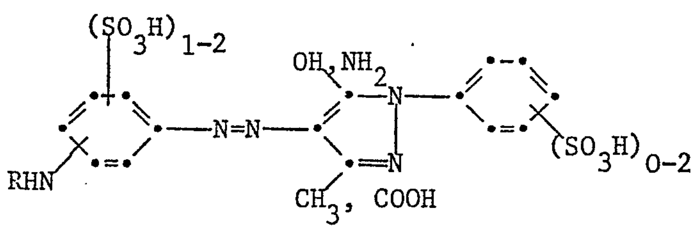

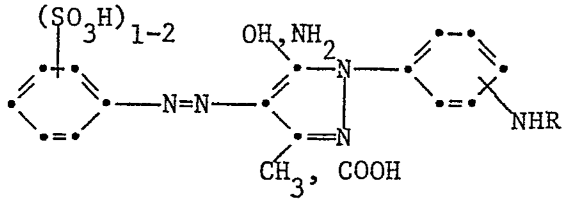

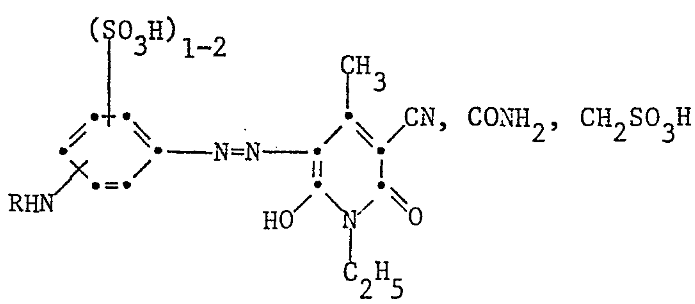

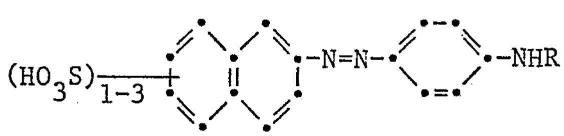

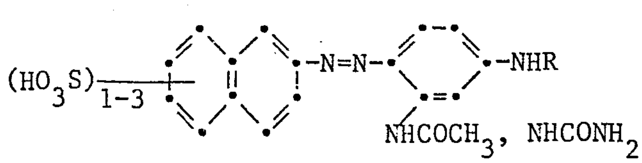

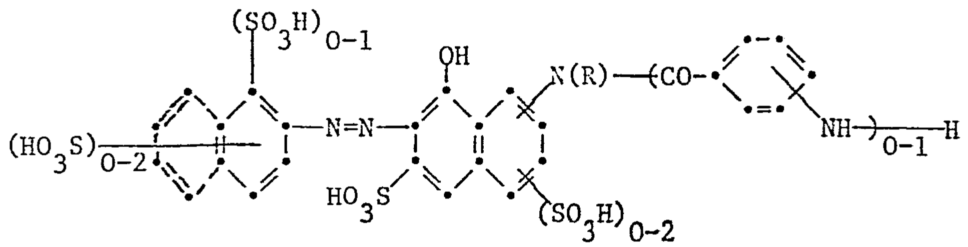

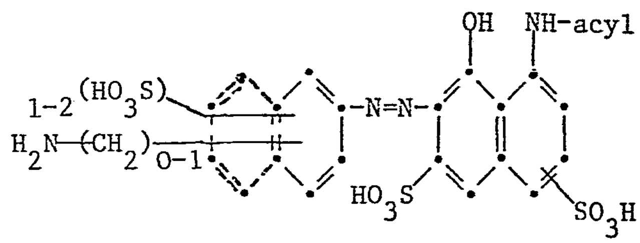

worin acyl z.B. Acetyl oder gegebenenfalls substituiertes Benzoyl ist.

Metallkomplexe von Farbstoffen der Formeln:

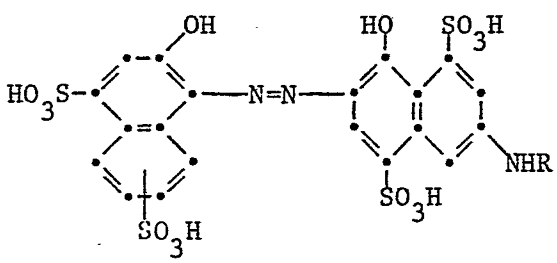

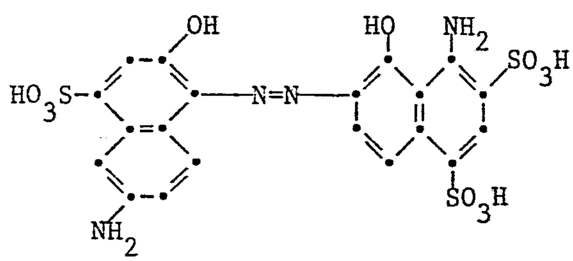

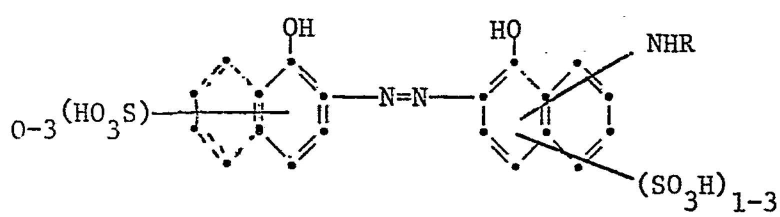

Als Metallatom sind Cu (1:1-Komplex) oder Cr und Co (1:2-Komplex) bevorzugt. Cr- und Co-Komplexe können die Azoverbindung der oben angegebenen Formel einmal oder zweimal enthalten, d.h. sie können symmetrisch oder mit beliebigen anderen Ligandengruppen unsymmetrisch aufgebaut sein.

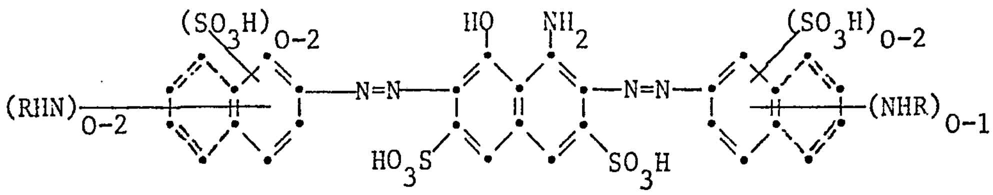

Die durch Strichelungen angedeuteten kondensierten Ringe stehen für alternativ mögliche Naphthalinsysteme.

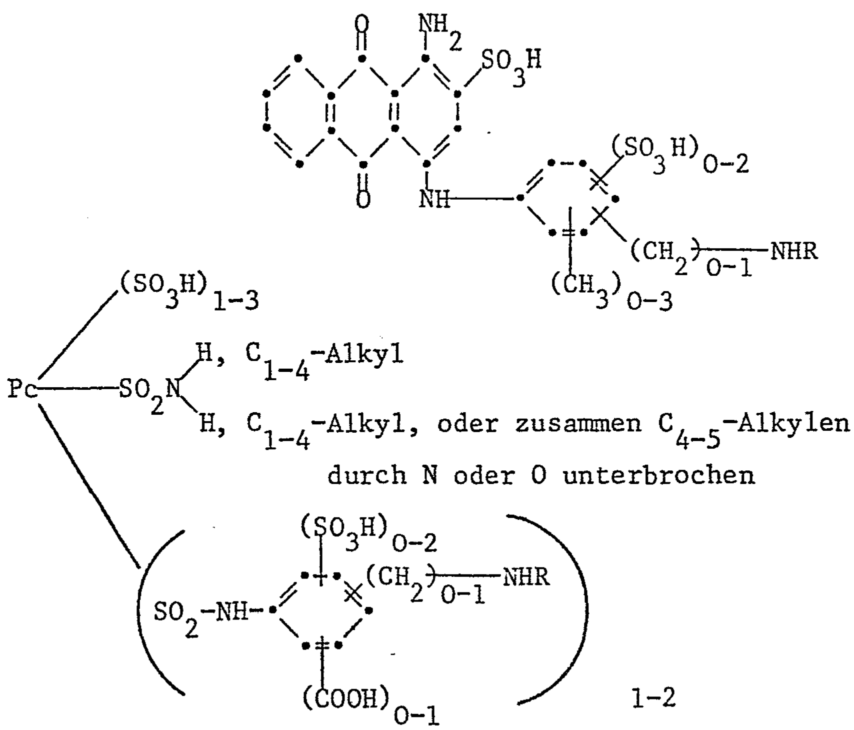

H, $C_{1-4}$-Alkyl

H, $C_{1-4}$-Alkyl, oder zusammen $C_{4-5}$-Alkylen, gegebenenfalls durch N oder O unterbrochen

In dieser Formel steht Pc für den Cu- oder Ni-Phthalocyaninrest. Die Gesamtzahl der Substituenten am Pc-Gerüst ist dabei 4.

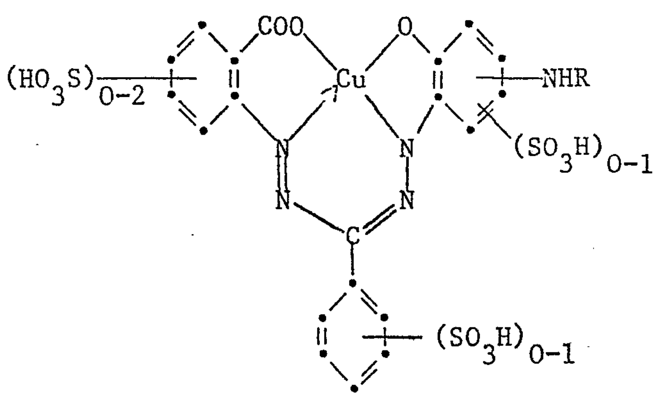

Die Farbstoffe der oben angegebenen Formeln können in den Alkyl- oder Arylresten weitersubstituiert sein, insbesondere durch die bei der Erläuterung von D in Formel (1) genannten Substituenten.

Besonders wichtige Azofarbstoffe der Formel (9) sind die folgenden:

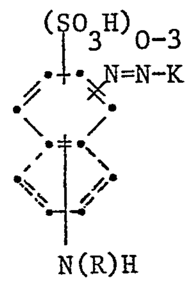

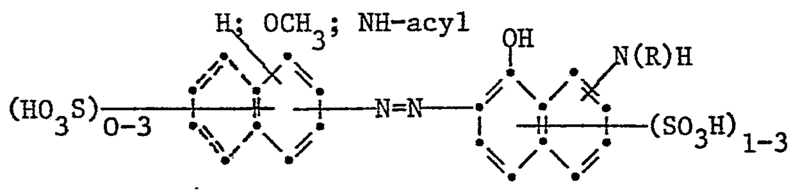

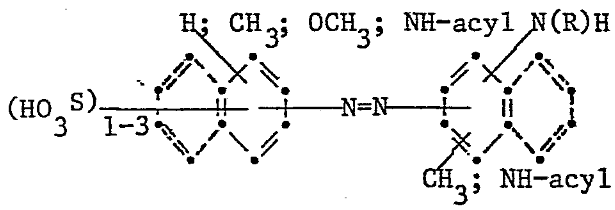

und

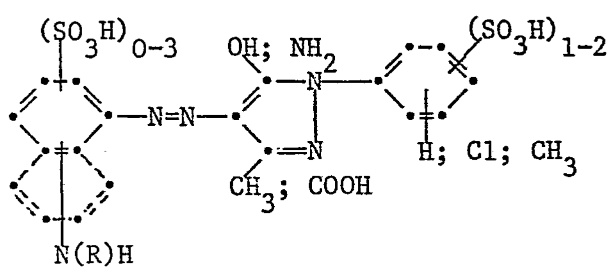

worin K der Rest einer Kupplungskomponente der Benzol-, Naphthalin- oder der heterocyclischen Reihe, acyl ein niedrigmolekularer, höchstens 3 Kohlenstoffatome enthaltender aliphatischer Acylrest oder ein höchstens 8 Kohlenstoffatome enthaltender aromatischer Rest ist, und R die bei der Erläuterung der Formel (1) angegebene Bedeutung hat, sowie die Metallkomplex-Azofarbstoffe der Formeln

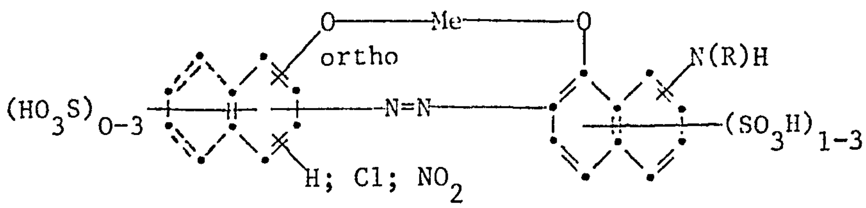

und

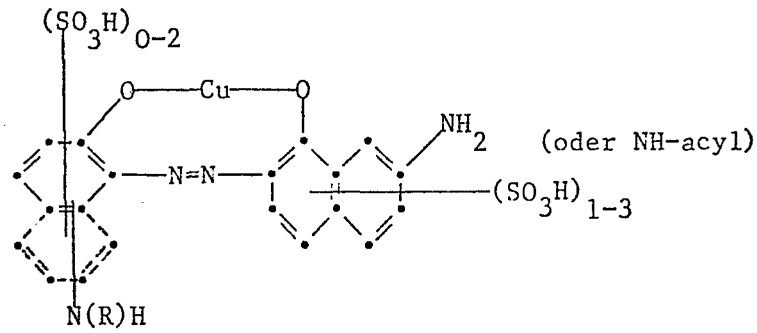

worin R und acyl die oben angegebenen Bedeutungen haben und Me für Cu, Cr oder Co steht.

Verbindungen der Formel (5)

2,4,6-Trichlor-1,3,5-triazin (Cyanurchlorid),
2,4,6-Trifluor-1,3,5-triazin (Cyanurfluorid),
2,4,6-Tribrom-1,3,5-triazin (Cyanurbromid),
2,4-Dichlor-6-sulfo-1,3,5-triazin,
2,4-Dichlor-6-hydroxy-1,3,5-triazin,
2,4-Difluor-6-hydroxy-1,3,5-triazin,
2,4-Dichlor-6-methoxy-1,3,5-triazin,
2,4-Dichlor-6-methylmercapto-1,3,5-triazin,
2,4-Dichlor-6-isopropoxy-1,3,5-triazin,
2,4-Dichlor-6-β-äthoxyäthoxy-1,3,5-triazin
sowie primäre Kondensationsprodukte der drei oben genannten Trihalogentriazine mit den weiter unten genannten Hydroxy- oder Mercaptoverbindungen.

Amine der Formel (6)

β-(β-Hydroxyäthyl-sulfonyl)-äthyl-amin (2-Tauryläthanol),
γ-(β-Hydroxyäthyl-sulfonyl)-propyl-amin,
α-(β-Hydroxyäthyl-sulfonyl)-isopropyl-amin,

δ-(β-Hydroxyäthyl-sulfonyl)-butyl-amin,
β-(β-Hydroxyäthyl-sulfonyl)-isobutyl-amin,
ε-(β-Hydroxyäthyl-sulfonyl)-pentyl-amin,
β-(β-Hydroxyäthyl-sulfonyl)-hexyl-amin,
N-Methyl-N-β-(β-hydroxyäthyl-sulfonyl)-äthyl-amin,
N-Aethyl-N-β-(β-hydroxyäthyl-sulfonyl)-äthyl-amin,
N-Propyl-N-β-(β-hydroxyäthyl-sulfonyl)-äthyl-amin,
N-Butyl-N-β-(β-hydroxyäthyl-sulfonyl)-äthyl-amin,
N-Pentyl-N-β-(β-hydroxyäthyl-sulfonyl)-äthyl-amin,
N-Hexyl-N-β-(β-hydroxyäthyl-sulfonyl)-äthyl-amin,
N-Nonyl-N-β-(β-hydroxyäthyl-sulfonyl)-äthyl-amin,
N-Dodecyl-N-β-(β-hydroxyäthyl-sulfonyl)-äthyl-amin,
N-Hexadecyl-N-β-(β-hydroxyäthyl-sulfonyl)-äthyl-amin,
N-Oktadecyl-N-β-(β-hydroxyäthyl-sulfonyl)-äthyl-amin,
N-Carboxymethyl-N-β-(β-hydroxyäthyl-sulfonyl)-äthyl-amin,
N-Sulfatomethyl-N-β-(β-hydroxyäthyl-sulfonyl)-äthyl-amin,
N-β-Carboxyäthyl-N-γ-(β-hydroxyäthyl-sulfonyl)-propyl-amin,
N-β-Sulfatoäthyl-N-γ-(β-hydroxyäthyl-sulfonyl)-propyl-amin,
N-β-Sulfatoäthyl-N-δ-(β-hydroxyäthyl-sulfonyl)-butyl-amin,
N-β-Aethoxyäthyl-N-δ-(β-hydroxyäthyl-sulfonyl)-butyl-amin,
N-γ-Chlorpropyl-N-β-(β-hydroxyäthyl-sulfonyl)-äthyl-amin,
N-Phenyl-N-β-(β-hydroxyäthyl-sulfonyl)-äthyl-amin,
N-p-Chlorphenyl-N-β-(β-hydroxyäthyl-sulfonyl)-äthyl-amin,
N-o-Methylphenyl-N-β-(β-hydroxyäthyl-sulfonyl)-äthyl-amin,
N-p-Methoxyphenyl-N-β-(β-hydroxyäthyl-sulfonyl)-äthyl-amin,
N-m-Sulfophenyl-N-β-(β-hydroxyäthyl-sulfonyl)-äthyl-amin,
N-p-Sulfophenyl-N-β-(β-hydroxyäthyl-sulfonyl)-äthyl-amin,
Bis-[β-(β-hydroxyäthyl-sulfonyl)-äthyl]-amin,
Bis-[γ-(β-hydroxyäthyl-sulfonyl)-propyl]-amin,
Bis-[δ-(β-hydroxyäthyl-sulfonyl)-butyl]-amin,
sowie die entsprechenden sulfatierten Verbindungen.

Bevorzugt sind die Amine von niederem Molekulargewicht wie das β-(β-Hydroxyäthyl-sulfonyl)-äthyl-amin und sein N-Methylderivat. Bevorzugt ist ferner das Bis-[β-(β-hydroxyäthyl-sulfonyl)-äthyl]-amin, sowie die entsprechenden sulfatierten Verbindungen.

Hydroxy- und Mercaptoverbindungen, die mit Halogentriazinen, zwecks Austausch eines Halogenatoms gegen einen Rest OH, $OR_1$, SH oder $SR_1$, kondensiert werden können, sind z.B. Wasser, Methanol, Aethanol, Propanol, Isopropanol, n-Butanol, Isobutanol, sek.-Butanol, tert.-Butanol, Hexanol, Cyclohexanol, β-Methoxyäthanol, β-Aethoxyäthanol, γ-Methoxypropanol, γ-Aethoxypropanol, β-Aethoxy-β'-äthoxy-äthanol, Glycolsäure, Schwefelwasserstoff, Methanthiol, Aethanthiol, Propanthiol, Isopropanthiol, n-Butanthiol, Thioglycolsäure.

Geht man zur Herstellung der bevorzugten Reaktivfarbstoffe der Formel (1), worin D der Rest eines Azofarbstoffes ist, nicht von den fertigen Aminofarbstoffen, z.B. solchen die weiter vorn beschrieben sind, sondern von Farbstoffvorprodukten, d.h. den Diazo- und Kupplungskomponenten aus, kommen beispielsweise die folgenden in Betracht:

Diazokomponenten:

Aminobenzol, 1-Amino-2-, -3- oder -4-methylbenzol,
1-Amino-2-, -3- oder -4-methoxybenzol,
1-Amino-2-, -3- oder -4-chlorbenzol,
1-Amino-2,5-dichlorbenzol, 1-Amino-2,5-dimethylbenzol, 1-Amino-3-methyl-6-methoxybenzol, 1-Amino-2-methoxy-4-nitrobenzol, 4-Aminobiphenyl, 1-Aminobenzol-2-, -3- oder -4-carbonsäure, 2-Aminodiphenyläther, 1-Aminobenzol-2-, -3- oder -4-sulfonsäureamid, -N-methylamid, -N-äthylamid, -N,N-dimethylamid oder -N,N-diäthylamid, Dehydrothiop-toluidin-sulfonsäure, 1-Amino-3-trifluormethyl-6-sulfonsäure, 1-Amino-3- oder -4-nitrobenzol, 1-Amino-3- oder -4-acetylaminobenzol, 1-Aminobenzol-2-, -3- oder -4-sulfonsäure, 1-Aminobenzol-2,4- und -2,5-disulfonsäure, 1-Amino-4-methylbenzol-2-sulfonsäure, 1-Amino-3-methylbenzol-6-sulfonsäure, 1-Amino-6-methylbenzol-3- oder -4-sulfon-

säure, 1-Amino-2-carboxybenzol-4-sulfonsäure, 1-Amino-4-carboxybenzol-2-sulfonsäure, 1-Amino-4- oder -5-chlorbenzol-2-sulfonsäure, 1-Amino-6-chlorbenzol-3- oder -4-sulfonsäure, 1-Amino-3,4-dichlorbenzol-6-sulfonsäure, 1-Amino-2,5-dichlorbenzol-6-sulfonsäure, 1-Amino-2,5-dichlorbenzol-4-sulfonsäure, 1-Amino-4-methyl-5-chlorbenzol-2-sulfonsäure, 1-Amino-5-methyl-4-chlorbenzol-2-sulfonsäure, 1-Amino-4- oder -5-methoxybenzol-2-sulfonsäure, 1-Amino-6-methoxybenzol-3- oder -4-sulfonsäure, 1-Amino-6-äthoxybenzol-3- oder -4-sulfonsäure, 1-Amino-2,4-dimethoxybenzol-6-sulfonsäure, 1-Amino-2,5-dimethoxybenzol-4-sulfonsäure, 1-Amino-3-acetylaminobenzol-6-sulfonsäure, 1-Amino-4-acetylaminobenzol-2-sulfonsäure, 1-Amino-3-acetylamino-4-methylbenzol-6-sulfonsäure, 2-Amino-1-methylbenzol-3,5-disulfonsäure, 1-Amino-4-methoxybenzol-2,5-disulfonsäure, 1,3-Diaminobenzol-4-sulfonsäure, 1,4-Diaminobenzol-3-sulfonsäure, 1,4-Diaminobenzol-2,5-disulfonsäure, 1-Amino-3- oder -4-nitrobenzol-6-sulfonsäure, 1-Aminonaphthalin, 2-Aminonaphthalin, 1-Aminonaphthalin-2-, -4-, -5-, -6-, -7- oder -8-sulfonsäure, 2-Aminonaphthalin-1-, -3-, -4-, -5-, -6-, -7- oder -8-sulfonsäure, 2-Amino-naphthalin-3,6- oder -5,7-disulfonsäure, 1-Aminonaphthalin-3,6- oder -5,7-disulfonsäure, 2-Aminonaphthalin-1,5-, -1,7-, -3,6-, -5,7-, -4,8- oder -6,8-disulfonsäure, 1-Aminonaphthalin-2,5,7-trisulfonsäure, 2-Aminonaphthalin-1,5,7-, -3,6,8- oder -4,6,8-trisulfonsäure, 1-Hydroxy-2-aminobenzol-4-sulfonsäure, 1-Hydroxy-2-aminobenzol-5-sulfonsäure, 1-Hydroxy-2-aminobenzol-4,6-disulfonsäure, 1-Hydroxy-2-amino-4-acetylaminobenzol-6-sulfonsäure, 1-Hydroxy-2-amino-6-acetylaminobenzol-4-sulfonsäure, 1-Hydroxy-2-amino-4-chlorbenzol-5-sulfonsäure, 1-Hydroxy-2-amino-4-methylsulfonylbenzol, 1-Amino-2-hydroxy-6-nitronaphthalin-6-sulfonsäure, 2-Amino-1-hydroxynaphthalin-4,8-disulfonsäure, 4-Aminoazobenzol-3,4'-disulfonsäure, 3-Methoxy-4-amino-6-methylazobenzol-2',4'-disulfonsäure, 3-Methoxy-4-amino-6-methylazobenzol-2',5'-disulfonsäure.

Kupplungskomponenten:

Phenol, 1-Hydroxy-3- oder -4-methylbenzol, 1-Hydroxybenzol-4-sulfonsäure, 1-Hydroxynaphthalin, 2-Hydroxynaphthalin, 2-Hydroxynaphthalin-6- oder -7-sulfonsäure, 2-Hydroxynaphthalin-3,6- oder -6,8-disulfonsäure, 1-Hydroxynaphthalin-4-sulfonsäure, 1-Hydroxynaphthalin-4,6- oder 4,7-disulfonsäure, 1-Amino-3-methylbenzol, 1-Amino-2-methoxy-5-methylbenzol, 1-Amino-2,5-dimethylbenzol, 3-Aminophenylharnstoff, 1-Amino-3-acetylaminobenzol, 1-Amino-3-hydroxyacetylaminobenzol, 1,3-Diaminobenzol-4-sulfonsäure, 1-Aminonaphthalin-6- oder -8-sulfonsäure, 1-Amino-2-methoxynaphthalin-6-sulfonsäure, 2-Aminonaphthalin-5,7-disulfonsäure, 1-Amino-8-hydroxynaphthalin-6-sulfonsäure, 1-Amino-8-hydroxynaphthalin-2,4-disulfonsäure, 2-Hydroxy-3-aminonaphthalin-5,7-disulfonsäure, 1-Amino-8-hydroxynaphthalin-2,4,6-trisulfonsäure, 1-Hydroxy-8-acetylaminonaphthalin-3-sulfonsäure, 1-Benzoylamino-8-hydroxynaphthalin-3,6- oder -4,6-disulfonsäure, 2-Benzoylamino-5-hydroxynaphthalin-7-sulfonsäure, 2-Amino-5-hydroxynaphthalin-7-sulfonsäure, 2-Methyl- bzw. 2-Aethylamino-5-hydroxynaphthalin-7-sulfonsäure, 2-(N-Acetyl-N-methylamino)-5-hydroxynaphthalin-7-sulfonsäure, 2-Acetylamino-5-hydroxynaphthalin-7-sulfonsäure, 2-Amino-5-hydroxynaphthalin-1,7-disulfonsäure, 2-Amino-8-hydroxynaphthalin-6-sulfonsäure, 2-Methyl- bzw. -Aethylamino-8-hydroxynaphthalin-6-sulfonsäure, 2-(N-Acetyl-N-methylamino)-8-hydroxynaphthalin-6-sulfonsäure, 2-Acetylamino-8-hydroxynaphthalin-6-sulfonsäure, 2-Amino-8-hydroxynaphthalin-3,6-disulfonsäure, 2-Acetylamino-8-hydroxynaphthalin-3,6-disulfonsäure, 1-Amino-5-hydroxynaphthalin-7-sulfonsäure, 1-Amino-8-hydroxynaphthalin-3,6- bzw. -4,6-disulfonsäure, 1-Acetylamino-8-hydroxynaphthalin-3,6- bzw. -4,6-disulfonsäure, 1-(4'-Aminobenzoylamino)-8-hydroxynaphthalin-3,6- bzw. -4,6-disulfonsäure, 1-(4'-Nitrobenzoylamino)-8-hydroxynaphthalin-3,6- bzw. -4,6-disulfonsäure, 1-(3'-Aminobenzoylamino)-8-hydroxyanphthalin-3,6- bzw. -4,6-disulfonsäure, 1-(3'-Nitrobenzoylamino)-8-hydroxynaphthalin-3,6- bzw. -4,6-disulfonsäure, 2-(4'-Amino-3'-sulfophenylamino)-5-hydroxynaphthalin-7-sulfonsäure, 3-Methylpyrazolon-(5), 1-Phenyl-3-methyl-5-pyrazolon, 1-(4'-Sulfo-

phenyl)-3-methyl-5-pyrazolon, 1-(4'-Sulfophenyl)-pyrazolon-(5)-3-carbonsäure, 1-(3'-Aminophenyl)-3-methyl-5-pyrazolon, 1-(2',5'-Disulfophenyl)-3-methyl-5-pyrazolon, 1-(2'-Methyl-4'-sulfophenyl)-5-pyrazolon-3-carbonsäure, 1-(4',8'-Disulfonaphthyl-[2'])-3-methyl-5-pyrazolon, 1-(5',7'-Disulfonaphthyl-[2'])-3-methyl-5-pyrazolon, 1-(2',5'-Dichlor-4'-sulfophenyl)-3-methyl-5-pyrazolon, 3-Aminocarbonyl-4-methyl-6-hydroxypyridon-(2),1-Aethyl-3-cyan- oder -3-chlor-4-methyl-6-hydroxypyridon-(2),1-Aethyl-3-sulfomethyl-4-methyl-6-hydroxypyridon-(2),2,4,6-Triamino-3-cyanpyridin, 2-(3'-Sulfophenylamino)-4,6-diamino-3-cyanpyridin, 2-(2'-Hydroxyäthylamino)-3-cyan-4-methyl-6-aminopyridin, 2,6-Bis-(2'-hydroxyäthylamino)-3-cyan-4-methylpyridin, 1-Aethyl-3-carbamoyl-4-methyl-6-hydroxypyridon-(2), 1-Aethyl-3-sulfomethyl-4-methyl-5-carbamoyl-6-hydroxypyridon-(2), N-Acetoacetylaminobenzol, 1-(N-Acetoacetylamino)-2-methoxybenzol-5-sulfonsäure, 4-Hydroxychinolon-(2), 1-Amino-8-hydroxy-2-(phenylazo)-naphthalin-3,6-disulfonsäure, 1-Amino-8-hydroxy-2-(4'-sulfophenylazo)-naphthalin-3,6-disulfonsäure, 1-Amino-8-hydroxy-2-(2',5'-disulfophenylazo)-naphthalin-3,6-disulfonsäure.

Geht man von Farbstoffvorprodukten aus, muss mindestens eine der beiden Komponenten, die Diazokomponente oder die Kupplungskomponente eine acylierbare Aminogruppe aufweisen. Die Diazotierung der eine diazotierbare Aminogruppe enthaltenden Zwischenprodukte erfolgt in der Regel durch Einwirkung salpetriger Säure in wässrig-mineralsaurer Lösung bei tiefer Temperatur, die Kupplung bei schwach sauren, neutralen bis schwach alkalischen pH-Werten.

Die Reaktivfarbstoffe der Formel (1) eignen sich zum Färben und Bedrucken von verschiedensten Materialien, wie Seide, Leder, Wolle, Superpolyamidfasern und Superpolyamidurethanen, insbesondere aber cellulosehaltiger Materialien faseriger Struktur, wie Leinen, Zellstoff, regenerierte Cellulose und vor allem Baumwolle. Sie eignen sich sowohl für das Ausziehverfahren als auch zum Färben nach dem Foulardfärbeverfahren, wonach die Ware mit wässrigen und gegebenenfalls auch salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Besonders geeignet sind sie für das sogenannte Kaltverweilverfahren, wonach der Farbstoff zusammen mit dem Alkali auf dem Foulard aufgebracht wird und danach durch mehrstündiges Lagern bei Raumtemperatur fixiert wird.

Die Reaktivfarbstoffe der Formel (1) zeichnen sich durch hohe Reaktivität und gutes Fixiervermögen aus. Sie können daher nach dem Ausziehfärbeverfahren bei niedrigen Färbetemperaturen eingesetzt werden und erfordern beim Padsteam-Verfahren nur kurze Dämpfzeiten. Sie ergeben Färbungen mit guten Nass- und Lichtechtheiten und hoher Farbstärke und bemerkenswert hoher Faser-Farbstoff-Bindungsstabilität, sowohl in saurem als auch in alkalischem Bereich.

Die Reaktivfarbstoffe der Formel (1) eignen sich besonderm zum Färben von Baumwolle nach den Ausziehfärbeverfahren, wobei die Differenz zwischen Ausziehgrad und Fixiergrad bemerkenswert klein, d.h. der Seifverlust sehr gering ist.

Die Reaktivfarbstoffe der Formel (1) eignen sich auch zum Druck, insbesondere auf Baumwolle, ebenso aber auch zum Bedrucken von stickstoffhaltigen Fasern, z.B. von Wolle, Seide oder Wolle enthaltenden Mischgeweben.

Es empfiehlt sich, die Färbungen und Drucke einem gründlichen Spülen mit kaltem und heissem Wasser, gegebenenfalls unter Zusatz eines dispergierend wirkenden und die Diffusion der nicht fixierten Anteile fördernden Mittels zu unterwerfen.

Die Herstellung der Monoazo- oder Disazozwischenverbindungen ist in den nachfolgenden Ausführungsbeispielen nicht in allen Fällen beschrieben, sie ergibt sich jedoch ohne weiteres aus dem oben Gesagten.

In den nachfolgenden Beispielen bedeuten die Teile Gewichtsteile, und die Temperaturen sind in Celsiusgraden angegeben.

Beispiel 1: 10,9 Teile des Farbstoffes der Formel

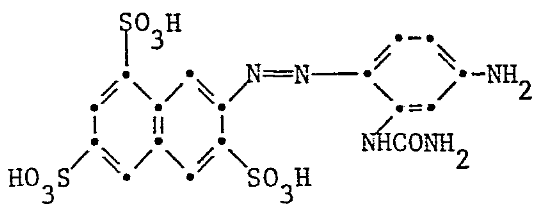

werden in 200 Teilen Wasser neutral gelöst, durch Zugabe von Eis auf 0 bis 5°C abgekühlt und bei dieser Temperatur mit einer Lösung von 3,9 Teilen 2,4,6-Trichlor-1,3,5-triazin in 15 Teilen Aceton versetzt. Bis zur vollständigen Kondensation wird der pH der Reaktionsmischung durch ständige Zugabe von 2n Natriumhydroxydlösung bei 6 bis 7 gehalten. Nach Zusatz von 4,6 Teilen 2-Tauryläthanol wird die Temperatur langsam auf 25 bis 30°C erhöht, und dabei der pH der Reaktionsmischung durch ständige Zugabe von 2n Natriumhydroxydlösung bei 7,5 bis 8 gehalten. Nach vollständiger Reaktion wird der gebildete Reaktivfarbstoff bei pH 6,5 durch Einstreuen von Natriumchlorid ausgesalzen, filtriert, gewaschen und im Vakuum getrocknet. Er stellt ein oranges Pulver dar und färbt Baumwolle in rotstichigen Gelbtönen, insbesondere als Heissfärber.

Elementaranalyse einer 63,2 prozentigen Charge:

| | | | | | |
|---|---|---|---|---|---|
| ber. | C 22,5 % | H 1,9 % | N 9,8 % | S 10,0 % | Cl 2,8 % |
| gef. | C 22,5 % | H 2,3 % | N 10,0 % | S 9,5 % | Cl* 2,2 % |

*Differenz: Gesamtchlor minus anorganisch gebundenes Chlor

Beispiel 2: Zur Ueberführung in den Schwefelsäuremonoester ohne Hydrolyse des Chloratoms am Triazin werden 6 Teile des nach Beispiel 1 herstellbaren Farbstoffes der Formel

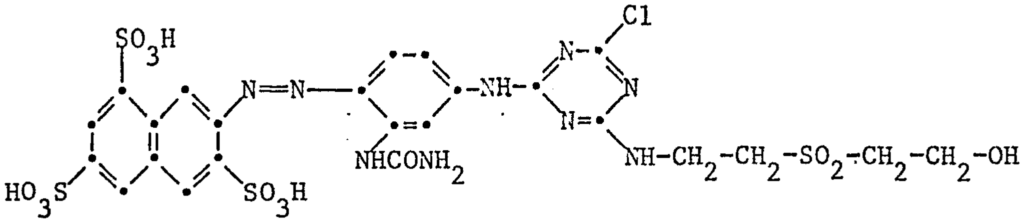

fein gemahlen und in 12 Teile auf 5 bis 10°C gekühltes Schwefelsäuremonohydrat eingetragen. Nach vollständiger Homogenisierung wird auf 50 Teile Eis gegossen und der pH der Reaktionsmischung sorgfältig mit verdünnter Kaliumhydroxydlösung auf 6,0 gestellt. Der gebildete Reaktivfarbstoff wird durch Einstreuen von Kaliumchlorid ausgesalzen, filtriert, gewaschen und im Vakuum getrocknet. Er stellt ein oranges Pulver dar und färbt Baumwolle in rotstichigen Gelbtönen, als Kaltfärber so gut wie als Heissfärber.

Elementaranalyse einer 74,3 prozentigen Charge:

| | | | | | |
|---|---|---|---|---|---|
| ber. | C 24,05 % | H 2,02 % | N 10,52 % | S 13,38 % | Cl 2,96 % |
| gef. | C 24,05 % | H 2,45 % | N 10,65 % | S 13,4 % | Cl* 2,65 % |

Beispiel 3: Analog Beispiel 1 wird der Reaktivfarbstoff der Formel

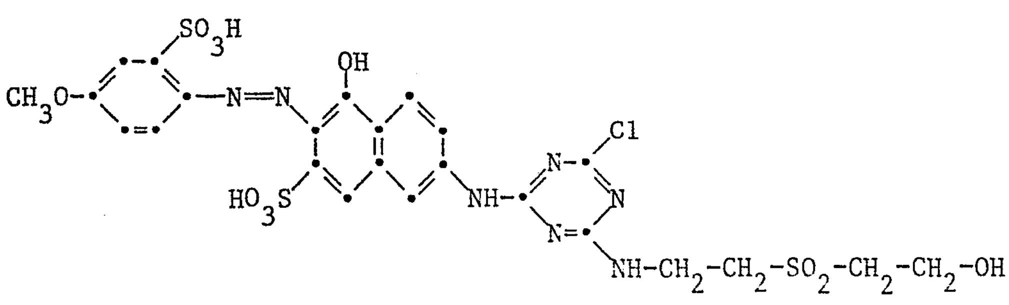

erhalten, der Baumwolle insbesondere als Heissfärber in Scharlachtönen färbt.

Elementaranalyse einer 46,8 prozentigen Charge:

| | | | | | |
|---|---|---|---|---|---|
| ber. | C 18,8 % | H 1,6 % | N 6,4 % | S 6,3 % | Cl 2,3 % |
| gef. | C 18,8 % | H 1,7 % | N 6,2 % | S 5,6 % | Cl* 2,4 % |

Beispiel 4: Analog Beispiel 2 wird der nach Beispiel 3 herstellbare Farbstoff in den Schwefelsäuremonoester überführt. Dieser färbt Baumwolle in Scharlachtönen, als Kaltfärber so gut wie als Heissfärber.

Elementaranalyse einer 60,4 prozentigen Charge:

| | | | | | |
|---|---|---|---|---|---|
| ber. | C 21,8 % | H 1,8 % | N 7,4 % | S 9,7 % | Cl 2,7 % |
| gef. | C 21,8 % | H 2,2 % | N 7,4 % | S 10,2 % | Cl* 2,4 % |

Beispiel 5: Analog Beispiel 1 wird der Reaktivfarbstoff der Formel

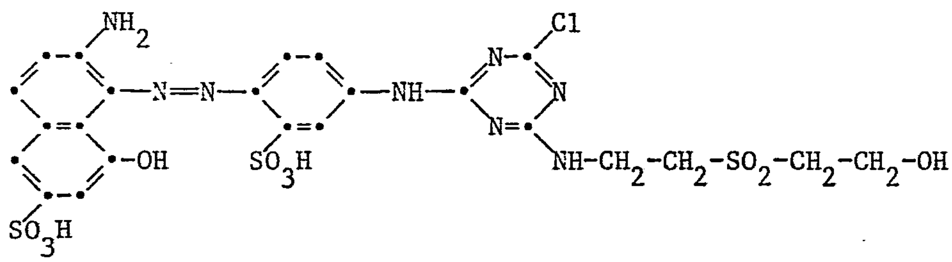

erhalten, der Baumwolle insbesondere als Heissfärber in blaustichigen Rottönen färbt.

Elementaranalyse einer 73,0 prozentigen Charge:

| | | | | | |
|---|---|---|---|---|---|
| ber. | C 28,7 % | H 2,4 % | N 11,6 % | S 10,0 % | Cl 3,7 % |
| gef. | C 28,7 % | H 2,95 % | N 11,7 % | S 10,0 % | Cl* 3,7 % |

Beispiel 6: Analog Beispiel 2 wird der nach Beispiel 5 herstellbare Farbstoff in den Schwefelsäuremonoester überführt. Dieser färbt Baumwolle in blaustichigen Rottönen, als Kaltfärber so gut wie als Heissfärber.

Elementaranalyse einer 62,9 prozentigen Charge:

| | | | | | |
|---|---|---|---|---|---|
| ber. | C 22,2 % | H 1,9 % | N 9,0 % | S 10,3 % | Cl 2,85 % |
| gef. | C 22,2 % | H 2,1 % | N 9,0 % | S 10,5 % | Cl* 2,35 % |

Beispiel 7: Analog Beispiel 1 wird der Reaktivfarbstoff der Formel

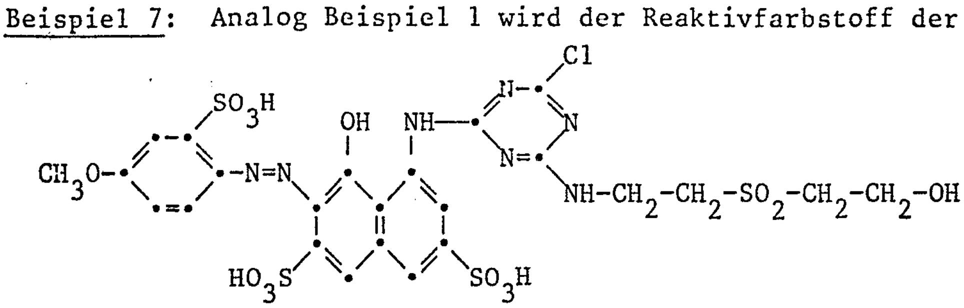

erhalten, der Baumwolle insbesondere als Heissfärber in blaustichig roten Tönen färbt.

Elementaranalyse einer 76,0 prozentigen Charge:

| | | | | | |
|---|---|---|---|---|---|
| ber. | C 27,5% | H 2,3% | N 9,3% | S 12,2% | Cl 3,4% |
| gef. | C 27,5% | H 2,6% | N 9,5% | S 11,9% | Cl* 3,2% |

Beispiel 8: Analog Beispiel 2 wird der nach Beispiel 7 herstellbare Farbstoff in den Schwefelsäuremonoester überführt. Dieser färbt Baumwolle in blaustichig roten Tönen, als Kaltfärber so gut wie als Heissfärber.

Elementaranalyse einer 68,3 prozentigen Charge:

| | | | | | |
|---|---|---|---|---|---|
| ber. | C 22,4% | H 1,9% | N 7,6% | S 12,5% | Cl 2,8% |
| gef. | C 22,4% | H 2,0% | N 7,5% | S 12,1% | Cl* 2,5% |

Beispiel 9: Analog Beispiel 1 wird der Reaktivfarbstoff der Formel

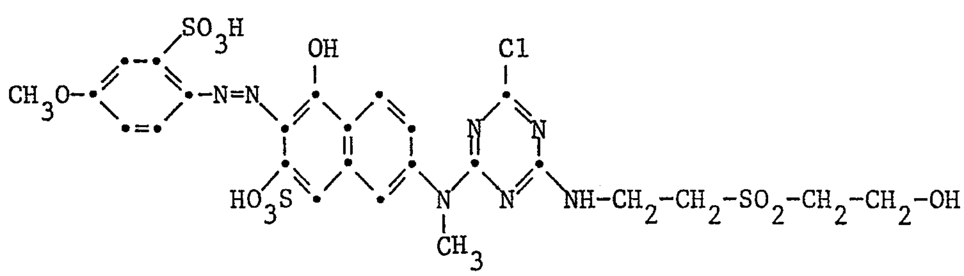

erhalten, der Baumwolle insbesondere als Heissfärber in Scharlachtönen färbt.

Elementaranalyse einer 41,7 prozentigen Charge:

| | | | | | |
|---|---|---|---|---|---|
| ber. | C 17,1% | H 1,5% | N 5,6% | S 5,5% | Cl 2,0% |
| gef. | C 17,1% | H 1,6% | N 5,4% | S 5,8% | Cl* 1,7% |

Beispiel 10: Analog Beispiel 2 wird der nach Beispiel 9 herstellbare Farbstoff in den Schwefelsäuremonoester überführt. Dieser färbt Baumwolle in Scharlachtönen, als Kaltfärber so gut wie als Heissfärber.

Elementaranalyse einer 64,9 prozentigen Charge:

| | | | | | |
|---|---|---|---|---|---|
| ber. | C 24,0% | H 2,1% | N 7,8% | S 10,3% | Cl 2,8% |
| gef. | C 24,0% | H 2,4% | N 7,9% | S 9,9% | Cl* 2,9% |

Weitere Reaktivfarbstoffe, die Baumwolle insbesondere als Heissfärber in den in Tabelle 1, Spalte 3, angegebenen Farbtönen färben, werden erhalten, wenn man die in Spalte 2 angegebenen aminogruppenhaltigen Chromophore gemäss den Angaben in Beispiel 1 zuerst mit 2,4,6-Trichlor-1,3,5-triazin und dann mit 2-Tauryläthanol umsetzt. Die so erhaltenen Reaktivfarbstoffe werden gemäss den Angaben in Beispiel 2 in die Schwefelsäuremonoester umgewandelt. Diese sind Reaktivfarbstoffe, die Baumwolle in den in Tabelle 1, Spalte 3, angegebenen Farbtönen färben, als Kaltfärber so gut wie als Heissfärber.

Tabelle 1

| No. | Chromophor | Farbton auf Baumwolle |
|---|---|---|
| 1 | 2-Aminonaphthalin-1,5-disulfonsäure ⟶ 1-Amino-3-acetylaminobenzol | rotstichig gelb |
| 2 | 2-Aminonaphthalin-1,5-disulfonsäure ⟶ 3-Amino-phenylharnstoff | do. |
| 3 | 2-Aminonaphthalin-1,5-disulfonsäure ⟶ 1-Amino-3-hydroxyacetylaminobenzol | do. |
| 4 | 2-Aminonaphthalin-5,7-disulfonsäure ⟶ 1-Amino-3-acetylaminobenzol | do. |
| 5 | 2-Aminonaphthalin-5,7-disulfonsäure ⟶ 3-Amino-phenylharnstoff | do. |
| 6 | 2-Aminonaphthalin-4,8-disulfonsäure ⟶ 1-Amino-3-methylbenzol | gelb |
| 7 | 2-Aminonaphthalin-4,8-disulfonsäure ⟶ 1-Amino 3-acetylaminobenzol | do. |
| 8 | 2-Aminonaphthalin-3,6-disulfonsäure ⟶ 1-Amino-3-acetylaminobenzol | rotstichig gelb |
| 9 | 2-Aminonaphthalin-3,6-disulfonsäure ⟶ 3-Amino-phenylharnstoff | do. |
| 10 | 2-Aminonaphthalin-6,8-disulfonsäure ⟶ 1-Amino-3-acetylaminobenzol | do. |
| 11 | 2-Aminonaphthalin-6,8-disulfonsäure ⟶ 1-Amino-2-methoxynaphthalin-6-sulfonsäure | do. |
| 12 | 2-Aminonaphthalin-3,6,8-trisulfonsäure ⟶ 1-Amino-3-acetylaminobenzol | do. |
| 13 | 2-Aminonaphthalin-3,6,8-trisulfonsäure ⟶ 1-Amino-3-methylbenzol | do. |
| 14 | 2-Aminonaphthalin-4,6,8-trisulfonsäure ⟶ 1-Amino-3-methylbenzol | do. |
| 15 | 2-Aminonaphthalin-4,6,8-trisulfonsäure ⟶ 1-Amino-3-acetylaminobenzol | do. |
| 16 | 1-Aminobenzol-2,5-disulfonsäure ⟶ 1-Amino-naphthalin-6-sulfonsäure | do. |
| 17 | 1-Aminobenzol-2,5-disulfonsäure ⟶ 1-Amino-naphthalin-6-sulfonsäure ⟶ 1-Aminonaphthalin-8-sulfonsäure | rotstichig braun |

Tabelle 1 (Fortsetzung)

| No. | Chromophor | Farbton auf Baumwolle |
|---|---|---|
| 18 | 1-Aminonaphthalin-2,5,7-trisulfonsäure ⟶ 1-Aminonaphthalin-6-sulfonsäure —— 1-Amino-naphthalin-8-sulfonsäure | violett-stichig braun |
| 19 | 1-Aminonaphthalin-2,5,7-trisulfonsäure ⟶ 1-Amino-2,5-dimethylbenzol ⟶ 1-Aminonaphthalin-6-sulfonsäure | rotstichig braun |
| 20 | 1-Amino-4-(2',5'-disulfophenylazo)-naphthalin-6-sulfonsäure ⟶ 1-Amino-3-methylbenzol | braun |
| 21 | 1-Amino-4-(2',5'-disulfophenylazo)-naphthalin-6-sulfonsäure ⟶ 1-Aminonaphthalin-6-sulfonsäure | do. |
| 22 | 1-Amino-4-(4'-sulfophenylazo)-benzol-2-sulfonsäure ⟶ 1-Aminonaphthalin-6-sulfonsäure | do |
| 23 | 1-Amino-4-(4',6',8'-trisulfonaphthyl-2'-azo)-naphthalin-6-sulfonsäure ⟶ 1-Amino-3-methylbenzol | do. |
| 24 | 1-Amino-4-(2',5'-disulfophenylazo)-naphthalin-6-sulfonsäure ⟶ 1-Amino-2,5-dimethylbenzol | do. |
| 25 | 4-Aminoazobenzol-3,4'-disulfonsäure ⟶ 1-Aminonaphthalin-6-sulfonsäure | gelbbraun |
| 26 | 1,4-Diaminobenzol-2,5-disulfonsäure ⟶ 1-Aethyl-3-sulfomethyl-4-methyl-6-hydroxy-pyridon-(2)-5-carbonsäureamid | gelb |
| 27 | 1-Amino-3-acetylaminobenzol-6-sulfonsäure ⟶ 1-Aethyl-3-sulfomethyl-4-methyl-6-hydroxy-pyridon-(2)-5-carbonsäureamid (verseift) | do. |
| 28 | 1-Amino-3-acetylaminobenzol-6-sulfonsäure ⟶ 1-Aethyl-3-aminocarbonyl-4-methyl-6-hydroxy-pyridon-(2) (verseift) | do. |
| 29 | 1-Amino-3-acetylaminobenzol-6-sulfonsäure ⟶ 1-(2',5'-Dichlor-4'-sulfophenyl)-3-methyl-pyrazolon-(5) (verseift) | do. |
| 30 | 1-Amino-3-acetylaminobenzol-6-sulfonsäure ⟶ 1-(2',5'-Disulfophenyl)-3-methyl-pyrazolon-(5) (verseift) | do. |
| 31 | 1-Amino-3-acetylaminobenzol-6-sulfonsäure ⟶ 1-(4'-Sulfophenyl)-3-carboxy-pyrazolon-(5) (verseift) | do. |

Tabelle 1 (Fortsetzung

| No. | Chromophor | Farbton auf Baumwolle |
|---|---|---|
| 32 | 1-Amino-3-acetylaminobenzol-6-sulfonsäure ⟶ 1-(2'-Methyl-4'-sulfophenyl)-3-carboxy-pyrazolon-(5) (verseift) | gelb |
| 33 | 1-Amino-3-acetylaminobenzol-6-sulfonsäure ⟶ 1-(4',8'-Disulfonaphthyl-[2'])-3-methyl-pyrazolon-(5) (verseift) | do. |
| 34 | 1-Aminobenzol-2,5-disulfonsäure ⟶ 1-(3'-Amino-phenyl)-3-methyl-pyrazolon-(5) | do. |
| 35 | 1-Aminobenzol-2,5-disulfonsäure ⟶ 2-Acetyl-amino-5-hydroxynaphthalin-7-sulfonsäure (verseift) | orange |
| 36 | 1-Aminobenzol-2-sulfonsäure ⟶ 2-Amino-5-hydroxynaphthalin-1,7-disulfonsäure | do. |
| 37 | 2-Aminonaphthalin-1,5-disulfonsäure ⟶ 2-Acetyl-amino-5-hydroxynaphthalin-7-sulfonsäure (verseift) | do. |
| 38 | 2-Aminonaphthalin-3,6,8-trisulfonsäure ⟶ 2-Acetylamino-5-hydroxynaphthalin-7-sulfonsäure (verseift) | do. |
| 39 | 2-Aminonaphthalin-1,5,7-trisulfonsäure ⟶ 1-Acetylamino-5-hydroxynaphthalin-7-sulfonsäure (verseift) | do. |
| 40 | 1-Amino-4-methoxybenzol-2,5-disulfonsäure ⟶ 2-Amino-5-hydroxynaphthalin-7-sulfonsäure | scharlach |
| 41 | 1-Aminobenzol-2-sulfonsäure ⟶ 1-(4'-Nitro-benzoylamino)-8-hydroxynaphthalin-3,6-disulfonsäure (reduziert) | blaustichig rot |
| 42 | 1-Aminobenzol-2,5-disulfonsäure ⟶1-(3'-Nitro-benzoylamino)-8-hydroxynaphthalin-4,6-disulfon-säure (reduziert) | do. |
| 43 | 2-Amino-5-aminomethyl-naphthalin-1-sulfonsäure ⟶ 1-Benzoylamino-8-hydroxynaphthalin-3,6-disulfonsäure | do. |
| 44 | 2-Aminonaphthalin-1,5-disulfonsäure ⟶ 1-(4'-Nitrobenzoylamino)-8-hydroxynaphthalin-3,6-disulfonsäure (reduziert) | do. |
| 45 | 1-Amino-3-acetylaminobenzol-6-sulfonsäure⟶ 1-Acetylamino-8-hydroxynaphthalin-3,6-disulfon-säure (verseift) | do. |

Tabelle 1 (Fortsetzung)

| No. | Chromophor | Farbton auf Baumwolle |
|---|---|---|
| 46 | 1-Amino-3-acetylaminobenzol-6-sulfonsäure → 1-Benzoylamino-8-hydroxynaphthalin-3,6-disulfonsäure (verseift) | blaustichig rot |
| 47 | 1-Amino-3-acetylaminobenzol-6-sulfonsäure → 1-Benzoylamino-8-hydroxynaphthalin-4,6-sisulfonsäure (verseift) | do. |
| 48 | 1-Amino-3-acetylaminobenzol-6-sulfonsäure → 1-Acetylamino-8-hydroxynaphthalin-4,6-disulfonsäure (verseift) | gelbstichig rot |
| 49 | 1-Amino-4-acetylaminobenzol-2-sulfonsäure →saure 2-Amino-8-hydroxynaphthalin-3,6-disulfonsäure (verseift) | blaustichig rot |
| 50 | 1-Amino-4-methoxybenzol-2-sulfonsäure → 1-Amino-8-hydroxynaphthalin-6-sulfonsäure | rotstichig violett |
| 51 | 1-Hydroxy-2-aminobenzol-4-sulfonsäure → 2-Amino-5-hydroxynaphthalin-7-sulfonsäure (Cu-Komplex) | rubin |
| 52 | 1-Hydroxy-2-aminobenzol-4,6-disulfonsäure → 2-Amino-5-hydroxynaphthalin-7-sulfonsäure (Cu-Komplex) | do. |
| 53 | 1-Hydroxy-2-aminobenzol-4,6-disulfonsäure → 2-Aethylamino-5-hydroxynaphthalin-7-sulfonsäure (Cu-Komplex) | do. |
| 54 | 1-Hydroxy-2-aminobenzol-4,6-disulfonsäure → 2-Amino-8-hydroxynaphthalin-3,6-disulfonsäure (Cu-Komplex) | do. |
| 55 | 1-Hydroxy-2-aminobenzol-4,6-disulfonsäure → 1-Amino-8-hydroxynaphthalin-3,6-disulfonsäure (Cu-Komplex) | violett |
| 56 | 1-Hydroxy-2-aminobenzol-4,6-disulfonsäure → 1-Amino-8-hydroxynaphthalin-4,6-disulfonsäure (Cu-Komplex) | do. |
| 57 | 1-Hydroxy-2-amino-4-acetylaminobenzol-6-sulfonsäure → 1 Amino-8-hydroxynaphthalin-2,4-disulfonsäure (Cu-Komplex) (verseift) | blau |
| 58 | 1-Hydroxy-2-amino-6-acetylaminobenzol-4-sulfonsäure → 1-Amino-8-hydroxynaphthalin-2,4-disulfonsäure (verseift) (Cu-Komplex) | do. |

Tabelle 1 (Fortsetzung)

| No. | Chromophor | Farbton auf Baumwolle |
|---|---|---|
| 59 | 1-Amino-2-hydroxy-6-nitronaphthalin-4-sulfonsäure → 1-Amino-8-hydroxynaphthalin-2,4-disulfonsäure (reduziert) (Cu-Komplex) | blau |
| 60 | 1-Amino-2-hydroxy-6-nitronaphthalin-4-sulfonsäure → 1-Amino-8-hydroxynaphthalin-2,4,6-trisulfonsäure (reduziert) (Cu-Komplex) | do. |
| 61 | 2-Amino-1-hydroxynaphthalin-4,8-disulfonsäure → 1-Amino-8-hydroxynaphthalin-3,6-disulfonsäure (Cu-Komplex) | do. |
| 62 | 2-Aminonaphthalin-4,8-disulfonsäure → 2-Hydroxy-3-aminonaphthalin-5,7-disulfonsäure (oxydierend gekupfert) | do. |
| 63 | 3-Methoxy-4-amino-6-methylazobenzol-2',5'-disulfonsäure → 2-Methylamino-5-hydroxynaphthalin-7-sulfonsäure (entmethylierend gekupfert) | marinblau |
| 64 | 3-Methoxy-4-amino-6-methylazobenzol-2',4'-disulfonsäure → 2-Amino-5-hydroxynaphthalin-1,7-disulfonsäure (entmethylierend gekupfert) | do. |
| 65 | 1-Amino-3-acetylaminobenzol-6-sulfonsäure → 1-Amino-8-hydroxy-2-(4'-sulfophenylazo)-naphthalin-3,6-disulfonsäure (verseift) | blau |
| 66 | 1-Amino-4-(3'-amino-2',4',6'-trimethylphenylamino)-anthrachinon-2,5'-disulfonsäure | do. |
| 67 | 1-Amino-4-(2',6'-dimethyl-3'-aminomethyl-phenylamino)-anthrachinon-2,5'-disulfonsäure | rotstichig blau |
| 68 | 1-Amino-4-(4'-methyl-2'-aminomethyl-phenylamino)-anthrachinon-2,6'-disulfonsäure | do. |
| 69 | 1-Amino-4-(5'-amino-phenylamino)-anthrachinon-2,2',4'-trisulfonsäure | blau |
| 70 | 1-Amino-4-(4'-amino-phenylamino)-anthrachinon-2,3'-disulfonsäure | do. |
| 71 | 1-Amino-4-(4'-amino-phenylamino)-anthrachinon-2,2'-disulfonsäure | do. |
| 72 | 1-Amino-4-(3'-amino-phenylamino)-anthrachinon-2,4'-disulfonsäure | do. |
| 73 | 1-Amino-4-(2'-methyl-3'-amino-phenylamino)-anthrachinon-2,5'-disulfonsäure | do. |

Tabelle 1 (Fortsetzung)

| No. | Chromophor | Farbton auf Baumwolle |
|---|---|---|
| 74 | 1-Amino-4-(2'-methyl-3'-amino-phenylamino)-anthrachinon-2,6,5'-trisulfonsäure | grünstichig blau |
| 75 | 1-Amino-4-(5'-aminomethyl-phenylamino)-anthrachinon-2,2',4'-trisulfonsäure | blau |
| 76 | 1-Amino-4-(4'-amino-cyclohexylamino)-anthrachinon-2,6-disulfonsäure | do. |
| 77 | 1-Amino-4-(4'-amino-cyclohexylamino)-anthrachinon-2-sulfonsäure | do. |
| 78 | 1-Amino-4-(3'-amino-4'-methyl-cyclohexylamino)-anthrachinon-2-sulfonsäure | do. |
| 79 | 1-Amino-4-(3'-amino-2'-methyl-cyclohexylamino)-anthrachinon-2-sulfonsäure | do. |
| 80 | 1-Amino-4-(4'-amino-3'-methyl-cyclohexylamino)-anthrachinon-2-sulfonsäure | do. |
| 81 | 1-Amino-4-(4'-aminomethyl-cyclohexylamino)-anthrachinon-2-sulfonsäure | do. |
| 82 | 1-Amino-4-(3'-aminomethyl-cyclohexylamino)-anthrachinon-2-sulfonsäure | do. |
| 83 | 1-Amino-4-(2'-amino-äthylamino)-anthrachinon-2-sulfonsäure | do. |
| 84 | 1-Amino-4-(2'-methylamino-äthylamino)-anthrachinon-2-sulfonsäure | do. |
| 85 | 1-Amino-4-(3'-aminopropylamino)-anthrachinon-2-sulfonsäure | do. |
| 86 | 1-Amino-4-(3'-methylaminopropylamino)-anthrachinon-2-sulfonsäure | blau |
| 87 | 1-Amino-4-(4'-aminobutylamino)-anthrachinon-2-sulfonsäure | do. |
| 88 | N-(2-Carboxy-4-sulfophenyl)-N'-(2'-hydroxy-3'-amino-5'-sulfophenyl)-ms-phenylformazan (Cu-Komplex) | do. |
| 89 | N-(2-Carboxy-5-sulfophenyl)-N'-(2'-hydroxy-3'-amino-5'-sulfophenyl)-ms-phenylformazan (Cu-Komplex) | do. |

Tabelle 1 (Fortsetzung)

| No. | Chromophor | Farbton auf Baumwolle |
|---|---|---|
| 90 | N-(2-Carboxy-4-sulfophenyl)-N'-(2'-hydroxy-3'-amino-5'-sulfophenyl)-ms-(2"-chlor-5"-sulfophenyl)-formazan (Cu-Komplex) | blau |
| 91 | N-(2-Carboxy-4-aminophenyl)-N'-(2'-hydroxy-3',5'-disulfophenyl)-ms-(3"-sulfophenyl)-formazan (Cu-Komplex) | do. |
| 92 | N-(2-Carboxy-5-sulfophenyl)-N'-(2'-hydroxy-3',5'-disulfophenyl)-ms-(3"-aminophenyl)-formazan (Cu-Komplex) | grünstichig blau |
| 93 | N-(2-Hydroxy-3-amino-5-sulfophenyl)-N'-(2'-hydroxy-4'-sulfophenyl)-ms-(2"-sulfophenyl)-formazan (Cu-Komplex) | marinblau |
| 94 | N-(2-Hydroxy-5-sulfophenyl)-N'-(2'-hydroxy-3',5'-disulfophenyl)-ms-(4"-aminophenyl)-formazan (Cu-Komplex) | blau |
| 95 | N-(2-Hydroxy-5-amino-3-sulfophenyl)-N'-(2',5'-disulfophenyl)-ms-phenylformazan (Cu-Komplex) | do. |
| 96 | N-(2-Hydroxy-4,6-disulfophenyl)-N'-(2',4'-disulfophenyl)-ms-(3"-aminophenyl)-formazan (Cu-Komplex) | do. |
| 97 | N-(2-Hydroxy-4-sulfophenyl)-N'-(4'-amino-2'-sulfophenyl)-ms-(4"-chlor-3"-sulfophenyl)-formazan (Cu-Komplex) | do. |

Tabelle 1 (Fortsetzung)

| No. | Chromophor | Farbton auf Baumwolle |
|---|---|---|
| 98 | 0,5 Aequivalent 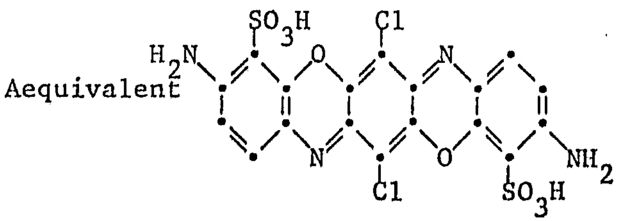 | rotstichig blau |
| 99 | 0,5 Aequivalent 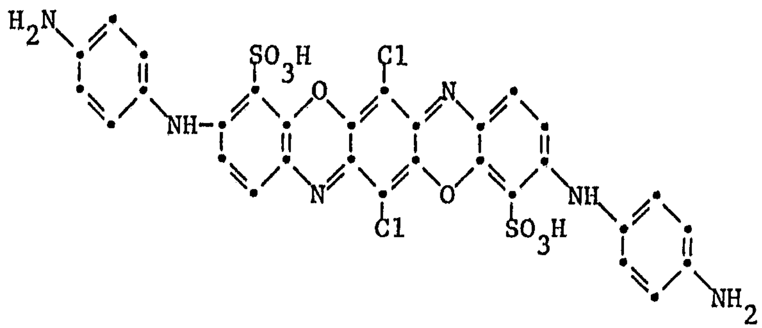 | blau |
| 100 | 0,5 Aequivalent 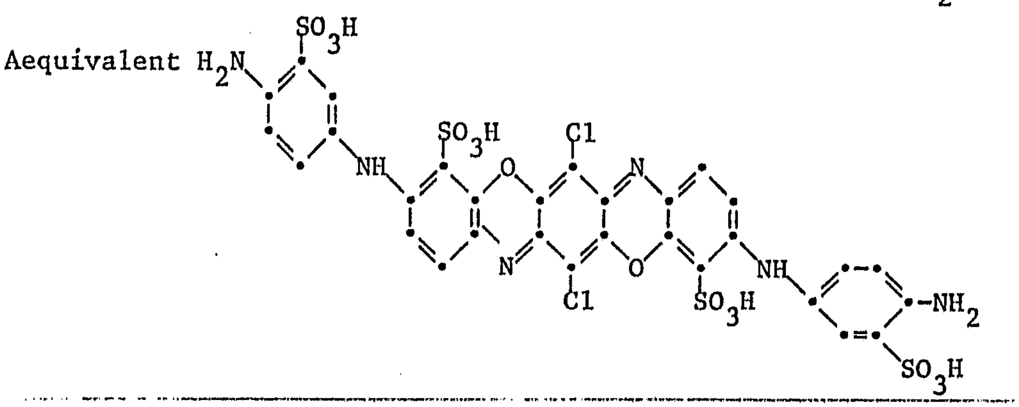 | do. |

Tabelle 1 (Fortsetzung)

| No. | Chromophor | Farbton auf Baumwolle |
|---|---|---|
| 101 | 0,5 Aequivalent 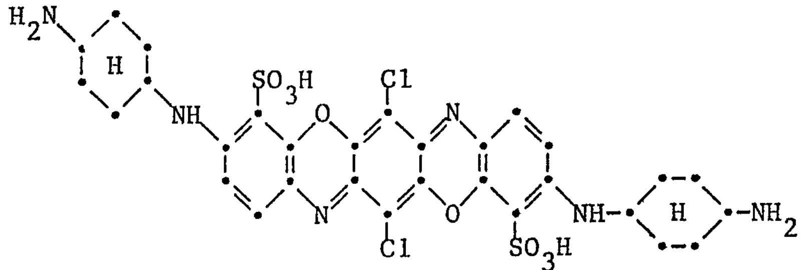 | blau |
| 102 | 0,5 Aequivalent 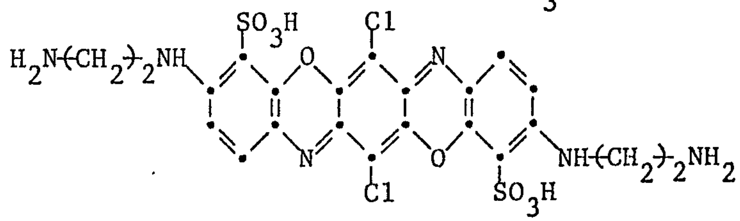 | do. |
| 103 | 0,5 Aequivalent 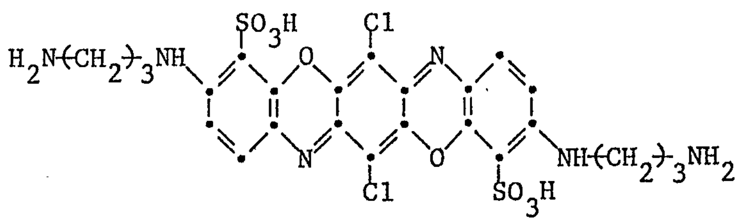 | do. |

Tabelle 1 (Fortsetzung)

| No. | Chromophor | Farbton auf Baumwolle |
|---|---|---|
| 104 | 0,5 Aequivalent 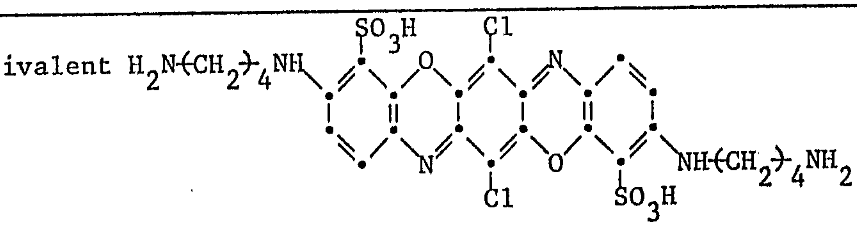 | blau |
| 105 | CuPc-(3) 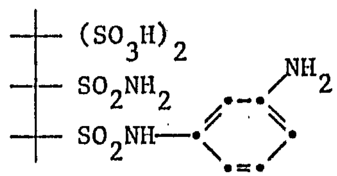 | türkisblau |
| 106 | NiPc-(3) 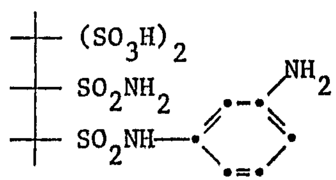 | do. |
| 107 | CuPc-(3) 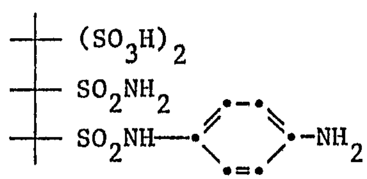 | do. |

Tabelle 1 (Fortsetzung

| No. | Chromophor | | Farbton auf Baumwolle |
|---|---|---|---|
| 108 | CuPc(3) | 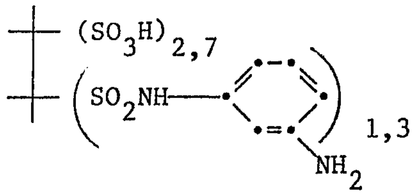 | türkisblau |
| 109 | CuPc-(3) | 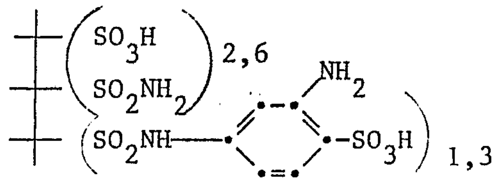 | do. |
| 110 | CuPc-(4) | 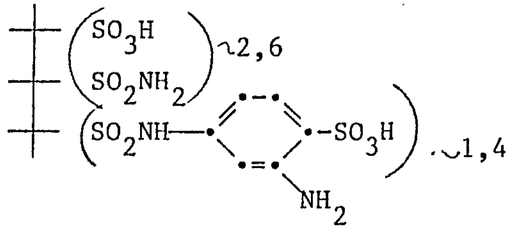 | do. |
| 111 | CuPc-(4) | 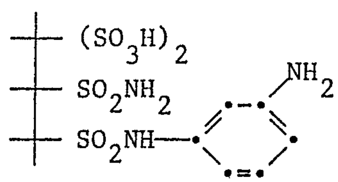 | do. |
| 112 | NiPc-(4) | 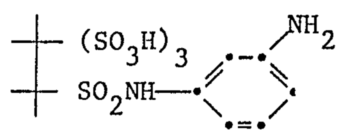 | do. |

Tabelle 1 (Fortsetzung)

| No. | Chromophor | Farbton auf Baumwolle |
|---|---|---|
| 113 | CuPc-(3) $(SO_3H)_{2,5}$ $(SO_2NHCH_2CH_2NH_2)_{1,5}$ | türkisblau |
| 114 | CuPc-(3) $(SO_3H)_2$ $SO_2NH_2$ $SO_2NHCH_2CH_2NH_2$ | do. |
| 115 | CuPc-(3) 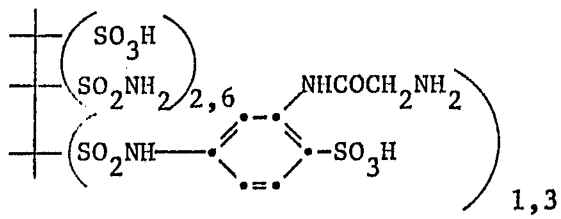 | do. |
| 116 | CuPc-(3) 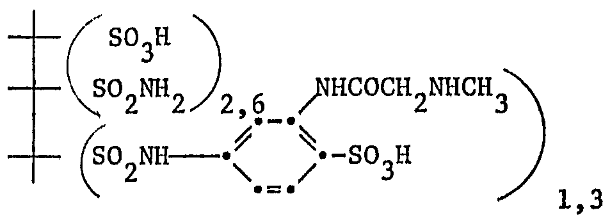 | do. |

Beispiel 11: 31,9 Teile 1-Amino-8-hydroxynaphthalin-3,6-disulfonsäure werden in 100 Teilen Wasser neutral gelöst. Diese Lösung wird während 10 Minuten zu einer Mischung von 200 Teilen Eis und Wasser, 18,5 Teilen 2,4,6-Trichlor-1,3,5-triazin und 10 Teilen 37%iger Salzsäure getropft. Bis zur vollständigen Kondensation wird der pH der Reaktionsmischung durch ständige Zugabe von 2n Natriumhydroxidlösung bei 1,0 gehalten. Nach Zusatz von 15,3 Teilen 2-Tauryläthanol wird die Temperatur der Reaktionsmischung von 5°C langsam bis auf 30°C erhöht. Dabei wird der pH der Reaktionsmischung durch ständige Zugabe von 2n Natriumhydroxidlösung anfänglich bei 3,0 und gegen Schluss der Kondensation bei 5,0 gehalten. Nach vollständiger Reaktion wird dieses Farbstoffzwischenprodukt bei 0 bis 10°C und pH 5,0 mit 30,3 Teilen diazotierter 2-Aminonaphthalin-1,5-disulfonsäure gekuppelt. Nach vollständiger Kupplungsreaktion bei pH 6,5 wird die Reaktionsmischung geklärt und der gebildete Reaktivfarbstoff der Formel

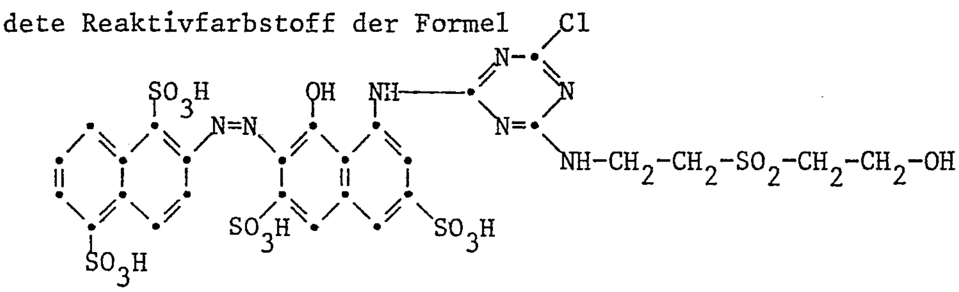

durch Einstreuen von Natriumchlorid ausgesalzen, filtriert und im Vakuum getrocknet. Er färbt Baumwolle in blaustichigen Rottönen, insbesondere als Heissfärber.

Beispiel 12: Analog Beispiel 2 wird der nach Beispiel 11 herstellbare Farbstoff in den Schwefelsäuremonoester überführt. Dieser färbt Baumwolle in blaustichigen Rottönen, als Kaltfärber so gut wie als Heissfärber.

Weitere Reaktivfarbstoffe, die Baumwolle insbesondere als Heissfärber in den den in Tabelle 2, Spalte 4, angegebenen Farbtönen färben, werden erhalten, wenn man gemäss den Angaben in Beispiel 11 auf die in Spalte 2 angegebene Kupplungskomponente, die zuerst mit 2,4,6-Trichlor-1,3,5-triazin und dann mit 2-Tauryläthanol umgesetzt wurde, die in Spalte 3 angegebene diazotierte Diazokomponente kuppelt. Die so erhaltenen Reaktivfarbstoffe werden gemäss den Angaben in Beispiel 2 in die Schwefelsäuremonoester umgewandelt. Diese sind Reaktivfarbstoffe, die Baumwolle in den in Tabelle 2, Spalte 4, angegebenen Farbtönen färben, als Kaltfärber so gut wie als Heissfärber.

Tabelle 2

| No. | Kupplungskomponente | Diazokomponente | Farbton auf Baumwolle |
|---|---|---|---|
| 1 | 1-Amino-8-hydroxynaphthalin-3,6-disulfonsäure | 1-Aminobenzol-2-sulfonsäure | rot |
| 2 | 1-Amino-8-hydroxynaphthalin-4,6-disulfonsäure | 1-Aminobenzol-2-sulfon säure | do. |
| 3 | 1-Amino-8-hydroxynaphthalin-3,6-disulfonsäure | 1-Amino-4-carboxybenzol-2-sulfonsäure | do. |
| 4 | 1-Amino-8-hydroxynaphthalin-3,6-disulfonsäure | 1-Amino-4-methylbenzol-2-sulfonsäure | do. |
| 5 | 1-Amino-8-hydroxynaphthalin-3,6-disulfonsäure | 1-Aminobenzol-2,5-disulfonsäure | do. |
| 6 | 1-Amino-8-hydroxynaphthalin-3,6-disulfonsäure | 2-Aminonaphthalin-1-sulfonsäure | do. |
| 7 | 1-Amino-8-hydroxynaphthalin-4,6-disulfonsäure | 2-Aminonaphthalin-1,5-disulfonsäure | do. |
| 8 | 1-Amino-8-hydroxynaphthalin-6-sulfonsäure | 2-Aminonaphthalin-1,5,7-trisulfonsäure | do. |

Beispiel 13: 10,9 Teile des Farbstoffes der Formel

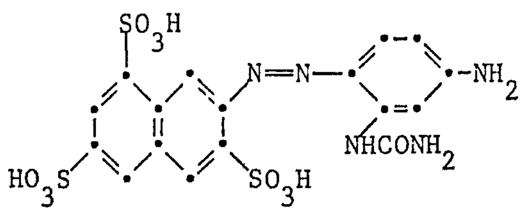

werden in 400 Teilen Wasser neutral gelöst, und die Lösung auf 0 bis 5°C abgekühlt. Bei dieser Temperatur werden 2,8 Teile 2,4,6-Trifluor-1,3,5-triazin innert 15 Minuten zugetropft, wobei der pH der Reaktionsmischung durch gleichzeitige Zugabe von 2n Natriumhydroxydlösung bei 6,0 bis 6,5 gehalten wird. Nach Zusatz von 4,6 Teilen 2-Tauryläthanol wird die Temperatur innert 2 bis 3 Stunden auf 20 bis 25°C erhöht und dabei der pH der Reaktionsmischung durch ständige Zugabe von 2n Natriumhydroxydlösung bei 7,0 bis 7,5 gehalten. Nach vollständiger Reaktion wird der gebildete Reaktivfarbstoff bei pH 6,5 durch Einstreuen von Kaliumchlorid ausgesalzen, filtriert, gewaschen und im Vakuum getrocknet. Er stellt ein oranges Pulver dar und färbt Baumwolle in rotstichigen Gelbtönen, insbesondere als Kaltfärber.

Elementaranalyse einer 47,9 prozentigen Charge:

| | | | | | |
|---|---|---|---|---|---|
| ber. | C 17,4 % | H 1,5 % | N 7,6 % | S 7,7 % | F 1,1 % |
| gef. | C 17,4 % | H 1,8 % | N 7,5 % | S 8,2 % | F** 0,9 % |

** Differenz: Gesamtfluor minus anorganisch gebundenes Fluor

Beispiel 14: 7 Teile des nach Beispiel 13 herstellbaren Farbstoffes der Formel

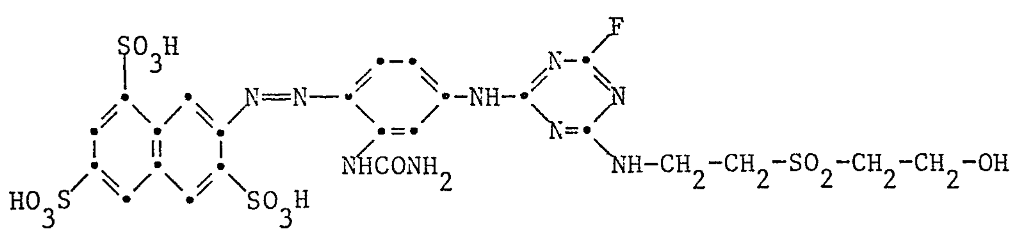

werden fein gemahlen und in 12 Teile auf 5 bis 10°C gekühltes Schwefelsäuremonohydrat eingetragen. Nach vollständiger Homogenisierung wird auf 50 Teile Eis gegossen und der pH der Reaktionsmischung sorgfältig mit verdünnter Kaliumhydroxydlösung auf 6,0 gestellt. Der gebildete

Reaktivfarbstoff der Formel

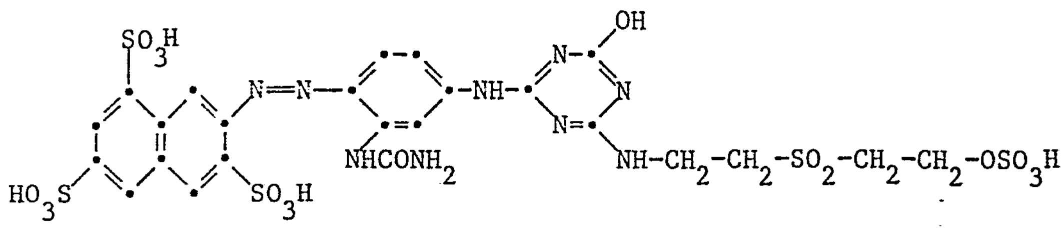

wird durch Einstreuen von Kaliumchlorid ausgesalzen, filtriert, gewaschen und im Vakuum getrocknet. Er stellt ein oranges Pulver dar und färbt Baumwolle in rotstichigen Gelbtönen, insbesondere als Kaltfärber.

Elementaranalyse einer 67,6 prozentigen Charge:

| | | | | | |
|---|---|---|---|---|---|
| ber. | C 22,3 % | H 1,9 % | N 9,75 % | S 12,4 % | F - |
| gef. | C 22,3 % | H 2,3 % | N 9,7 % | S 13,0 % | F $<$ 0,3 % |

Beispiel 15: Analog Beispiel 13 wird der Reaktivfarbstoff der Formel

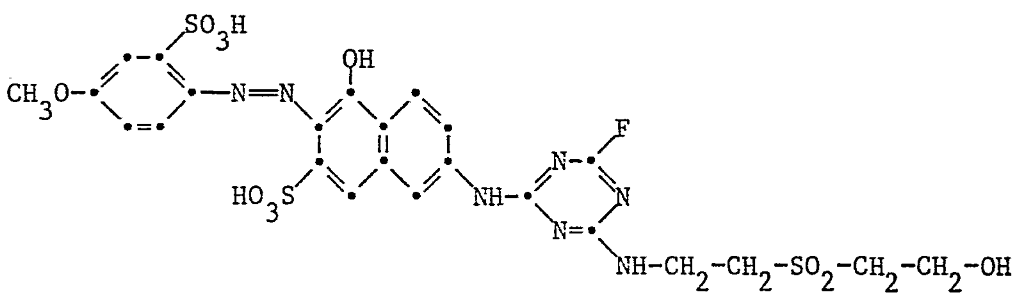

erhalten, der Baumwolle insbesondere als Kaltfärber in Scharlachtönen färbt.

Elementaranalyse einer 53,8 prozentigen Charge:

| | | | | | |
|---|---|---|---|---|---|
| ber. | C 22,1 % | H 1,9 % | N 7,5 % | S 7,4 % | F 1,5 % |
| gef. | C 22,1 % | H 2,2 % | N 7,1 % | S 7,4 % | F** 1,4 % |

Beispiel 16: Analog Beispiel 14 wird der nach Beispiel 15 herstellbare Farbstoff in den Reaktivfarbstoff der Formel

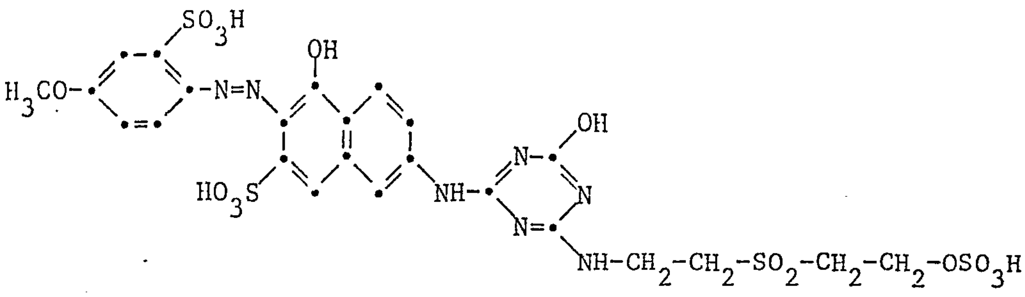

umgewandelt. Dieser färbt Baumwolle insbesondere als Kaltfärber in Scharlachtönen.

Elementaranalyse einer 62,4 prozentigen Charge:

| | | | | | |
|---|---|---|---|---|---|
| ber. | C 23,0 % | H 1,9 % | N 7,8 % | S 10,2 % | F - |
| gef. | C 23,0 % | H 2,3 % | N 7,5 % | S $>$10,5% | F $<$0,3 % |

Weitere Reaktivfarbstoffe, die Baumwolle insbesondere als Kaltfärber in den in Tabelle 3, Spalte 3, angegebenen Farbtönen färben, werden erhalten, wenn man die in Spalte 2 angegebenen aminogruppenhaltigen Chromophore gemäss den Angaben in Beispiel 13 zuerst mit 2,4,6-Trifluor-1,3,5-triazin und dann mit 2-Tauryläthanol umsetzt. Die so erhaltenen Reaktivfarbstoffe werden gemäss den Angaben in Beispiel 14 in die Schwefelsäuremonoester umgewandelt, wobei auch zusätzlich das Fluoratom durch eine Hydroxygruppe ersetzt wird. Diese sind Reaktivfarbstoffe, die Baumwolle insbesondere als Kaltfärber in den in Tabelle 3, Spalte 3, angegebenen Farbtönen färben.

Tabelle 3

| No. | Chromophor | Farbton auf Baumwolle |
|---|---|---|
| 1 | 2-Aminonaphthalin-1,5-disulfonsäure → 1-Amino-3-acetylaminobenzol | rotstichig gelb |
| 2 | 2-Aminonaphthalin-1,5-disulfonsäure → 3-Amino-phenylharnstoff | do. |
| 3 | 2-Aminonaphthalin-1,5-disulfonsäure → 1-Amino-3-hydroxyacetylaminobenzol | do. |
| 4 | 2-Aminonaphthalin-5,7-disulfonsäure → 1-Amino 3-acetylaminobenzol | do. |
| 5 | 2-Aminonaphthalin-5,7-disulfonsäure → 3-Amino-phenylharnstoff | do. |
| 6 | 2-Aminonaphthalin-4,8-disulfonsäure → 1-Amino-3-methylbenzol | gelb |
| 7 | 2-Aminonaphthalin-4,8-disulfonsäure → 1-Amino-3-acetylaminobenzol | do. |
| 8 | 2-Aminonaphthalin-3,6-disulfonsäure → 1-Amino-3-acetylaminobenzol | rotstichig gelb |
| 9 | 2-Aminonaphthalin-3,6-disulfonsäzre → 3-Amino-phenylharnstoff | do. |
| 10 | 2-Aminonaphthalin-6,8-disulfonsäure → 1-Amino-3-acetylaminobenzol | do. |
| 11 | 2-Aminonaphthalin-6,8-disulfonsäure → 1-Amino-2-methoxynaphthalin-6-sulfonsäure | do. |
| 12 | 2-Aminonaphthalin-3,6,8-trisulfonsäure → 1-Amino-3-acetylaminobenzol | do. |
| 13 | 2-Aminonaphthalin-3,6,8-trisulfonsäure → 1-Amino-3-methylbenzol | do. |
| 14 | 2-Aminonaphthalin-4,6,8-trisulfonsäure → 1-Amino-3-methylbenzol | do. |
| 15 | 2-Aminonaphthalin-4,6,8-trisulfonsäure → 1-Amino-3-acetylaminobenzol | do. |
| 16 | 1-Aminobenzol-2,5-disulfonsäure → 1-Amino-naphthalin-6-sulfonsäure | do. |
| 17 | 1-Aminobenzol-2,5-disulfonsäure → 1-Amino-naphthalin-6-sulfonsäure → 1-Aminonaphthalin-8-sulfonsäure | rotstichig braun |

Tabelle 3 (Fortsetzung)

| No. | Chromophor | Farbton auf Baumwolle |
|---|---|---|
| 18 | 1-Aminonaphthalin-2,5,7-trisulfonsäure ⟶ 1-Aminonaphthalin-6-sulfonsäure ⟶ 1-Amino-naphthalin-8-sulfonsäure | violett-stichig braun |
| 19 | 1-Aminonaphthalin-2,5,7-trisulfonsäure ⟶ 1-Amino-2,5-dimethylbenzol ⟶ 1-Aminonaphthalin-6-sulfonsäure | rotstichig braun |
| 20 | 1-Amino-4-(2',5'-disulfophenylazo)-naphthalin-6-sulfonsäure ⟶ 1-Amino-3-methylbenzol | braun |
| 21 | 1-Amino-4-(2',5'-disulfophenylazo)-naphthalin-6-sulfonsäure ⟶ 1-Aminonaphthalin-6-sulfon-säure | do. |
| 22 | 1-Amino-4-(4'-sulfophenylazo)-benzol-2-sulfon-säure ⟶ 1-Aminonaphthalin-6-sulfonsäure | do- |
| 23 | 1-Amino-4-(4',6',8'-trisulfonaphthyl-2'-azo)-naphthalin-6-sulfonsäure ⟶ 1-Amino-3-methyl-benzol | do. |
| 24 | 1-Amino-4-(2',5'-disulfophenylazo)-naphthalin-6-sulfonsäure ⟶ 1-Amino-2,5-dimethylbenzol | do. |
| 25 | 4-Aminoazobenzol-3,4'-disulfonsäure ⟶ 1-Aminonaphthalin-6-sulfonsäure | gelbbraun |
| 26 | 1,4-Diaminobenzol-2,5-disulfonsäure ⟶ 1-Aethyl-3-sulfomethyl-4-methyl-6-hydroxy-pyridon-(2)-5-carbonsäureamid | gelb |
| 27 | 1-Amino-3-acetylaminobenzol-6-sulfonsäure ⟶ 1-Aethyl-3-sulfomethyl-4-methyl-6-hydroxy-pyridon-(2)-5-carbonsäureamid (verseift) | do. |
| 28 | 1-Amino-3-acetylaminobenzol-6-sulfonsäure ⟶ 1-Aethyl-3-aminocarbonyl-4-methyl-6-hydroxy-pyridon-(2) (verseift) | do. |
| 29 | 1-Amino-3-acetylaminobenzol-6-sulfonsäure ⟶ 1-(2',5'-Dichlor-4'-sulfophenyl)-3-methyl-pyrazolon-(5) (verseift) | do. |
| 30 | 1-Amino-3-acetylaminobenzol-6-sulfonsäure ⟶ 1-(2',5'-Disulfophenyl)-3-methyl-pyrazolon-(5) (verseift) | do. |

Tabelle 3 (Fortsetzung)

| No. | Chromophor | Farbton auf Baumwolle |
|---|---|---|
| 31 | 1-Amino-3-acetylaminobenzol-6-sulfonsäure → 1-(4'-Sulfophenyl)-3-carboxy-pyrazolon-(5) (verseift) | gelb |
| 32 | 1-Amino-3-acetylaminobenzol-6-sulfonsäure → 1-(2'-Methyl-4'-sulfophenyl)-3-carboxy-pyrazolon-(5) (verseift) | do. |
| 33 | 1-Amino-3-acetylaminobenzol-6-sulfonsäure → 1-(4',8'-Disulfonaphthyl-[2'])-3-methyl-pyrazolon-(5) (verseift) | do. |
| 34 | 1-Aminobenzol-2,5-disulfonsäure → 1-(3'-Amino-phenyl)-3-methyl-pyrazolon-(5) | do. |
| 35 | 1-Aminobenzol-2,5-disulfonsäure → 2-Acetyl-amino-5-hydroxynaphthalin-7-sulfonsäure (verseift) | orange |
| 36 | 1-Aminobenzol-2-sulfonsäure → 2-Amino-5-hydroxynaphthalin-1,7-disulfonsäure | do. |
| 37 | 2-Aminonaphthalin-1,5-disulfonsäure → 2-Acetyl-amino-5-hydroxynaphthalin-7-sulfonsäure (verseift) | do. |
| 38 | 2-Aminonaphthalin-3,6,8-trisulfonsäure → 2-Acetylamino-5-hydroxynaphthalin-7-sulfon-säure (verseift) | do. |
| 39 | 2-Aminonaphthalin-1,5,7-trisulfonsäure → 1-Acetylamino-5-hydroxynaphthalin-7-sulfon-säure (verseift) | do. |
| 40 | 1-Amino-4-methoxybenzol-2,5-disulfonsäure → 2-Amino-5-hydroxynaphthalin-7-sulfonsäure | scharlach |
| 41 | 1-Amino-4-methoxybenzol-2-sulfonsäure → 2-Methylamino-5-hydroxynaphthalin-7-sulfonsäure | do. |
| 42 | 1-Aminobenzol-2-sulfonsäure → 1-(4'-Nitro-benzoylamino)-8-hydroxynaphthalin-3,6-disulfon-säure (reduziert) | blaustichig rot |
| 43 | 1-Aminobenzol-2,5-disulfonsäure → 1-(3'-Nitro-benzoylamino)-8- hydroxynaphthalin-4,6-disulfon-säure (reduziert) | do. |

Tabelle 3 (Fortsetzung)

| No. | Chromophor | Farbton auf Baumwolle |
|---|---|---|
| 44 | 2-Amino-5-aminomethyl-naphthalin-1-sulfonsäure → 1-Benzoylamino-8-hydroxynaphthalin-3,6-disulfonsäure | blaustichig rot |
| 45 | 2-Aminonaphthalin-1,5-disulfonsäure → 1-(4'-Nitrobenzoylamino)-8-hydroxynaphthalin-3,6-disulfonsäure (reduziert) | do. |
| 46 | 1-Amino-3-acetylaminobenzol-6-sulfonsäure → 1-Benzoylamino-8-hydroxynaphthalin-3,6-disulfonsäure (verseift) | do. |
| 47 | 1-Amino-3-acetylaminobenzol-6-sulfonsäure → 1-Acetylamino-8-hydroxynaphthalin-3,6-disulfonsäure (verseift) | do. |
| 48 | 1-Amino-3-acetylaminobenzol-6-sulfonsäure → 1-Benzoylamino-8-hydroxynaphthalin-4,6-disulfonsäure (verseift) | do. |
| 49 | 1-Amino-3-acetylaminobenzol-6-sulfonsäure → 1-Acetylamino-8-hydroxynaphthalin-4,6-disulfonsäure (verseift) | gelbstichig rot |
| 50 | 1-Amino-4-acetylaminobenzol-2-sulfonsäure → saure 2-Amino-8-hydroxynaphthalin-3,6-disulfonsäure (verseift) | blaustichig rot |
| 51 | 1-Amino-4-acetylaminobenzol-2-sulfonsäure → saure 2-Amino-8-hydroxynaphthalin-6-sulfonsäure (verseift) | do. |
| 52 | 1-Amino-4-methoxybenzol-2-sulfonsäure → 1-Amino-8-hydroxynaphthalin-3,6-disulfonsäure | rotstichig violett |
| 53 | 1-Amino-4-methoxybenzol-2-sulfonsäure → 1-Amino-8-hydroxynaphthalin-6-sulfonsäure | do. |
| 54 | 1-Hydroxy-2-aminobenzol-4-sulfonsäure → 2-Amino-5-hydroxynaphthalin-7-sulfonsäure (Cu-Komplex) | rubin |
| 55 | 1-Hydroxy-2-aminobenzol-4,6-disulfonsäure → 2-Amino-5-hydroxynaphthalin-7-sulfonsäure (Cu-Komplex) | do. |
| 56 | 1-Hydroxy-2-aminobenzol-4,6-disulfonsäure → 2-Aethylamino-5-hydroxynaphthalin-7-sulfonsäure (Cu-Komplex) | do. |

Tabelle 3 (Fortsetzung)

| No. | Chromophor | Farbton auf Baumwolle |
|---|---|---|
| 57 | 1-Hydroxy-2-aminobenzol-4,6-disulfonsäure → 2-Amino-8-hydroxynaphthalin-3,6-disulfonsäure (Cu-Komplex) | rubin |
| 58 | 1-Hydroxy-2-aminobenzol-4,6-disulfonsäure → 1-Amino-8-hydroxynaphthalin-3,6-disulfonsäure (Cu-Komplex) | violett |
| 59 | 1-Hydroxy-2-aminobenzol-4,6-disulfonsäure → 1-Amino-8-hydroxynaphthalin-4,6-disulfonsäure (Cu-Komplex) | do. |
| 60 | 1-Hydroxy-2-amino-4-acetylaminobenzol-6-sulfonsäure → 1-Amino-8-hydroxynaphthalin-2,4-disulfonsäure (Cu-Komplex) (verseift) | blau |
| 61 | 1-Hydroxy-2-amino-6-acetylaminobenzol-4-sulfonsäure → 1-Amino-8-hydroxynaphthalin-2,4-disulfonsäure (verseift) (Cu-Komplex) | do. |
| 62 | 1-Amino-2-hydroxy-6-nitronaphthalin-4-sulfonsäure → 1-Amino-8-hydroxynaphthalin-2,4-disulfonsäure (reduziert) (Cu-Komplex) | do. |
| 63 | 1-Amino-2-hydroxy-6-nitronaphthalin-4-sulfonsäure → 1-Amino-8-hydroxynaphthalin-2,4,6-trisulfonsäure (reduziert) (Cu-Komplex) | do. |
| 64 | 2-Amino-1-hydroxynaphthalin-4,8-disulfonsäure → 1-Amino-8-hydroxynaphthalin-3,6-disulfonsäure (Cu-Komplex) | do. |
| 65 | 2-Aminonaphthalin-4,8-disulfonsäure → 2-Hydroxy-3-aminonaphthalin-5,7-disulfonsäure (oxydierend gekupfert) | do. |
| 66 | 3-Methoxy-4-amino-6-methylazobenzol-2',5'-disulfonsäure → 2-Methylamino-5-hydroxynaphthalin-7-sulfonsäure (entmethylierend gekupfert) | marineblau |
| 67 | 3-Methoxy-4-amino-6-methylazobenzol-2',4'-disulfonsäure → 2-Amino-5-hydroxynaphthalin-1,7-disulfonsäure (entmethylierend gekupfert) | do. |
| 68 | 1-Amino-3-acetylaminobenzol-6-sulfonsäure → 1-Amino-8-hydroxy-2-(4'-sulfophenylazo)-naphthalin-3,6-disulfonsäure (verseift) | blau |

Tabelle 3 (Fortsetzung)

| No. | Chromophor | Farbton auf Baumwolle |
|---|---|---|
| 69 | 1-Amino-4-(3'-amino-2',4',6'-trimethylphenyl-amino)-anthrachinon-2,5'-disulfonsäure | blau |
| 70 | 1-Amino-4-(2',6'-dimethyl-3'-aminomethyl-phenyl-amino)-anthrachinon-2,5'-disulfonsäure | rotstichig blau |
| 71 | 1-Amino-4-(4'-methyl-2'-aminomethyl-phenylamino)-anthrachinon-2,6'-disulfonsäure | do. |
| 72 | 1-Amino-4-(5'-amino-phenylamino)-anthrachinon-2,2',4'-trisulfonsäure | blau |
| 73 | 1-Amino-4-(4'-amino-phenylamino)-anthrachinon-2,3'-disulfonsäure | do. |
| 74 | 1-Amino-4-(4'-amino-phenylamino)-anthrachinon-2,2'-disulfonsäure | do. |
| 75 | 1-Amino-4-(3'-amino-phenylamino)-anthrachinon-2,4'-disulfonsäure | do. |
| 76 | 1-Amino-4-(2'-methyl-3'-amino-phenylamino)-anthrachinon-2,5'-disulfonsäure | do. |
| 77 | 1-Amino-4-(2'-methyl-3'-amino-phenylamino)-anthrachinon-2,6,5'-trisulfonsäure | grünstichig blau |
| 78 | 1-Amino-4-(5'-aminomethyl-phenylamino)-anthra-chinon-2,2',4'-trisulfonsäure | blau |
| 79 | 1-Amino-4-(4'-amino-cyclohexylamino)-anthra-chinon-2,6-disulfonsäure | do. |
| 80 | 1-Amino-4-(4'-amino-cyclohexylamino)-anthra-chinon-2-sulfonsäure | do. |
| 81 | 1-Amino-4-(3'-amino-4'-methyl-cyclohexylamino)-anthrachinon-2-sulfonsäure | do. |
| 82 | 1-Amino-4-(3'-amino-2'-methyl-cyclohexylamino)-anthrachinon-2-sulfonsäure | do. |
| 83 | 1-Amino-4-(4'-amino-3'-methyl-cyclohexylamino)-anthrachinon-2-sulfonsäure | do. |
| 84 | 1-Amino-4-(4'-aminomethyl-cyclohexylamino)-anthrachinon-2-sulfonsäure | do. |
| 85 | 1-Amino-4-(3'-aminomethyl-cyclohexylamino)-anthrachinon-2-sulfonsäure | do. |

Tabelle 3 (Fortsetzung)

| No. | Chromophor | Farbton auf Baumwolle |
|---|---|---|
| 86 | 1-Amino-4-(2'-amino-äthylamino)-anthrachinon-2-sulfonsäure | blau |
| 87 | 1-Amino-4-(2'-methylamino-äthylamino)-anthrachinon-2-sulfonsäure | do. |
| 88 | 1-Amino-4-(3'-aminopropylamino)-anthrachinon-2-sulfonsäure | do. |
| 89 | 1-Amino-4-(3'-methylaminopropylamino)-anthrachinon-2-sulfonsäure | do. |
| 90 | 1-Amino-4-(4'-aminobutylamino)-anthrachinon-2-sulfonsäure | do. |
| 91 | N-(2-Carboxy-4-sulfophenyl)-N'-(2'-hydroxy-3'-amino-5'-sulfophenyl)-ms-phenylformazan (Cu-Komplex) | do. |
| 92 | N-(2-Carboxy-5-sulfophenyl)-N'-(2'-hydroxy-3'-amino-5'-sulfophenyl)-ms-phenylformazan (Cu-Komplex) | do. |
| 93 | N-(2-Carboxy-4-sulfophenyl)-N'-(2'-hydroxy-3'-amino-5'-sulfophenyl)-ms-(2"-chlor-5"-sulfophenyl)-formazan (Cu-Komplex) | do. |
| 94 | N-(2-Carboxy-4-aminophenyl)-N'-(2'-hydroxy-3',5'-disulfophenyl)-ms-(3"-sulfophenyl)-formazan (Cu-Komplex) | do- |
| 95 | N-(2-Carboxy-5-sulfophenyl)-N'-(2'-hydroxy-3',5'-disulfophenyl)-ms-(3"-aminophenyl)-formazan (Cu-Komplex) | grünstichig blau |
| 96 | N-(2-Hydroxy-3-amino-5-sulfophenyl)-N'-(2'-hydroxy-4'-sulfophenyl)-ms-(2"-sulfophenyl)-formazan (Cu-Komplex) | marineblau |
| 97 | N-(2-Hydroxy-5-sulfophenyl)-N'-(2'-hydroxy-3',5'-disulfophenyl)-ms-(4"-aminophenyl)-formazan (Cu-Komplex) | blau |
| 98 | N-(2-Hydroxy-5-amino-3-sulfophenyl)-N'-(2',5'-disulfophenyl)-ms-phenylformazan (Cu-Komplex | do. |
| 99 | N-(2-Hydroxy-4,6-disulfophenyl)-N'-(2',4'-disulfophenyl)-ms-(3"-aminophenyl)-formazan (Cu-Komplex) | do. |
| 100 | N-(2-Hydroxy-4-sulfophenyl)-N'-(4'-amino-2'-sulfophenyl)-ms-(4"-chlor-3"-sulfophenyl)-formazan (Cu-Komplex) | do. |

Tabelle 3 (Fortsetzung)

| No. | Chromophor | Farbton auf Baumwolle |
|---|---|---|
| 101 | 0,5 Aequivalent 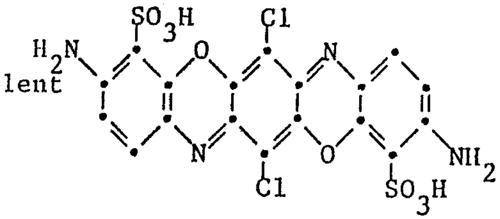 | rotstichig blau |
| 102 | 0,5 Aequivalent 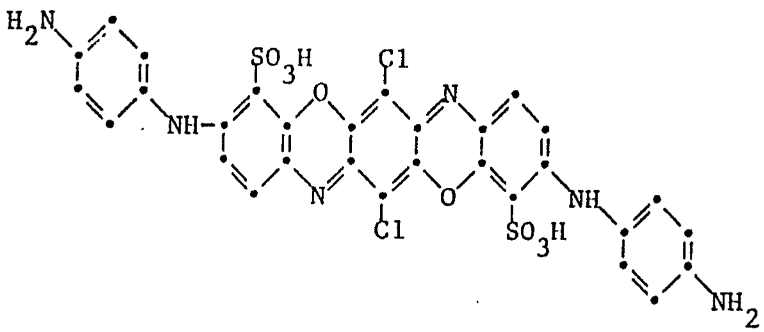 | blau |
| 103 | 0,5 Aequivalent 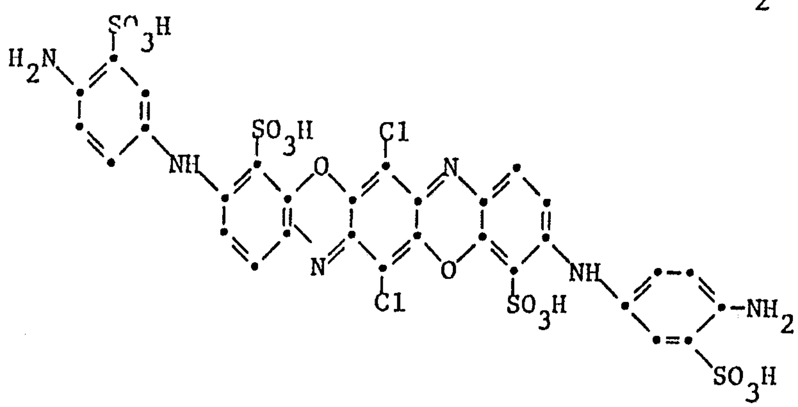 | do. |

Tabelle 3 (Fortsetzung)

| No. | Chromophor | Farbton auf Baumwolle |
|---|---|---|
| 104 | 0,5 Aequivalent 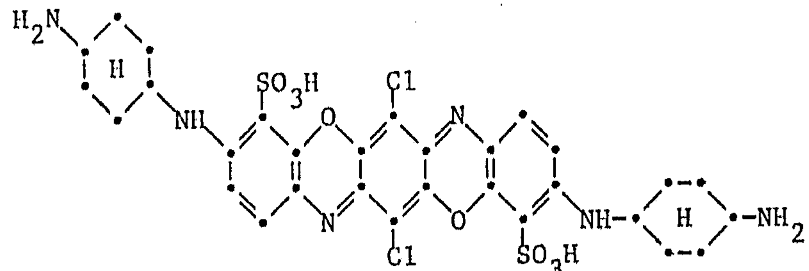 | blau |
| 105 | 0,5 Aequivalent 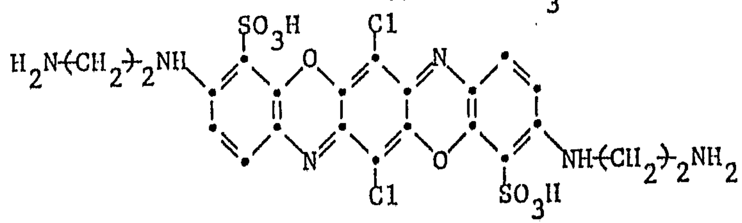 | do. |
| 106 | 0,5 Aequivalent 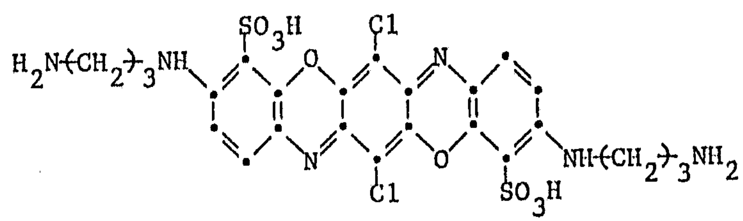 | do. |

Tabelle 3 (Fortsetzung)

| No. | Chromophor | Farbton auf Baumwolle |
|---|---|---|
| 107 | 0,5 Aequivalent 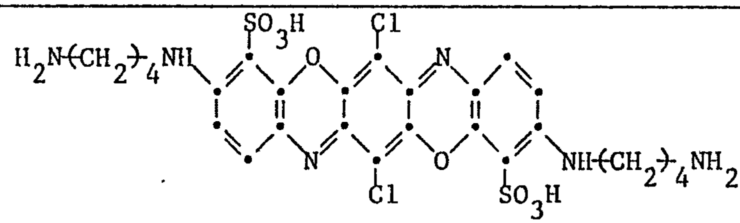 | blau |
| 108 | CuPc-(3) 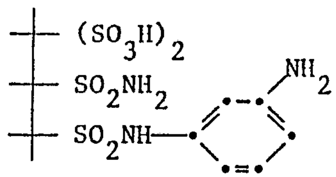 | türkisblau |
| 109 | NiPc-(3) 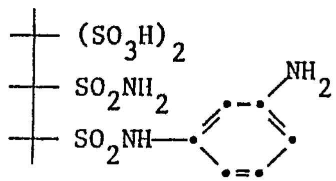 | do. |
| 110 | CuPc-(3) 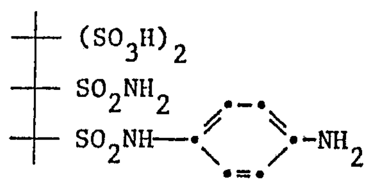 | do. |

Tabelle 3 (Fortsetzung

| No. | Chromophor | | Farbton auf Baumwolle |
|---|---|---|---|
| 111 | CuPc(3) | 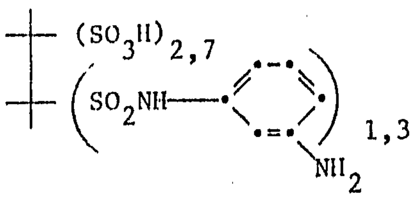 | türkisblau |
| 112 | CuPc-(3) | 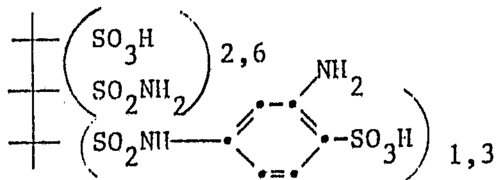 | do. |
| 113 | CuPc-(4) | 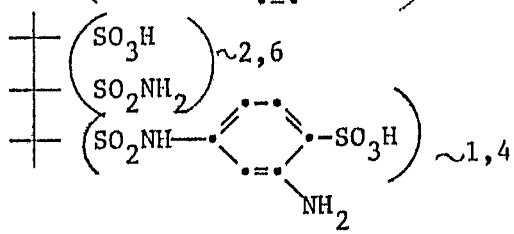 | do. |
| 114 | CuPc-(4) | 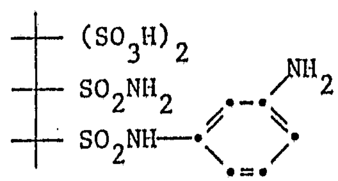 | do. |
| 115 | NiPc-(4) | 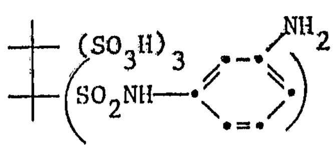 | do. |

Tabelle 3 (Fortsetzung)

| No. | Chromophor | Farbton auf Baumwolle |
|---|---|---|
| 116 | CuPc-(3) 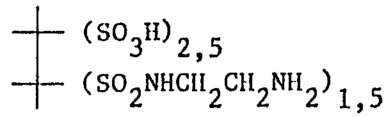 | türkisblau |
| 117 | CuPc-(3) 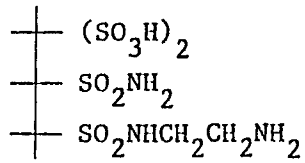 | do. |
| 118 | CuPc-(3) 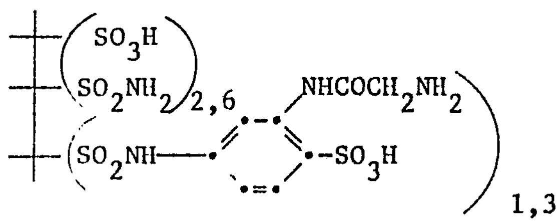 | do. |
| 119 | CuPc-(3) 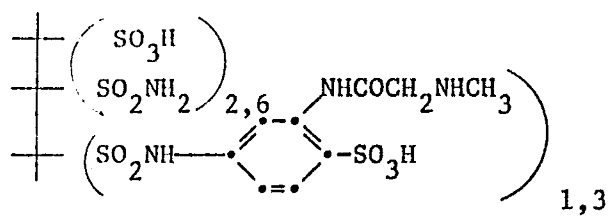 | do. |

Beispiel 17: 16,0 Teile 1-Amino-8-hydroxynaphthalin-3,6-disulfonsäure werden in 400 ml Wasser neutral gelöst und die Lösung auf 0 bis 5°C abgekühlt. Bei dieser Temperatur und pH 4,5 werden 7,1 Teile 2,4,6-Trifluor-1,3,5-triazin innert 15 Minuten zugetropft, wobei der pH der Reaktionslösung durch gleichzeitige Zugabe von 2n Natriumhydroxidlösung schwach kongosauer gehalten wird. Nach Zusatz einer auf pH 5,0 gestellten Mischung von 8,0 Teilen 2-Tauryläthanol in 50 ml Wasser wird der pH der Reaktionsmischung durch ständige Zugabe von 2n Natriumhydroxidlösung zuerst kurze Zeit schwach kongosauer und dann bei 5,0 gehalten. Dabei wird die Temperatur innert 2 bis 3 Stunden auf 20 bis 25°C erhöht. Nach vollständiger Reaktion wird dieses Farbstoffzwischenprodukt bei 0 bis 10°C und pH 5,0 mit 15,2 Teilen diazotierter 2-Aminonaphthalin-1,5-disulfonsäure gekuppelt. Nach vollständiger Kupplungsreaktion bei pH 6,5 wird die Reaktionsmischung geklärt und der gebildete Reaktivfarbstoff der Formel

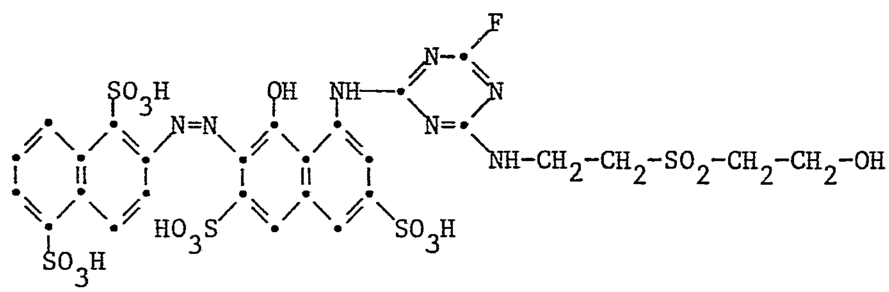

durch Einstreuen von Natriumchlorid ausgesalzen, filtriert und im Vakuum getrocknet. Er färbt Baumwolle in blaustichigen Rottönen, insbesondere als Kaltfärber.

Der so erhaltene Reaktivfarbstoff wird gemäss den Angaben in Beispiel 14 in den Schwefelsäuremonoester umgewandelt, wobei auch zusätzlich das Fluoratom durch eine Hydroxygruppe ersetzt wird. Dies ist ein Reaktivfarbstoff, der Baumwolle insbesondere als Kaltfärber in blaustichigen Rottönen färbt.

Weitere Reaktivfarbstoffe, die Baumwolle insbesondere als Kaltfärber in den in Tabelle 4, Spalte 4, angegebenen Farbtönen färben, werden erhalten, wenn man gemäss den Angaben in Beispiel 17 auf die in Spalte 2 angegebene Kupplungskomponente, die zuerst mit 2,4,6-Trifluor-1,3,5-triazin und dann mit 2-Tauryläthanol umgesetzt wurde, die in Spalte 3 angegebene diazotierte Diazokomponente kuppelt. Die so erhaltenen Reaktivfarbstoffe werden gemäss den Angaben in Beispiel 14 in die Schwefelsäuremonoester umgewandelt, wobei auch zusätzlich das Fluoratom durch eine Hydroxygruppe ersetzt wird. Diese sind Reaktivfarbstoffe die Baumwolle insbesondere als Kaltfärber in den in Tabelle 4, Spalte 4 angegebenen Farbtönen färben.

Tabelle 4

| No. | Kupplungskomponente | Diazokomponente | Farbton auf Baumwolle |
|---|---|---|---|
| 1 | 1-Amino-8-hydroxynaphthalin-3,6-disulfonsäure | 1-Aminobenzol-2-sulfonsäure | rot |
| 2 | 1-Amino-8-hydroxynaphthalin-4,6-disulfonsäure | 1-Aminobenzol-2-sulfonsäure | do. |
| 3 | 1-Amino-8-hydroxynaphthalin-3,6-disulfonsäure | 1-Amino-4-carboxybenzol-2-sulfonsäure | do. |
| 4 | 1-Amino-8.hydroxynaphthalin-3,6-disulfonsäure | 1-Amino-4-methylbenzol-2-sulfonsäure | do. |
| 5 | 1-Amino-8-hydroxynaphthalin-3,6-disulfonsäure | 1-Aminobenzol-2,5-disulfonsäure | do. |
| 6 | 1-Amino-8-hydroxynaphthalin-3,6-disulfonsäure | 2-Aminonaphthalin-1-sulfonsäure | dc. |
| 7 | 1-Amino-8-hydroxynaphthalin-4,6-disulfonsäure | 2-Aminonaphthalin-1,5-disulfonsäure | dc. |
| 8 | 1-Amino-8-hydroxynaphthalin-6-sulfonsäure | 2-Aminonaphthalin-1,5,7-trisulfonsäure | do. |

Beispiel 18: 10,9 Teile des Farbstoffes der Formel

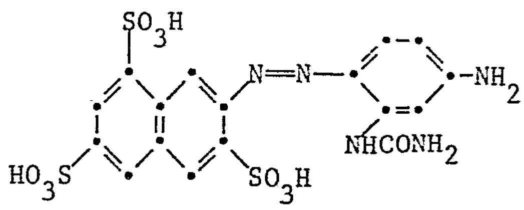

werden in 400 Teilen Wasser mit 2,8 Teilen 2,4,6-Trifluor-1,3,5-triazin gemäss den Angaben in Beispiel 13 umgesetzt. Der eiskalten Reaktionsmischung werden 6,9 Teile Bis-[β-(β-hydroxyäthyl-sulfonyl)-äthyl]-amin zugesetzt. Die Temperatur wird innert 2 bis 3 Stunden auf 20°C erhöht und dabei der pH der Reaktionsmischung durch ständige Zugabe von 2n Natriumhydroxidlösung bei 6,0 bis 6,5 gehalten. Nach vollständiger Reaktion wird der gebildete Reaktivfarbstoff der Formel

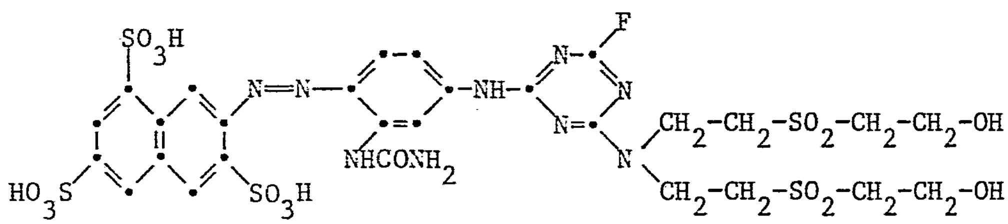

durch Einstreuen von Kaliumchlorid ausgesalzen, filtriert, gewaschen und im Vakuum getrocknet. Er färbt Baumwolle insbesondere als Kaltfärber in rotstichigen Gelbtönen.

Der so erhaltene Reaktivfarbstoff wird gemäss den Angaben in Beispiel 14 in den zweifachen Schwefelsäuremonoester der Formel

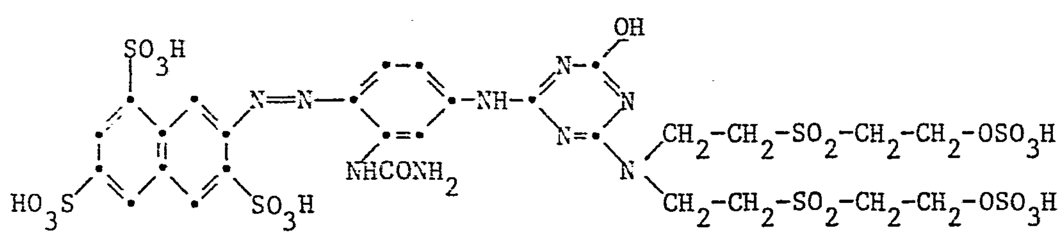

umgewandelt. Dies ist ein Reaktivfarbstoff, der Baumwolle insbesondere als Kaltfärber in rotstichigen Gelbtönen färbt.

Weitere Reaktivfarbstoffe, die Baumwolle insbesondere als Kaltfärber in den in Tabelle 5, Spalte 3, angegebenen Farbtönen färben, werden erhalten, wenn man die in Spalte 2 angegebenen aminogruppenhaltigen Chromophore gemäss den Angaben in Beispiel 18 zuerst mit 2,4,6-Trifluor-1,3,5-triazin und dann mit Bis-[β-(β-hydroxyäthyl-sulfonyl)-äthyl]-amin umsetzt. Die so erhaltenen Reaktivfarbstoffe werden gemäss den Angaben in Beispiel 14 in die zweifachen Schwefelsäuremonoester umgewandelt, wobei auch zusätzlich das Fluoratom durch eine Hydroxygruppe ersetzt wird. Diese sind Reaktivfarbstoffe, die Baumwolle insbesondere als Kaltfärber in den in Tabelle 5, Spalte 3, angegebenen Farbtönen färben.

Tabelle 5

| No. | Chromophor | Farbton auf Baumwolle |
|---|---|---|
| 1 | 2-Aminonaphthalin-3,6,8-trisulfonsäure → 1-Amino-3-methylbenzol | rotstichig gelb |
| 2 | 2-Aminonaphthalin-4,6,8-trisulfonsäure → 1-Amino-3-methylbenzol | do. |
| 3 | 2-Aminonaphthalin-4,6,8-trisulfonsäure → 1-Amino-3-acetylaminobenzol | do. |
| 4 | 1-Amino-4-(2',5'-disulfophenylazo)-naphthalin-6-sulfonsäure → 1-Amino-3-methylbenzol | braun |
| 5 | 1-Amino-4-(2',5'-disulfophenylazo)-naphthalin-6-sulfonsäure → 1-Aminonaphthalin-6-sulfonsäure | do. |
| 6 | 1-Amino-4-(4'-sulfophenylazo)-benzol-2-sulfonsäure → 1-Aminonaphthalin-6-sulfonsäure | do. |
| 7 | 1-Amino-4-(4',6',8'-trisulfonaphthyl- 2'-azo)-naphthalin-6-sulfonsäure → 1-Amino-3-methylbenzol | do. |
| 8 | 1-Amino-4-(2',5'-disulfophenylazo)-naphthalin-6-sulfonsäure → 1-Amino-2,5-dimethylbenzol | do. |
| 9 | 1-Amino-3-acetylaminobenzol-6-sulfonsäure → 1-Aethyl-3-sulfomethyl-4-methyl-6-hydroxy-pyridon-(2)-5-carbonsäureamid (verseift) | gelb |

Tabelle 5 (Fortsetzung)

| No. | Chromophor | Farbton auf Baumwolle |
|---|---|---|
| 10 | 1-Amino-3-acetylaminobenzol-6-sulfonsäure ⟶ 1-Aethyl-3-aminocarbonyl-4-methyl-6-hydroxy-pyridon-(2) (verseift) | gelb |
| 11 | 1-Amino-3-acetylaminobenzol-6-sulfonsäure ⟶ 1-(2'-Methyl-4'-sulfophenyl)-3-carboxy-pyrazolon-(5) (verseift) | do. |
| 12 | 1-Amino-3-acetylaminobenzol-6-sulfonsäure ⟶ 1-(4',8'-Disulfonaphthyl-[2'])-3-methyl-pyrazolon-(5) (verseift) | do. |
| 13 | 2-Aminonaphthalin-1,5-disulfonsäure ⟶ 2-Acetyl-amino-5-hydroxynaphthalin-7-sulfonsäure (verseift) | orange |
| 14 | 2-Aminonaphthalin-3,6,8-trisulfonsäure ⟶ 2-Acetylamino-5-hydroxynaphthalin-7-sulfon-säure (verseift) | do. |
| 15 | 2-Aminonaphthalin-1,5,7-trisulfonsäure ⟶ 1-Acetylamino-5-hydroxynaphthalin-7-sulfon-säure (verseift) | do. |
| 16 | 1-Amino-4-methoxybenzol-2,5-disulfonsäure ⟶ 2-Amino-5-hydroxynaphthalin-7-sulfonsäure | scharlach |
| 17 | 1-Amino-4-methoxybenzol-2-sulfonsäure ⟶ 2-Amino-5-hydroxynaphthalin-7-sulfonsäure | do. |
| 18 | 1-Amino-4-methoxybenzol-2-sulfonsäure ⟶ 2-Methylamino-5-hydroxynaphthalin-7-sulfonsäure | do. |
| 19 | 1-Aminobenzol-2-sulfonsäure ⟶ 1-(4'-Nitro-benzoylamino)-8-hydroxynaphthalin-3,6-disulfon-säure (reduziert) | blaustichig rot |
| 20 | 1-Amino-3-acetylaminobenzol-6-sulfonsäure ⟶ 1-Benzoylamino-8-hydroxynaphthalin-3,6-disulfonsäure (verseift) | do. |
| 21 | 1-Amino-3-acetylaminobenzol-6-sulfonsäure ⟶ 1-Acetylamino-8-hydroxynaphthalin-3,6-disulfon-säure (verseift) | do. |
| 22 | 1-Amino-3-acetylaminobenzol-6-sulfonsäure ⟶ 1-Benzoylamino-8-hydroxynaphthalin-4,6-disulfonsäure (verseift) | do. |

Tabelle 5 (Fortsetzung)

| No. | Chromophor | Farbton auf Baumwolle |
|---|---|---|
| 23 | 1-Amino-3-acetylaminobenzol-6-sulfonsäure ⟶ 1-Acetylamino-8-hydroxynaphthalin-4,6-di sulfonsäure (verseift) | gelbstichig rot |
| 24 | 1-Amino-4-acetylaminobenzol-2-sulfonsäure ⟶ saure 2-Amino-8-hydroxynaphthalin-3,6-disulfonsäure (verseift) | blaustichig rot |
| 25 | 1-Amino-4-acetylaminobenzol-2-sulfonsäure ⟶ saure 2-Amino-8-hydroxynaphthalin-6-sulfonsäure (verseift) | do. |
| 26 | 2-Aminonaphthalin-1,5-disulfonsäure ⟶ 1-Amino-8-hydroxynaphthalin-3,6-disulfonsäure | do. |
| 27 | 3-Methoxy-4-amino-6-methylazobenzol-2',5'-disulfonsäure ⟶ 2-Methylamino-5-hydroxynaphthalin-7-sulfonsäure (entmethylierend gekupfert) | marineblau |
| 28 | 3-Methoxy-4-amino-6-methylazobenzol-2',4'-disulfonsäure ⟶ 2-Amino-5-hydroxynaphthalin-1,7-disulfonsäure (entmethylierend gekupfert) | do. |
| 29 | 1-Amino-3-acetylaminobenzol-6-sulfonsäure ⟶ 1-Amino-8-hydroxy-2-(4'-sulfophenylazo)-naphthalin-3,6-disulfonsäure (verseift) | blau |
| 30 | N-(2-Carboxy-4-sulfophenyl)-N'-(2'-hydroxy-3'-amino-5'-sulfophenyl)-ms-phenylformazan (Cu-Komplex) | do. |
| 31 | N-(2-Carboxy-5-sulfophenyl)-N'-(2'-hydroxy-3'-amino-5'-sulfophenyl)-ms-phenylformazan (Cu-Komplex) | do. |

Tabelle 5 (Fortsetzung)

| No. | Chromophor | Farbton auf Baumwolle |
| --- | --- | --- |
| 32 | 0,5 Aequivalent 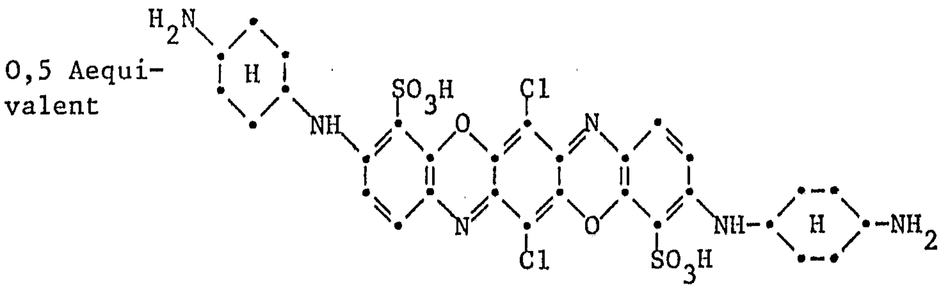 | marineblau |
| 33 | 0,5 Aequivalent 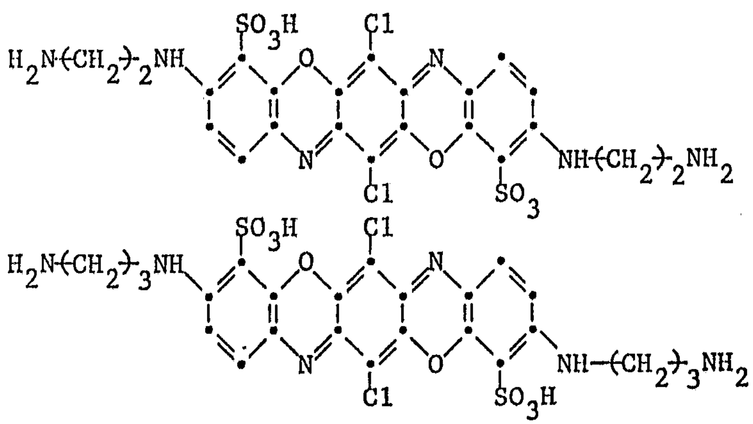 | do. |
| 34 | 0,5 Aequivalent | do. |
| 35 | 0,5 Aequivalent 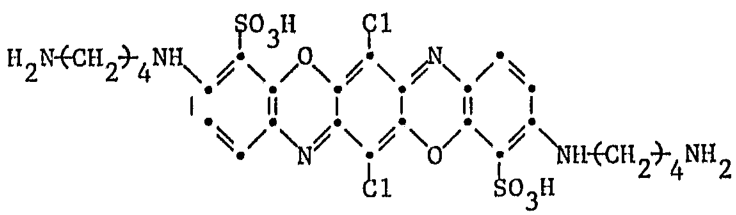 | do |

Beispiel 19: 10,9 Teile des Farbstoffes der Formel

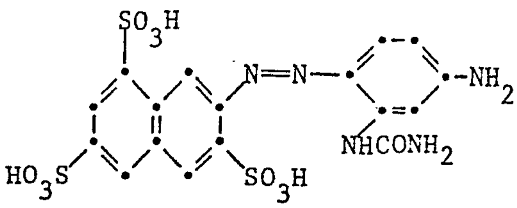

werden in 400 Teilen Wasser mit 2,8 Teilen 2,4,6-Trifluor-1,3,5-triazin gemäss den Angaben in Beispiel 13 umgesetzt. Der eiskalten Reaktionsmischung werden 7,0 Teile des nachfolgend beschriebenen 2-Tauryläthanol-schwefelsäuremonoesters zugesetzt. Die Temperatur wird innert 2 bis 3 Stunden auf 20°C erhöht und dabei der pH der Reaktionsmischung durch ständige Zugabe von 2n Natriumhydroxidlösung bei 6,0 bis 6,5 gehalten. Nach vollständiger Reaktion wird der gebildete Reaktivfarbstoff der Formel

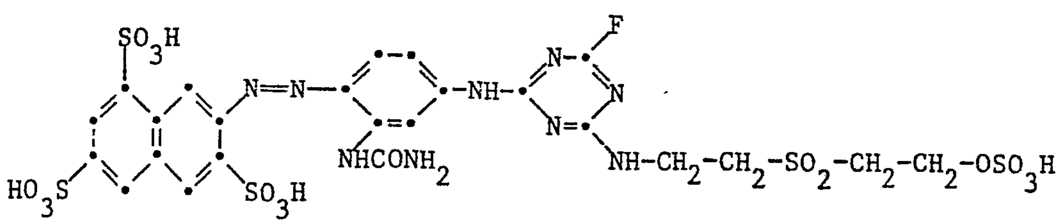

durch Einstreuen von Kaliumchlorid ausgesalzen, filtriert, gewaschen und im Vakuum getrocknet. Er stellt ein oranges Pulver dar und färbt Baumwolle in rotstichigen Gelbtönen, insbesondere als Kaltfärber.

Elementaranalyse einer 70,5 prozentigen Charge:

| | | | | |
|---|---|---|---|---|
| ber. | C 23,27% | N 10,18% | S 12,94% | F 1,53% |
| gef. | C 23,27% | N 9,94% | S 12,72% | F** 1,48% |

Zur Ueberführung in den Schwefelsäuremonoester werden 153 Teile 2-Tauryläthanol zu 380 Teilen Schwefelsäuremonohydrat getropft und dabei die Temperatur der Reaktionsmischung durch Aussenkühlung zwischen 10 und 15°C gehalten. Nach 2 Stunden wird auf 1600 Teile Eis gegossen und der pH der Reaktionsmischung durch Einstreuen von Calciumcarbonat auf 5,0 gestellt. Das Calciumsulfat wird abfiltriert

und der 2-Tauryläthanol-schwefelsäuremonoester durch schonendes Eindampfen des Filtrates im Vakuum oder durch Gefriertrocknen isoliert. Gemäss dieser Vorschrift wird das unten erwähnte Bis-[β-(β-sulfatoäthylsulfonyl)-äthyl]-amin aus Bis-[β-(β-hydroxyäthylsulfonyl)-äthyl]-amin hergestellt.

Beispiel 20: Analog Beispiel 19 wird der Reaktivfarbstoff der Formel

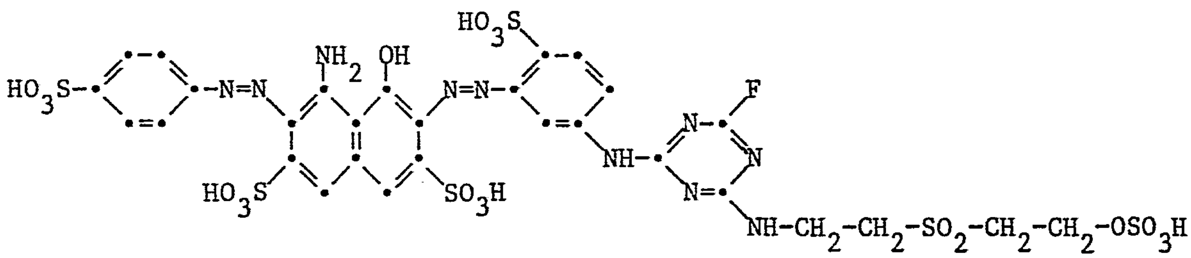

erhalten, der Baumwolle insbesondere als Kaltfärber in Blautönen färbt.

Elementaranalyse einer 66,6 prozentigen Charge:

| | | | | |
|---|---|---|---|---|
| ber. | C 22,5% | N 9,1% | S 12,4% | F 1,2% |
| gef. | C 22,5% | N 9,1% | S 12,0% | F** 1,4%. |

Weitere Reaktivfarbstoffe, die Baumwolle insbesondere als Kaltfärber in den in Tabelle 6, Spalte 3, angegebenen Farbtönen färben, werden erhalten, wenn man die in Spalte 2 angegebenen aminogruppenhaltigen Chromophore gemäss den Angaben in Beispiel 19 zuerst mit 2,4,6-Trifluor-1,3,5-triazin und dann mit 2-Tauryläthanol-schwefelsäuremonoester umsetzt.

Tabelle 6

| No. | Chromophor | Farbton auf Baumwolle |
|---|---|---|
| 1 | 2-Aminonaphthalin-1,5-disulfonsäure ⟶ 1-Amino-3-acetylaminobenzol | rotstichig gelb |
| 2 | 2-Aminonaphthalin-1,5-disulfonsäure ⟶ 3-Amino-phenylharnstoff | do. |
| 3 | 2-Aminonaphthalin-1,5-disulfonsäure ⟶ 1-Amino-3-hydroxyacetylaminobenzol | do. |
| 4 | 2-Aminonaphthalin-5,7-disulfonsäure ⟶ 1-Amino 3-acetylaminobenzol | do. |
| 5 | 2-Aminonaphthalin-5,7-disulfonsäure ⟶ 3-Amino-phenylharnstoff | do. |
| 6 | 2-Aminonaphthalin-4,8-disulfonsäure ⟶ 1-Amino-3-methylbenzol | gelb |
| 7 | 2-Aminonaphthalin-4,8-disulfonsäure ⟶ 1-Amino-3-acetylaminobenzol | do. |
| 8 | 2-Aminonaphthalin-3,6-disulfonsäure ⟶ 1-Amino-3-acetylaminobenzol | rotstichig gelb |
| 9 | 2-Aminonaphthalin-3,6-disulfonsäzre ⟶ 3-Amino-phenylharnstoff | do. |
| 10 | 2-Aminonaphthalin-6,8-disulfonsäure ⟶ 1-Amino-3-acetylaminobenzol | do. |
| 11 | 2-Aminonaphthalin-6,8-disulfonsäure ⟶ 1-Amino-2-methoxynaphthalin-6-sulfonsäure | do. |
| 12 | 2-Aminonaphthalin-3,6,8-trisulfonsäure ⟶ 1-Amino-3-acetylaminobenzol | do. |
| 13 | 2-Aminonaphthalin-3,6,8-trisulfonsäure ⟶ 1-Amino-3-methylbenzol | do. |
| 14 | 2-Aminonaphthalin-4,6,8-trisulfonsäure ⟶ 1-Amino-3-methylbenzol | do. |
| 15 | 2-Aminonaphthalin-4,6,8-trisulfonsäure ⟶ 1-Amino-3-acetylaminobenzol | do. |
| 16 | 1-Aminobenzol-2,5-disulfonsäure ⟶ 1-Amino-naphthalin-6-sulfonsäure | do. |
| 17 | 1-Aminobenzol-2,5-disulfonsäure ⟶ 1-Amino-naphthalin-6-sulfonsäure ⟶ 1-Aminonaphthalin-8-sulfonsäure | rotstichig braun |

Tabelle 6 (Fortsetzung)

| No. | Chromophor | Farbton auf Baumwolle |
|---|---|---|
| 18 | 1-Aminonaphthalin-2,5,7-trisulfonsäure ⟶ 1-Aminonaphthalin-6-sulfonsäure ⟶ 1-Aminonaphthalin-8-sulfonsäure | violettstichig braun |
| 19 | 1-Aminonaphthalin-2,5,7-trisulfonsäure ⟶ 1-Amino-2,5-dimethylbenzol ⟶ 1-Aminonaphthalin-6-sulfonsäure | rotstichig braun |
| 20 | 1-Amino-4-(2',5'-disulfophenylazo)-naphthalin-6-sulfonsäure ⟶ 1-Amino-3-methylbenzol | braun |
| 21 | 1-Amino-4-(2',5'-disulfophenylazo)-naphthalin-6-sulfonsäure ⟶ 1-Aminonaphthalin-6-sulfonsäure | do. |
| 22 | 1-Amino-4-(4'-sulfophenylazo)-benzol-2-sulfonsäure ⟶ 1-Aminonaphthalin-6-sulfonsäure | do- |
| 23 | 1-Amino-4-(4',6',8'-trisulfonaphthyl-2'-azo)-naphthalin-6-sulfonsäure ⟶ 1-Amino-3-methylbenzol | do. |
| 24 | 1-Amino-4-(2',5'-disulfophenylazo)-naphthalin-6-sulfonsäure ⟶ 1-Amino-2,5-dimethylbenzol | do. |
| 25 | 4-Aminoazobenzol-3,4'-disulfonsäure ⟶ 1-Aminonaphthalin-6-sulfonsäure | gelbbraun |
| 26 | 1,4-Diaminobenzol-2,5-disulfonsäure ⟶ 1-Aethyl-3-sulfomethyl-4-methyl-6-hydroxypyridon-(2)-5-carbonsäureamid | gelb |
| 27 | 1-Amino-3-acetylaminobenzol-6-sulfonsäure ⟶ 1-Aethyl-3-sulfomethyl-4-methyl-6-hydroxypyridon-(2)-5-carbonsäureamid (verseift) | do. |
| 28 | 1-Amino-3-acetylaminobenzol-6-sulfonsäure ⟶ 1-Aethyl-3-aminocarbonyl-4-methyl-6-hydroxypyridon-(2) (verseift) | do. |
| 29 | 1-Amino-3-acetylaminobenzol-6-sulfonsäure ⟶ 1-(2',5'-Dichlor-4'-sulfophenyl)-3-methylpyrazolon-(5) (verseift) | do. |
| 30 | 1-Amino-3-acetylaminobenzol-6-sulfonsäure ⟶ 1-(2',5'-Disulfophenyl)-3-methyl-pyrazolon-(5) (verseift) | do. |

Tabelle 6 (Fortsetzung)

| No. | Chromophor | Farbton auf Baumwolle |
|---|---|---|
| 31 | 1-Amino-3-acetylaminobenzol-6-sulfonsäure ⟶ 1-(4'-Sulfophenyl)-3-carboxy-pyrazolon-(5) (verseift) | gelb |
| 32 | 1-Amino-3-acetylaminobenzol-6-sulfonsäure ⟶ 1-(2'-Methyl-4'-sulfophenyl)-3-carboxy-pyrazolon-(5) (verseift) | do. |
| 33 | 1-Amino-3-acetylaminobenzol-6-sulfonsäure ⟶ 1-(4',8'-Disulfonaphthyl-[2'])-3-methyl-pyrazolon-(5) (verseift) | do. |
| 34 | 1-Aminobenzol-2,5-disulfonsäure ⟶ 1-(3'-Amino-phenyl)-3-methyl-pyrazolon-(5) | do. |
| 35 | 1-Aminobenzol-2,5-disulfonsäure ⟶ 2-Acetyl-amino-5-hydroxynaphthalin-7-sulfonsäure (verseift) | orange |
| 36 | 1-Aminobenzol-2-sulfonsäure ⟶ 2-Amino-5-hydroxynaphthalin-1,7-disulfonsäure | do. |
| 37 | 2-Aminonaphthalin-1,5-disulfonsäure ⟶ 2-Acetyl-amino-5-hydroxynaphthalin-7-sulfonsäure (verseift) | do. |
| 38 | 2-Aminonaphthalin-3,6,8-trisulfonsäure ⟶ 2-Acetylamino-5-hydroxynaphthalin-7-sulfon-säure (verseift) | do. |
| 39 | 2-Aminonaphthalin-1,5,7-trisulfonsäure ⟶ 1-Acetylamino-5-hydroxynaphthalin-7-sulfon-säure (verseift) | do. |
| 40 | 1-Amino-4-methoxybenzol-2,5-disulfonsäure ⟶ 2-Amino-5-hydroxynaphthalin-7-sulfonsäure | scharlach |
| 41 | 1-Amino-4-methoxybenzol-2-sulfonsäure ⟶ 2-Amino-5-hydroxynaphthalin-7-sulfonsäure | do. |
| 42 | 1-Aminobenzol-2-sulfonsäure ⟶ 1-(4'-Nitro-benzoylamino)-8-hydroxynaphthalin-3,6-disulfon-säure (reduziert) | blaustichig rot |
| 43 | 1-Aminobenzol-2,5-disulfonsäure ⟶ 1-(3'-Nitro-benzoylamino -8- hydroxynaphthalin-4,6-disulfon-säure (reduziert) | do. |

Tabelle 6 (Fortsetzung)

| No. | Chromophor | Farbton auf Baumwolle |
|---|---|---|
| 44 | 2-Amino-5-aminomethyl-naphthalin-1-sulfonsäure → 1-Benzoylamino-8-hydroxynaphthalin-3,6-disulfonsäure | blaustichig rot |
| 45 | 2-Aminonaphthalin-1,5-disulfonsäure → 1-(4'-Nitrobenzoylamino)-8-hydroxynaphthalin-3,6-disulfonsäure (reduziert) | do. |
| 46 | 1-Amino-3-acetylaminobenzol-6-sulfonsäure → 1-Benzoylamino-8-hydroxynaphthalin-3,6-disulfonsäure (verseift) | do. |
| 47 | 1-Amino-3-acetylaminobenzol-6-sulfonsäure → 1-Acetylamino-8-hydroxynaphthalin-3,6-disulfonsäure (verseift) | do. |
| 48 | 1-Amino-3-acetylaminobenzol-6-sulfonsäure → 1-Benzoylamino-8-hydroxynaphthalin-4,6-disulfonsäure (verseift) | do. |
| 49 | 1-Amino-3-acetylaminobenzol-6-sulfonsäure → 1-Acetylamino-8-hydroxynaphthalin-4,6-disulfonsäure (verseift) | gelbstichig rot |
| 50 | 1-Amino-4-acetylaminobenzol-2-sulfonsäure → saure 2-Amino-8-hydroxynaphthalin-3,6-disulfonsäure (verseift) | blaustichig rot |
| 51 | 1-Amino-4-acetylaminobenzol-2-sulfonsäure → saure 2-Amino-8-hydroxynaphthalin-6-sulfonsäure (verseift) | do. |
| 52 | 1-Amino-4-methoxybenzol-2-sulfonsäure → 1-Amino-8-hydroxynaphthalin-3,6-disulfonsäure | rotstichig violett |
| 53 | 1-Amino-4-methoxybenzol-2-sulfonsäure → 1-Amino-8-hydroxynaphthalin-6-sulfonsäure | do. |
| 54 | 1-Hydroxy-2-aminobenzol-4-sulfonsäure → 2-Amino-5-hydroxynaphthalin-7-sulfonsäure (Cu-Komplex) | rubin |
| 55 | 1-Hydroxy-2-aminobenzol-4,6-disulfonsäure → 2-Amino-5-hydroxynaphthalin-7-sulfonsäure (Cu-Komplex) | do. |
| 56 | 1-Hydroxy-2-aminobenzol-4,6-disulfonsäure → 2-Aethylamino-5-hydroxynaphthalin-7-sulfonsäure (Cu-Komplex) | do. |

Tabelle 6 (Fortsetzung)

| No. | Chromophor | Farbton auf Baumwolle |
|---|---|---|
| 57 | 1-Hydroxy-2-aminobenzol-4,6-disulfonsäure → 2-Amino-8-hydroxynaphthalin-3,6-disulfonsäure (Cu-Komplex) | rubin |
| 58 | 1-Hydroxy-2-aminobenzol-4,6-disulfonsäure → 1-Amino-8-hydroxynaphthalin-3,6-disulfonsäure (Cu-Komplex) | violett |
| 59 | 1-Hydroxy-2-aminobenzol-4,6-disulfonsäure → 1-Amino-8-hydroxynaphthalin-4,6-disulfonsäure (Cu-Komplex) | do. |
| 60 | 1-Hydroxy-2-amino-4-acetylaminobenzol-6-sulfonsäure → 1-Amino-8-hydroxynaphthalin-2,4-disulfonsäure (Cu-Komplex) (verseift) | blau |
| 61 | 1-Hydroxy-2-amino-6-acetylaminobenzol-4-sulfonsäure → 1-Amino-8-hydroxynaphthalin-2,4-disulfonsäure (verseift) (Cu-Komplex) | do. |
| 62 | 1-Amino-2-hydroxy-6-nitronaphthalin-4-sulfonsäure → 1-Amino-8-hydroxynaphthalin-2,4-disulfonsäure (reduziert) (Cu-Komplex) | do. |
| 63 | 1-Amino-2-hydroxy-6-nitronaphthalin-4-sulfonsäure → 1-Amino-8-hydroxynaphthalin-2,4,6-trisulfonsäure (reduziert) (Cu-Komplex) | do. |
| 64 | 2-Amino-1-hydroxynaphthalin-4,8-disulfonsäure → 1-Amino-8-hydroxynaphthalin-3,6-disulfonsäure (Cu-Komplex) | do. |
| 65 | 2-Aminonaphthalin-4,8-disulfonsäure → 2-Hydroxy-3-aminonaphthalin-5,7-disulfonsäure (oxydierend gekupfert) | do. |
| 66 | 3-Methoxy-4-amino-6-methylazobenzol-2',5'-disulfonsäure → 2-Methylamino-5-hydroxynaphthalin-7-sulfonsäure (entmethylierend gekupfert) | marineblau |
| 67 | 3-Methoxy-4-amino-6-methylazobenzol-2',4'-disulfonsäure → 2-Amino-5-hydroxynaphthalin-1,7-disulfonsäure (entmethylierend gekupfert) | do. |
| 68 | 1-Amino-4-(3'-amino-2',4',6'-trimethylphenylamino)-anthrachinon-2,5'-disulfonsäure | blau |

Tabelle 6 (Fortsetzung)

| No. | Chromophor | Farbton auf Baumwolle |
|---|---|---|
| 69 | 1-Amino-4-(2',6'-dimethyl-3'-aminomethyl-phenylamino)-anthrachinon-2,5'-disulfonsäure | rotstichig blau |
| 70 | 1-Amino-4-(4'-methyl-2'-aminomethyl-phenylamino)-anthrachinon-2,6'-disulfonsäure | do- |
| 71 | 1-Amino-4-(5'-amino-phenylamino)-anthrachinon-2,2',4'-trisulfonsäure | blau |
| 72 | 1-Amino-4-(4'-amino-phenylamino)-anthrachinon-2,3'-disulfonsäure | do. |
| 73 | 1-Amino-4-(4'-amino-phenylamino)-anthrachinon-2,2'-disulfonsäure | do. |
| 74 | 1-Amino-4-(3'-amino-phenylamino)-anthrachinon-2,4'-disulfonsäure | do. |
| 75 | 1-Amino-4-(2'-methyl-3'-amino-phenylamino)-anthrachinon-2,5'-disulfonsäure | do. |
| 76 | 1-Amino-4-(2'-methyl-3'-amino-phenylamino)-anthrachinon-2,6,5'-trisulfonsäure | grünstichig blau |
| 77 | 1-Amino-4-(5'-aminomethyl-phenylamino)-anthrachinon-2,2',4'-trisulfonsäure | blau |
| 78 | 1-A mino-4-(4'-amino-cyclohexylamino)-anthrachinon-2,6-disulfonsäure | do. |
| 79 | 1-Amino-4-(4'-amino-cyclohexylamino)-anthrachinon-2-sulfonsäure | do. |
| 80 | 1-Amino-4-(3'-amino-4'-methyl-cyclohexylamino)-anthrachinon-2-sulfonsäure | do. |
| 81 | 1-Amino-4-(3'-amino-2'-methyl-cyclohexylamino)-anthrachinon-2-sulfonsäure | do. |
| 82 | 1-Amino-4-(4'-amino-3'-methyl-cyclohexylamino)-anthrachinon-2-sulfonsäure | do. |
| 83 | 1-Amino-4-(4'-aminomethyl-cyclohexylamino)-anthrachinon-2-sulfonsäure | do. |
| 84 | 1-Amino-4-(3'-aminomethyl-cyclohexylamino)-anthrachinon-2-sulfonsäure | do. |
| 85 | 1-Amino-4-(2'-amino-äthylamino)-anthrachinon-2-sulfonsäure | do. |

Tabelle 6 (Fortsetzung)

| No. | Chromophor | Farbton auf Baumwolle |
|---|---|---|
| 86 | 1-Amino-4-(2'-methylamino-äthylamino)-anthrachinon-2-sulfonsäure | blau |
| 87 | 1-Amino-4-(3'-aminopropylamino)-anthrachinon-2-sulfonsäure | do. |
| 88 | 1-Amino-4-(3'-methylaminopropylamino)-anthrachinon-2-sulfonsäure | do. |
| 89 | 1-Amino-4-(4'-aminobutylamino)-anthrachinon-2-sulfonsäure | do. |
| 90 | N-(2-Carboxy-4-sulfophenyl)-N'-(2'-hydroxy-3'-amino-5'-sulfophenyl)-ms-phenylformazan (Cu-Komplex) | do. |
| 91 | N-(2-Carboxy-5-sulfophenyl)-N'-(2'-hydroxy-3'-amino-5'-sulfophenyl)-ms-phenylformazan (Cu-Komplex) | do. |
| 92 | N-(2-Carboxy-4-sulfophenyl)-N'-(2'-hydroxy-3'-amino-5'-sulfophenyl)-ms-(2"-chlor-5"-sulfophenyl)-formazan (Cu-Komplex) | do. |
| 93 | N-(2-Carboxy-4-aminophenyl)-N'-(2'-hydroxy-3',5'-disulfophenyl)-ms-(3"-sulfophenyl)-formazan (Cu-Komplex | do. |
| 94 | N-(2-Carboxy-5-sulfophenyl)-N'-(2'-hydroxy-3',5'-disulfophenyl)-ms-(3"-aminophenyl)-formazan (Cu-Komplex) | grünstichig blau |
| 95 | N-(2-Hydroxy-3-amino-5-sulfophenyl)-N'-(2'hydroxy-4'-sulfophenyl)-ms-(2"-sulfophenyl)-formazan (Cu-Komplex) | marineblau |
| 96 | N-(2-Hydroxy-5-sulfophenyl)-N'-(2'-hydroxy-3',5'-disulfophenyl)-ms-(4"-aminophenyl)-formazan (Cu-Komplex | blau |
| 97 | N-(2-Hydroxy-5-amino-3-sulfophenyl)-N'-(2',5'-disulfophenyl)-ms-phenylformazan (Cu-Komplex) | do. |
| 98 | N-(2-Hydroxy-4,6-disulfophenyl)-N'-(2',4'-disulfophenyl)-ms-(3"-aminophenyl)-formazan (Cu-Komplex) | do. |
| 99 | N-(2-Hydroxy-4-sulfophenyl)-N'-(4'-amino-2'-sulfophenyl)-ms-(4"-chlor-3"-sulfophenyl)-formazan (Cu-Komplex) | do. |

Tabelle 6 (Fortsetzung)

| No. | Chromophor | Farbton auf Baumwolle |
|---|---|---|
| 100 | 0,5 Aequivalent 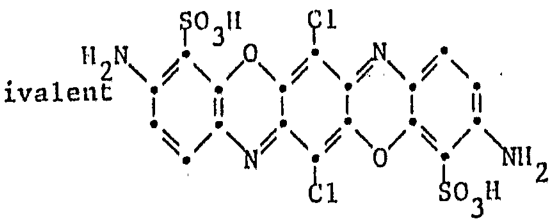 | rotstichig blau |
| 101 | 0,5 Aequivalent 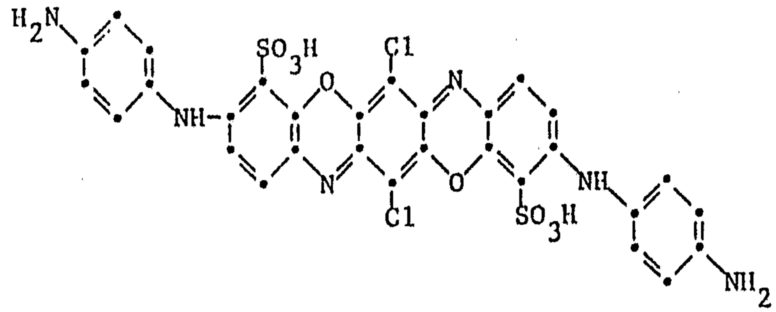 | blau |
| 102 | 0,5 Aequivalent 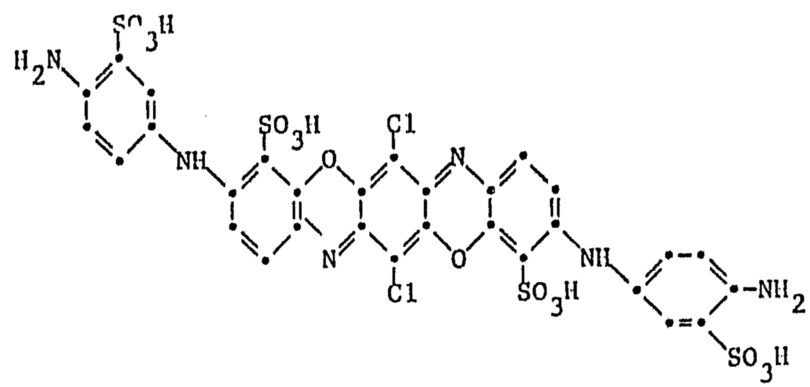 | do. |

Tabelle 6 (Fortsetzung)

| No. | Chromophor | Farbton auf Baumwolle |
| --- | --- | --- |
| 103 | 0,5 Aequivalent 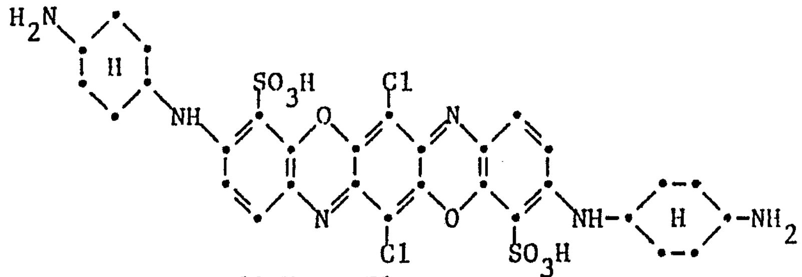 | blau |
| 104 | 0,5 Aequivalent 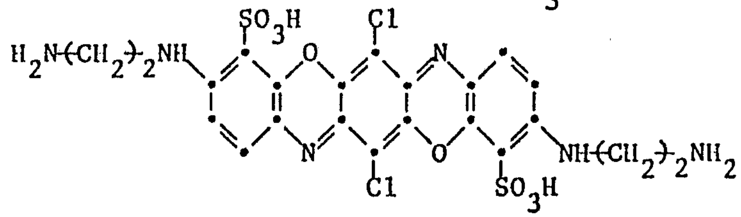 | do. |
| 105 | 0,5 Aequivalent 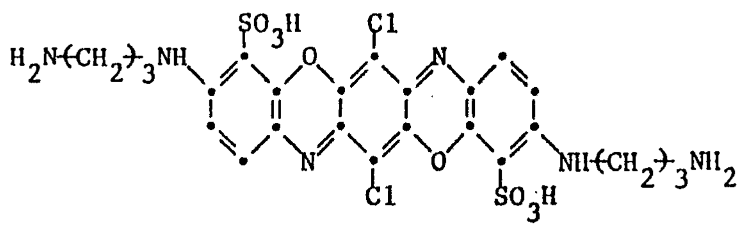 | do. |

Tabelle 6 (Fortsetzung)

| No. | Chromophor | Farbton auf Baumwolle |
|---|---|---|
| 106 | 0,5 Aequivalent $H_2N\text{-}(CH_2)_4\text{-}NH$ 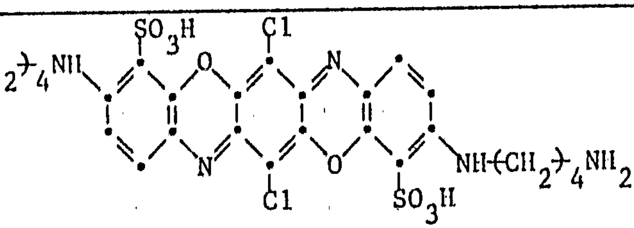 | blau |
| 107 | CuPc-(3) 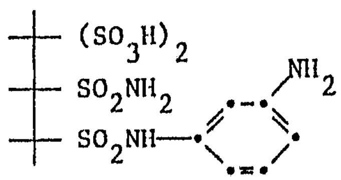 | türkisblau |
| 108 | NiPc-(3) 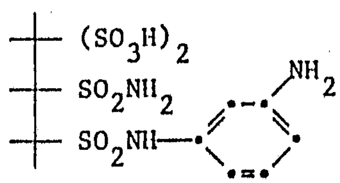 | do. |
| 109 | CuPc-(3) 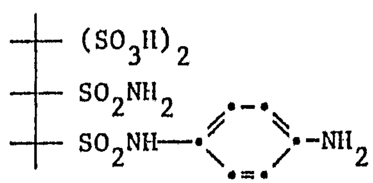 | do. |

Tabelle 6 (Fortsetzung

| No. | Chromophor | | Farbton auf Baumwolle |
|---|---|---|---|
| 110 | CuPc(3) | 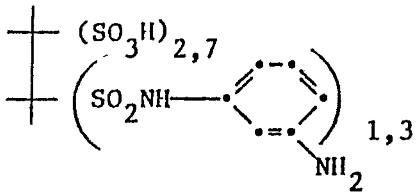 | türkisblau |
| 111 | CuPc-(3) | 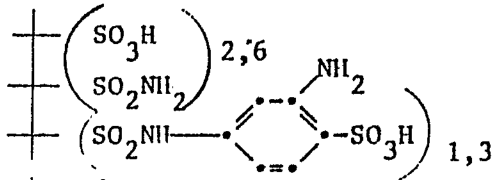 | do. |
| 112 | CuPc-(4) | 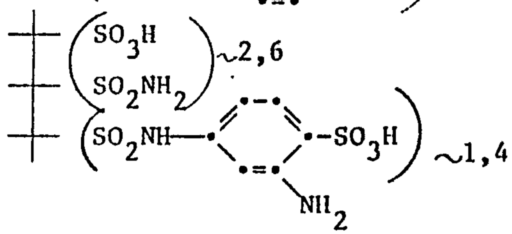 | do. |
| 113 | CuPc-(4) | 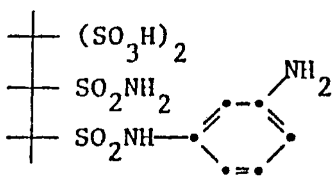 | do. |
| 114 | NiPc-(4) | 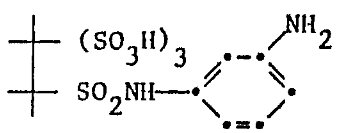 | do. |

Tabelle 6 (Fortsetzung)

| No. | Chromophor | Farbton auf Baumwolle |
|---|---|---|
| 115 | CuPc-(3) $-(SO_3H)_{2,5}$ <br> $-(SO_2NHCH_2CH_2NH_2)_{1,5}$ | türkisblau |
| 116 | CuPc-(3) $-(SO_3H)_2$ <br> $-SO_2NH_2$ <br> $-SO_2NHCH_2CH_2NH_2$ | do. |
| 117 | CuPc-(3) 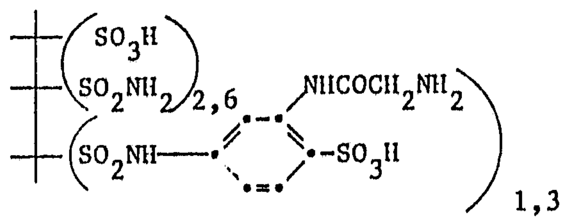 | do. |
| 118 | CuPc-(3) 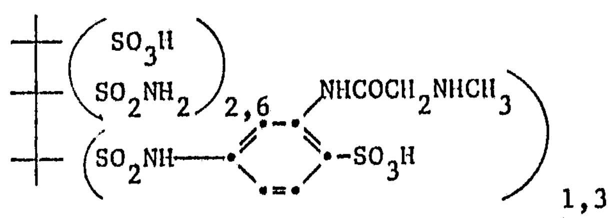 | do. |

Beispiel 21: 16,0 Teile 1-Amino-8-hydroxynaphthalin-3,6-disulfonsäure werden in 400 ml Wasser neutral gelöst und die Lösung auf 0 bis 5°C abgekühlt. Bei dieser Temperatur und pH 4,5 werden 7,1 Teile 2,4,6-Trifluor-1,3,5-triazin innert 15 Minuten zugetropft, wobei der pH der Reaktionslösung durch gleichzeitige Zugabe von 2n Natriumhydroxidlösung schwach kongosauer gehalten wird. Nach Zusatz einer auf pH 5,0 gestellten Mischung von 16,3 Teilen 2-Tauryläthanol-schwefelsäuremonoester in 50 ml Wasser wird der pH der Reaktionsmischung durch ständige Zugabe von 2n Natriumhydroxidlösung zuerst kurze Zeit schwach kongosauer und dann bei 5,0 gehalten. Dabei wird die Temperatur innert 2 bis 3 Stunden auf 20 bis 25°C erhöht. Nach vollständiger Reaktion wird dieses Farbstoffzwischenprodukt bei 0 bis 10°C und pH 5,0 mit 15,2 Teilen diazotierter 2-Aminonaphthalin-1,5-disulfonsäure gekuppelt. Nach vollständiger Kupplungsreaktion bei pH 6,5 wird die Reaktionsmischung geklärt und der gebildete Reaktivfarbstoff der Formel

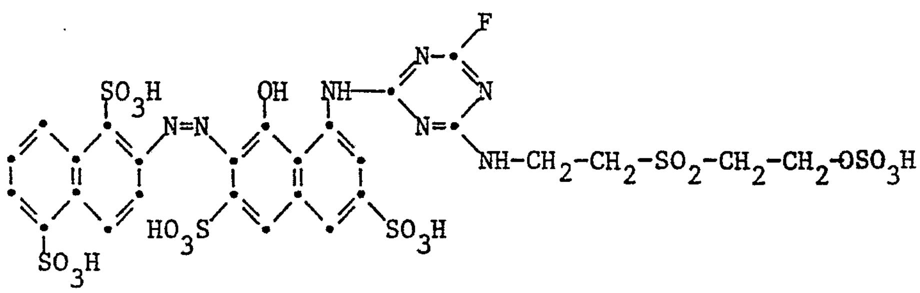

durch Einstreuen von Natriumchlorid ausgesalzen, filtriert und im Vakuum getrocknet. Es färbt Baumwolle in blaustichigen Rottönen, insbesondere als Kaltfärber.

Weitere Reaktivfarbstoffe, die Baumwolle insbesondere als Kaltfärber in den in Tabelle 7, Spalte 4, angegebenen Farbtönen färben, werden erhalten, wenn man gemäss den Angaben in Beispiel 21 auf die in Spalte 2 angegebene Kupplungskomponente, die zuerst mit 2,4,6-Trifluor-1,3,5-triazin und dann mit 2-Tauryläthanol-schwefelsäuremonoester umgesetzt wurde, die in Spalte 3 angegebene diazotierte Diazokomponente kuppelt.

Tabelle 7

| No. | Kupplungskomponente | Diazokomponente | Farbton auf Baumwolle |
|---|---|---|---|
| 1 | 1-Amino-8-hydroxynaphthalin-3,6-disulfonsäure | 1-Aminobenzol-2-sulfonsäure | rot |
| 2 | 1-Amino-8-hydroxynaphthalin-4,6-disulfonsäure | 1-Aminobenzol-2-sulfonsäure | do. |
| 3 | 1-Amino-8-hydroxynaphthalin-3,6-disulfonsäure | 1-Amino-4-carboxybenzol-2-sulfonsäure | do. |
| 4 | 1-Amino-8-hydroxynaphthalin-3,6-disulfonsäure | 1-Amino-4-methylbenzol-2-sulfonsäure | do. |
| 5 | 1-Amino-8-hydroxynaphthalin-3,6-disulfonsäure | 1-Aminobenzol-2,5-disulfonsäure | do- |
| 6 | 1-Amino-8-hydroxynaphthalin-3,6-disulfonsäure | 2-Aminonaphthalin-1-sulfonsäure | do- |
| 7 | 1-Amino-8-hydroxynaphthalin-4,6-disulfonsäure | 2-Aminonaphthalin-1,5-disulfonsäure | do- |
| 8 | 1-Amino-8-hydroxynaphthalin-6-sulfonsäure | 2-Aminonaphthalin-1,5,7-trisulfonsäure | do. |

Beispiel 22: 10,9 Teile des Farbstoffes der Formel

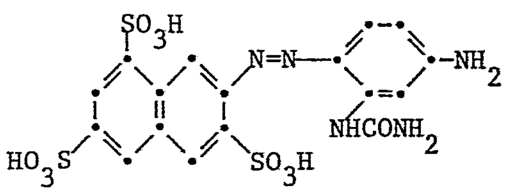

werden in 400 Teilen Wasser mit 2,8 Teilen 2,4,6-Trifluor-1,3,5-triazin gemäss den Angaben in Beispiel 13 umgesetzt. Der eiskalten Reaktionsmischung werden 13,5 Teile Bis-[β-(β-sulfatoäthyl-sulfonyl)-äthyl]-amin zugesetzt. Die Temperatur wird innert 2 bis 3 Stunden auf 20°C erhöht und dabei der pH der Reaktionsmischung durch ständige Zugabe von 2n Natriumhydroxidlösung bei 6,0 bis 6,5 gehalten. Nach vollständiger Reaktion wird der gebildete Reaktivfarbstoff der Formel

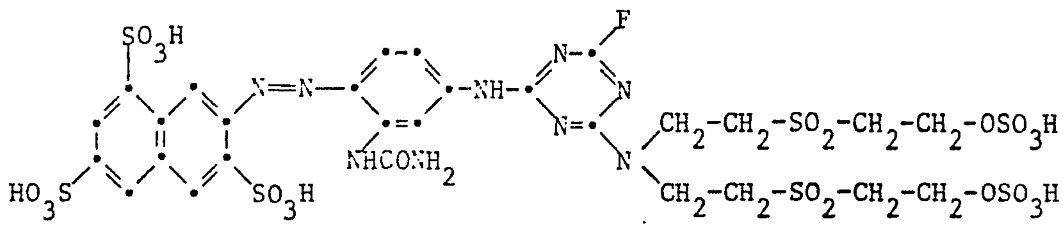

durch Einstreuen von Kaliumchlorid ausgesalzen, filtriertm gewaschen und im Vakuum getrocknet. Er färbt Baumwolle insbesondere als Kaltfärber in rotstichigen Gelbtönen.

Weitere Reaktivfarbstoffe, die Baumwolle insbesondere als Kaltfärber in den in Tabelle 8, Spalte 3, angegebenen Farbtören färben, werden erhalten, wenn man die in Spalte 2 angegebenen aminogruppenhaltigen Chromophore gemäss den Angaben in Beispiel 22 zuerst mit 2,4,6-Trifluor-1,3,5-triazin und dann mit Bis-[β-(β-sulfatoäthyl-sulfonyl)-äthyl]-amin umsetzt.

Tabelle 8

| No. | Chromophor | Farbton auf Baumwolle |
|---|---|---|
| 1 | 2-Aminonaphthalin-3,6,8-trisulfonsäure ⟶ 1-Amino-3-methylbenzol | rotstichig gelb |
| 2 | 2-Aminonaphthalin-4,6,8-trisulfonsäure ⟶ 1-Amino-3-methylbenzol | do. |
| 3 | 2-Aminonaphthalin-4,6,8-trisulfonsäure ⟶ 1-Amino-3-acetylaminobenzol | do. |
| 4 | 1-Amino-4-(2',5'-disulfophenylazo)-naphthalin-6-sulfonsäure ⟶ 1-Amino-3-methylbenzol | braun |
| 5 | 1-Amino-4-(2',5'-disulfophenylazo)-naphthalin-6-sulfonsäure ⟶ 1-Aminonaphthalin-6-sulfonsäure | do. |
| 6 | 1-Amino-4-(4'-sulfophenylazo)-benzol-2-sulfonsäure ⟶ 1-Aminonaphthalin-6-sulfonsäure | do. |
| 7 | 1-Amino-4-(4',6',8'-trisulfonaphthyl- 2'-azo)-naphthalin-6-sulfonsäure ⟶ 1-Amino-3-methylbenzol | do. |
| 8 | 1-Amino-4-(2',5'-disulfophenylazo)-naphthalin-6-sulfonsäure ⟶ 1-Amino-2,5-dimethylbenzol | do. |
| 9 | 1-Amino-3-acetylaminobenzol-6-sulfonsäure ⟶ 1-Aethyl-3-sulfomethyl-4-methyl-6-hydroxy-pyridon-(2)-5-carbonsäureamid (verseift) | gelb |

Tabelle 8 (Fortsetzung)

| No. | Chromophor | Farbton auf Baumwolle |
|---|---|---|
| 10 | 1-Amino-3-acetylaminobenzol-6-sulfonsäure → 1-Aethyl-3-aminocarbonyl-4-methyl-6-hydroxy-pyridon-(2) (verseift) | gelb |
| 11 | 1-Amino-3-acetylaminobenzol-6-sulfonsäure → 1-(2'-Methyl-4'-sulfophenyl)-3-carboxy-pyrazolon-(5) (verseift) | do. |
| 12 | 1-Amino-3-acetylaminobenzol-6-sulfonsäure → 1-(4',8'-Disulfonaphthyl-[2'])-3-methyl-pyrazolon-(5) (verseift) | do. |
| 13 | 2-Aminonaphthalin-1,5-disulfonsäure → 2-Acetyl-amino-5-hydroxynaphthalin-7-sulfonsäure (verseift) | orange |
| 14 | 2-Aminonaphthalin-3,6,8-trisulfonsäure → 2-Acetylamino-5-hydroxynaphthalin-7-sulfon-säure (verseift) | do. |
| 15 | 2-Aminonaphthalin-1,5,7-trisulfonsäure → 1-Acetylamino-5-hydroxynaphthalin-7-sulfon-säure (verseift) | do. |
| 16 | 1-Amino-4-methoxybenzol-2,5-disulfonsäure → 2-Amino-5-hydroxynaphthalin-7-sulfonsäure | scharlach |
| 17 | 1-Amino-4-methoxybenzol-2-sulfonsäure → 2-Amino-5-hydroxynaphthalin-7-sulfonsäure | do. |
| 18 | 1-Amino-4-methoxybenzol-2-sulfonsäure → 2-Methylamino-5-hydroxynaphthalin-7-sulfonsäure | do. |
| 19 | 1-Aminobenzol-2-sulfonsäure → 1-(4'-Nitro-benzoylamino)-8-hydroxynaphthalin-3,6-disulfon-säure (reduziert) | blaustichig rot |
| 20 | 1-Amino-3-acetylaminobenzol-6-sulfonsäure → 1-Benzoylamino-8-hydroxynaphthalin-3,6-disulfonsäure (verseift) | do. |
| 21 | 1-Amino-3-acetylaminobenzol-6-sulfonsäure → 1-Acetylamino-8-hydroxynaphthalin-3,6-disulfon-säure (verseift) | do. |
| 22 | 1-Amino-3-acetylaminobenzol-6-sulfonsäure → 1-Benzoylamino-8-hydroxynaphthalin-4,6-disulfonsäure (verseift) | do. |

Tabelle 8 (Fortsetzung)

| No. | Chromophor | Farbton auf Baumwolle |
|---|---|---|
| 23 | 1-Amino-3-acetylaminobenzol-6-sulfonsäure ⟶ 1-Acetylamino-8-hydroxynaphthalin-4,6-di sulfonsäure (verseift) | gelbstichig rot |
| 24 | 1-Amino-4-acetylaminobenzol-2-sulfonsäure ⟶ saure 2-Amino-8-hydroxynaphthalin-3,6-disulfonsäure (verseift) | blaustichig rot |
| 25 | 1-Amino-4-acetylaminobenzol-2-sulfonsäure ⟶ saure 2-Amino-8-hydroxynaphthalin-6-sulfonsäure (verseift) | do. |
| 26 | 2-Aminonaphthalin-1,5-disulfonsäure ⟶ 1-Amino-8-hydroxynaphthalin-3,6-disulfonsäure | do. |
| 27 | 3-Methoxy-4-amino-6-methylazobenzol-2',5'-disulfonsäure ⟶ 2-Methylamino-5-hydroxynaphthalin-7-sulfonsäure (entmethylierend gekupfert) | marineblau |
| 28 | 3-Methoxy-4-amino-6-methylazobenzol-2',4'-disulfonsäure ⟶ 2-Amino-5-hydroxynaphthalin-1,7-disulfonsäure (entmethylierend gekupfert) | do. |
| 29 | 1-Amino-3-acetylaminobenzol-6-sulfonsäure ⟶ 1-Amino-8-hydroxy-2-(4'-sulfophenylazo)-naphthalin-3,6-disulfonsäure (verseift) | blau |
| 30 | N-(2-Carboxy-4-sulfophenyl)-N'-(2'-hydroxy-3'-amino-5'-sulfophenyl)-ms-phenylformazan (Cu-Komplex ) | do. |
| 31 | N-(2-Carboxy-5-sulfophenyl)-N'-(2'-hydroxy-3'-amino-5'-sulfophenyl)-ms-phenylformazan (Cu-Komplex) | do. |

Tabelle 8 (Fortsetzung)

| No. | Chromophor | | Farbton auf Baumwolle |
|---|---|---|---|
| 32 | 0,5 Aequivalent | 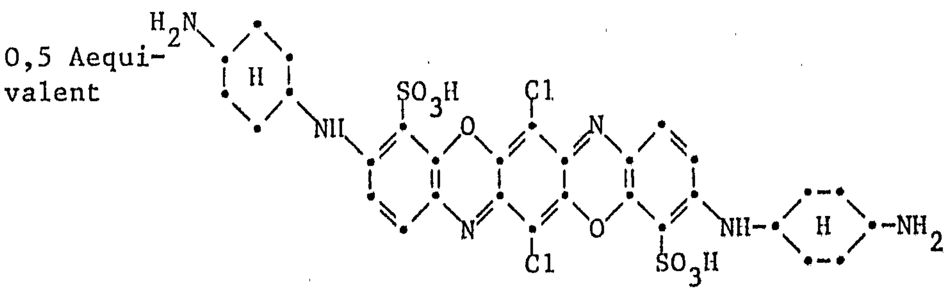 | marineblau |
| 33 | 0,5 Aequivalent | 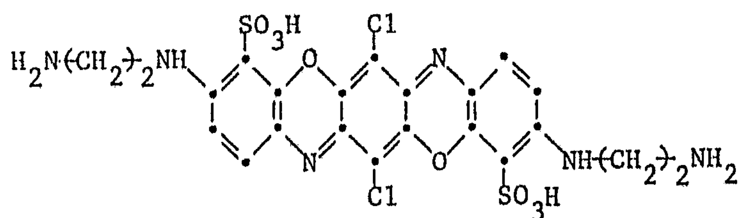 | do. |
| 34 | 0,5 Aequivalent | 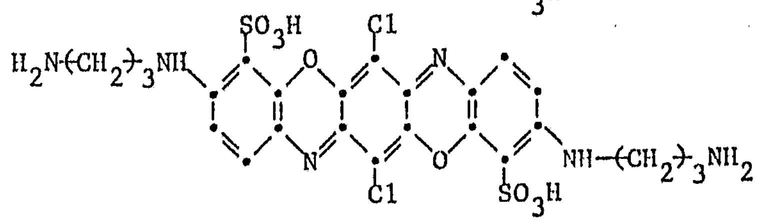 | do. |
| 35 | 0,5 Aequivalent | 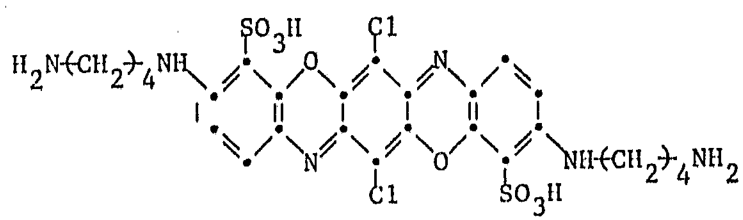 | do |

Färbevorschrift I

2 Teile des gemäss Beispiel 2 erhaltenen Farbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75% seines Gewichtes zunimmt, und dann getrocknet.

Danach imprägniert man das Gewebe mit einer 20°C warmen Lösung, die pro Liter 4 g Natriumhydroxid und 300 g Natriumchlorid enthält, quetscht auf 75% Gewichtszunahme ab, dämpft die Färbung während 30 Sekunden bei 100 bis 102°C, spült, seift während einer Viertelstunde in einer 0,3%igen kochenden Lösung eines nichtionogenen Waschmittels, spült und trocknet.

Färbevorschrift II

2 Teile des gemäss Beispiel 2 erhaltenen Farbstoffes werden in 400 Teilen Wasser gelöst, dazu gibt man 1500 Teile einer Lösung, die pro Liter 53 g Natriumchlorid enthält. In dieses Färbebad geht man bei 40°C mit 100 Teilen eines Baumwollgewebes ein. Nach 45 Minuten werden 100 Teile einer Lösung, die pro Liter 16 g Natriumhydroxid und 20 g kalziniertes Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

Färbevorschrift III

4 Teile des gemäss Beispiel 2 erhaltenen Farbstoffes werden in 50 Teilen Wasser gelöst. Dazu gibt man 50 Teile einer Lösung, die pro Liter 5 g Natriumhydroxid und 20 g kalziniertes Soda enthält. Mit der erhaltenen Lösung wird ein Baumwollgewebe foulardiert, so dass es um 70% seines Gewichts zunimmt, und dann auf eine Kaule aufgewickelt. Das Baumwollgewebe wird so während 3 Stunden bei Raumtemperatur gelagert.

..

Danach wird die gefärbte Ware gespült, während einer Viertelstunde mit einem nichtionogenen Waschmittel kochend geseift, nochmals gespült und getrocknet.

Färbevorschrift IV

2 Teile des gemäss Beispiel 2 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro Liter 16 g Natriumhydroxid und 20 g kalziniertes Soda enthält, zugegeben. Die Temperatur des Färbebades wird weitere 15 Minuten bei 35°C gehalten. Danach wird die Temperatur innerhalb 20 Minuten auf 60°C erhöht. Die Temperatur wird weitere 35 Minuten bei 60°C gehalten. Danach wird gespült, während einer Viertelstunde mit einem nichtionogenen Waschmittel kochend geseift, nochmals gespült und getrocknet.

Druckvorschrift

3 Teile des gemäss Beispiel 2 erhaltenen Farbstoffes werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

Patentansprüche

1. Reaktivfarbstoffe der Formel

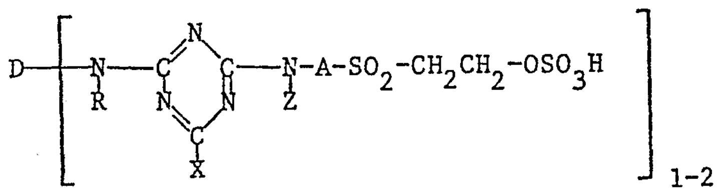

(1),

worin D der Rest eines organischen Farbstoffes der Mono- oder Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Reihe, R Wasserstoff oder gegebenenfalls substituiertes $C_{1-4}$-Alkyl, A $C_{2-6}$-Alkylen, Z Wasserstoff, gegebenenfalls substituiertes Alkyl oder Aryl oder ein Rest der Formel

$$A - SO_2 - CH_2CH_2 - OSO_3H \qquad (2),$$

und X Halogen, $SO_3H$, OH, $OR_1$, SH oder $SR_1$ ist, wobei $R_1$ ein gegebenenfalls substituierter aliphatischer Rest ist.

2. Reaktivfarbstoffe gemäss Anspruch 1, worin D, R, A und Z die in Anspruch 1 angegebenen Bedeutungen haben, und X Chlor oder Fluor ist.

3. Reaktivfarbstoffe gemäss Anspruch 1, worin D, R, A und Z die in Anspruch 1 angegebenen Bedeutungen haben, und X OH oder $C_{1-4}$-Alkoxy ist.

4. Reaktivfarbstoffe gemäss Anspruch 1, worin D, R und X die in Anspruch 1 angegebenen Bedeutungen haben, A Aethylen und Z Wasserstoff ist.

5. Reaktivfarbstoffe gemäss Anspruch 1, worin D der Rest eines Mono- oder Disazofarbstoffes ist.

6. Reaktivfarbstoffe gemäss Anspruch 1, worin D der Rest eines Metallkomplexazo- oder Formazanfarbstoffes ist.

7. Reaktivfarbstoff gemäss Anspruch 1, worin D der Rest eines Anthrachinonfarbstoffes ist.

8. Reaktivfarbstoffe gemäss Anspruch 6, worin D der Rest eines Metallkomplexazofarbstoffes der Benzol- oder Naphthalinreihe ist.

9. Reaktivfarbstoffe gemäss Anspruch 8, worin D der Rest eines 1:1-Kupferkomplexazofarbstoffes der Benzol- oder Naphthalinreihe ist, und das Kupferatom an jeweils eine metallisierbare Gruppe in ortho-Position zur Azobindung gebunden ist.

10. Reaktivfarbstoffe gemäss Anspruch 5, der Formel

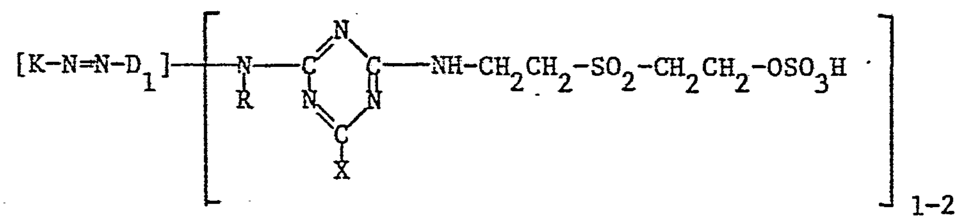 (3),

worin $D_1$ der Rest einer Diazokomponente der Benzol- oder Naphthalinreihe, K der Rest einer Kupplungskomponente der Benzol- oder Naphthalinreihe oder der heterocyclischen Reihe, R Wasserstoff oder gegebenenfalls substituiertes $C_{1-4}$-Alkyl, und X Chlor, Fluor, OH oder $C_{1-4}$-Alkoxy ist, und der Reaktivrest an die Diazokomponente oder an die Kupplungskomponente gebunden ist, oder je ein Reaktivrest sowohl an die Diazokomponente als auch an die Kupplungskomponente gebunden ist.

11. Reaktivfarbstoffe gemäss Anspruch 10, worin R Wasserstoff oder Methyl und X Chlor oder Fluor ist.

12. Verfahren zur Herstellung von Reaktivfarbstoffen gemäss Anspruch 1, dadurch gekennzeichnet, dass man einen organischen Farbstoff der Formel

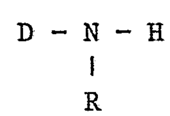 (4)

oder ein Farbstoffvorprodukt, mindestens ein Aequivalent einer Verbindung der Formel

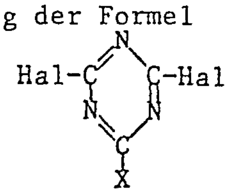
(5),

worin Hal Halogen bedeutet, und X Halogen, $SO_3H$, OH, $OR_1$, SH oder $SR_1$ ist, und mindestens ein Aequivalent eines Amins der Formel

$$\underset{\displaystyle Z'}{\underset{|}{HN}} - A - SO_2 - CH_2CH_2\ O - Y \qquad (6),$$

worin Y Wasserstoff oder $SO_3H$ ist, und Z' Wasserstoff, gegebenenfalls substituiertes Alkyl oder Aryl oder ein Rest der Formel

$$A\text{-}SO_2\text{-}CH_2CH_2\text{-}O\text{-}Y \qquad (2a),$$

ist, worin Y die oben angegebene Bedeutung hat, kondensiert, und, falls X Halogen ist, gegebenenfalls dieses nachträglich gegen $SO_3H$, OH oder SH austauscht, und, falls Y Wasserstoff ist, mit Schwefelsäure umsetzt, wobei D, R, und A in den oben genannten Formeln und Resten die in Anspruch 1 angegebenen Bedeutungen haben, und dass man im Falle der Verwendung von Farbstoffvorprodukten, diese in die gewünschten Endfarbstoffe umwandelt.

13. Verfahren gemäss Anspruch 12, dadurch gekennzeichnet, dass man einen organischen Farbstoff der Formel (4) mit 2,4,6-Trichlor-1,3,5-triazin kondensiert, das Kondensationsprodukt mit einem Amin der Formel (6), worin Y Wasserstoff ist, kondensiert, und das sekundäre Kondensationsprodukt mit Schwefelsäure umsetzt.

14. Verfahren gemäss Anspruch 12, dadurch gekennzeichnet, dass man 2,4,6-Trichlor-1,3,5-triazin mit einem Amin der Formel (6), worin Y Wasserstoff ist, kondensiert, das Kondensationsprodukt mit einem organischen Farbstoff der Formel (4) kondensiert, und das sekundäre Kondensationsprodukt mit Schwefelsäure behandelt.

15. Verfahren gemäss Anspruch 12, dadurch gekennzeichnet, dass man einen organischen Farbstoff der Formel (4) mit 2,4,6-Trifluor-1,3,5-triazin kondensiert, das Kondensationsprodukt mit einem Amin der Formel (6), worin Y Wasserstoff ist, kondensiert, und das sekundäre Kondensationsprodukt mit Schwefelsäure umsetzt.

16. Verfahren gemäss Anspruch 12, dadurch gekennzeichnet, dass man 2,4,6-Trifluor-1,3,5-triazin mit einem Amin der Formel (6), worin Y Wasserstoff ist, kondensiert, das Kondensationsprodukt mit einem organischen Farbstoff der Formel (4) kondensiert, und das sekundäre Kondensationsprodukt mit Schwefelsäure umsetzt.

17. Verfahren gemäss Anspruch 12, dadurch gekennzeichnet, dass man einen organischen Farbstoff der Formel (4) mit 2,4,6-Trifluor-1,3,5-triazin kondensiert, und das Kondensationsprodukt mit einem Amin der Formel (6), worin Y $SO_3H$ ist, kondensiert.

18. Verfahren gemäss Anspruch 12, dadurch gekennzeichnet, dass man 2,4,6-Trifluor-1,3,5-triazin mit einem Amin der Formel (6), worin Y $SO_3H$ ist, kondensiert, und das Kondensationsprodukt mit einem organischen Farbstoff der Formel (4) kondensiert.

19. Verfahren gemäss einem der Ansprüche 12 bis 16, dadurch gekennzeichnet, dass man konzentrierte Schwefelsäure verwendet und bei 0° bis mässig erhöhter Temperatur umsetzt.

20. Verfahren gemäss einem der Ansprüche 12 bis 16 und 19 dadurch gekennzeichnet, dass man als Amin der Formel (6) die Verbindung der Formel

$$H_2N - CH_2CH_2 - SO_2 - CH_2CH_2 - OH \qquad (7)$$

verwendet.

21. Verfahren gemäss einem der Ansprüche 17 und 18, dadurch gekennzeichnet, dass man als Amin der Formel (6) die Verbindung der Formel

$$H_2N - CH_2CH_2 - SO_2 - CH_2CH_2 - OSO_3H$$

verwendet.

22. Verwendung der Reaktivfarbstoffe gemäss den Ansprüchen 1 bis 11 bzw. der gemäss den Ansprüchen 12 bis 21 erhaltenen Reaktivfarbstoffe zum Färben und Bedrucken.

23. Verwendung gemäss Anspruch 22 zum Färben von Cellulosefasern.